(19) Europäisches Patentamt

European Patent Office

Office européen des brevets

(11) **EP 4 716 275 A1**

(12) **EUROPEAN PATENT APPLICATION**

published in accordance with Art. 153(4) EPC

(43) Date of publication:
25.03.2026 Bulletin 2026/13

(21) Application number: 24818675.1

(22) Date of filing: 05.06.2024

(51) International Patent Classification (IPC):
$H04W\ 16/18$ (2009.01)

(52) Cooperative Patent Classification (CPC):
H04W 16/18; H04W 16/28; H04W 24/06;
H04W 24/10

(86) International application number:
PCT/CN2024/097473

(87) International publication number:
WO 2024/251143 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.06.2023 CN 202310686958

(71) Applicant: Huawei Technologies Co., Ltd.
Shenzhen, Guangdong 518129 (CN)

(72) Inventors:
• CHEN, Hongzhi
  Shenzhen, Guangdong 518129 (CN)
• LIU, Lifu
  Shenzhen, Guangdong 518129 (CN)
• SUN, Yan
  Shenzhen, Guangdong 518129 (CN)
• XUE, Songyan
  Shenzhen, Guangdong 518129 (CN)

(74) Representative: Gill Jennings & Every LLP
The Broadgate Tower
20 Primrose Street
London EC2A 2ES (GB)

(54) **INFORMATION INTERACTION METHOD, APPARATUS, AND READABLE STORAGE MEDIUM**

(57) This application relates to the field of mobile communication, and in particular, to an information exchange method, an apparatus, and a readable storage medium, and may be applied to protocol frameworks such as NR or 6G. The method includes: determining a first receiving beam, transmitting $T_1$ reference signals by using $T_1$ transmitting beams corresponding to the first receiving beam, receiving a first CSI report, where the first CSI report includes $T_1$ beam measurement results, and transmitting first information, where the first information is used to determine a to-be-swept second receiving beam set, the second receiving beam set is a subset of receiving beams, the first information is determined based on a first prediction result, and the first prediction result is a processing result of inputting the $T_1$ beam measurement results into an AI model to perform a transmitting and receiving beam pair prediction. According to embodiments of this application, a quantity of sweeping times can be reduced, an amount of feedback or a quantity of beam measurement times can be reduced, and overheads can be reduced.

FIG. 9

## Description

This application claims priority to Chinese Patent Application No. 202310686958.X, filed with the China National Intellectual Property Administration on June 9, 2023 and entitled "INFORMATION EXCHANGE METHOD, APPARATUS, AND READABLE STORAGE MEDIUM", which is incorporated herein by reference in its entirety.

## TECHNICAL FIELD

This application relates to the field of communication technologies, and in particular, to an information exchange method, an apparatus, and a readable storage medium.

## BACKGROUND

In a fifth generation mobile communication system (5th generation mobile communication technology, 5G), a high frequency band above 6 GHz (gigahertz) is introduced for data communication. Compared with a medium and low frequency band below 6 GHz, a high frequency band spectrum has a large continuous available bandwidth and a high center frequency, so that a higher transmission rate and a larger system capacity can be obtained. However, because a penetration capability of a high-frequency signal (for example, a millimeter wave) is weak and a path fading effect is strong, a propagation distance of the high-frequency signal is limited, and coverage is small. Thanks to a large-scale antenna technology, a high-frequency communication system usually uses a large quantity of antennas for beamforming (Beamforming), so that a considerable beam gain can be obtained to compensate for the limited propagation distance caused by a high-frequency propagation characteristic. During beamforming, a base station needs to obtain accurate channel information from a terminal. However, obtaining channel information on a large-scale antenna array needs to consume huge air interface overheads, which is unacceptable in an actual communication system.

It is found through research that a high-frequency wireless channel has significant sparsity, that is, the main energy of the channel is concentrated on a limited quantity of paths. For example, when there is unobstructed line-of-sight propagation (line-of-sight propagation, LoS) between a transmitting end and a receiving end, the main energy between the transmitting end and the receiving end is concentrated on a line-of-sight path. When there is a non-line-of-sight propagation (non-line-of-sight propagation, NLOS) obstacle between the transmitting end and the receiving end, the main energy is concentrated on a path that can be reached through one reflection. Usually, each path has a different incident angle and an emergent angle. Therefore, a transmitting end and a receiving end in a high-frequency communication system can align their beam directions with an incident angle and an emergent angle of a main path of a channel, to obtain most channel transmission energy to complete communication.

Currently, a network side (for example, a base station) and a terminal side (for example, user equipment) may establish and maintain an appropriate beam pair (beam pair) through beam management. For downlink transmission, the network side (for example, the base station) needs to select an appropriate transmitting beam (transmitting beam, Tx beam), and the terminal side (for example, the user equipment) needs to select an appropriate receiving beam (receiving beam, Rx beam), to form a beam pair together to maintain a good wireless connection. Usually, a beam management procedure may be further divided into procedures such as beam training, beam maintenance, and beam failure recovery. In an existing beam training process, both the network side and the terminal side need to traverse their candidate beams, and then determine their respective optimal transmitting (receiving) beams after comparing beam measurement results of all the candidate beams based on the beam measurement results such as reference signal received power (reference signal received power, RSRP) of a current beam. Therefore, sweeping overheads of existing beam training are high.

## SUMMARY

Embodiments of this application provide an information exchange method, an apparatus, and a readable storage medium, to reduce a quantity of sweeping times, reduce an amount of feedback or a quantity of beam measurement times, and reduce overheads.

The following describes this application from different aspects. It should be understood that the following implementations and beneficial effects of different aspects may be mutually referenced.

According to a first aspect, this application provides an information exchange method. The method is applied to a first communication apparatus. The method includes: transmitting or outputting $T_1$ reference signals, where the $T_1$ reference signals correspond to $T_1$ transmitting beams of the first communication apparatus, one reference signal corresponds to one transmitting beam, these reference signals are used for beam measurement, the $T_1$ transmitting beams correspond to one or more first receiving beams of a second communication apparatus, and the one or more first receiving beams are a subset of receiving beams of the second communication apparatus; receiving or inputting a first channel state information (channel state information, CSI) report, where the first CSI report includes $T_1$ beam measure-

ment results; and transmitting or outputting first information, where the first information is used to determine a to-be-swept second receiving beam set, and the second receiving beam set is a subset of the receiving beams of the second communication apparatus.

For example, a first communication apparatus (for example, a base station or a part of the base station) may determine one or more first receiving beams, where the one or more first receiving beams are a subset of receiving beams of a second communication apparatus. The first communication apparatus transmits $T_1$ reference signals by using $T_1$ transmitting beams corresponding to the one or more first receiving beams. The first communication apparatus receives a first CSI report, where the first CSI report includes $T_1$ beam measurement results. The first communication apparatus transmits first information, where the first information is used to determine a to-be-swept second receiving beam set, and the second receiving beam set is a subset of the receiving beams of the second communication apparatus. The first information is determined based on a first prediction result, where the first prediction result is a processing result of inputting the $T_1$ beam measurement results into a first artificial intelligence (artificial intelligence, AI) model to perform a transmitting and receiving beam pair prediction.

One reference signal corresponds to one transmitting beam of the first communication apparatus. The $T_1$ beam measurement results correspond to the one or more first receiving beams. The $T_1$ beam measurement results are determined based on the $T_1$ reference signals.

In this application, the first communication apparatus is used as a transmitting end, and has a plurality of transmitting beams. The second communication apparatus is used as a receiving end, and has a plurality of receiving beams. The one or more first receiving beams belong to the second communication apparatus (for example, UE).

In this application, the beam (beam) may alternatively be a spatial filter. In this application, the "transmitting beam" may be replaced with a "spatial filter used for transmitting", and the "receiving beam" may be replaced with a "spatial filter used for receiving".

In this application, the reference signal may be a synchronization signal block (synchronization signal block, SSB), or a channel state information-reference signal (channel state information-reference signal, CSI-RS). For example, the beam measurement result may be RSRP.

It may be understood that a result output by the first AI model may be a probability that each transmitting and receiving beam pair between the first communication apparatus and the second communication apparatus is an optimal transmitting and receiving beam pair, or predicted beam quality (for example, an RSRP value) of each transmitting and receiving beam pair between the first communication apparatus and the second communication apparatus. It may be understood that a larger RSRP value of a transmitting and receiving beam pair indicates a higher probability that the transmitting and receiving beam pair is an optimal transmitting and receiving beam pair. On the contrary, a smaller RSRP value of a transmitting and receiving beam pair indicates a lower probability that the transmitting and receiving beam pair is an optimal transmitting and receiving beam pair.

In this application, some receiving beams are swept, a probability that all transmitting and receiving beam pairs are optimal transmitting and receiving beam pairs is predicted based on RSRP of the receiving beams, information about the receiving beams is extracted, and the second communication apparatus is notified of the information, so as to subsequently sweep top-K beam pairs, to obtain an optimal transmitting and receiving beam pair. There is no need to poll all receiving beams, thereby reducing a quantity of beam sweeping times, reducing an amount of feedback or a quantity of beam measurement times, and reducing overheads.

In this application, similar expressions such as "a transmitting and receiving beam pair", "a beam pair (beam pair)", and "a transmitting and receiving beam combination" represent a combination of a transmitting beam and a receiving beam, and may be used interchangeably.

With reference to the first aspect, in a possible implementation, receiving beams in the second receiving beam set correspond to $T_2$ transmitting beams. After the first communication apparatus transmits the first information, the method further includes: The first communication apparatus transmits or outputs $T_2$ reference signals, where the $T_2$ reference signals correspond to the $T_2$ transmitting beams; the first communication apparatus receives or inputs a second CSI report, where the second CSI report includes $T_2$ beam measurement results; and the first communication apparatus transmits or outputs second information, where the second information is used to determine a to-be-swept third receiving beam set, and the third receiving beam set includes at least one receiving beam of the second communication apparatus. The second information is determined based on a second prediction result, where the second prediction result is a processing result of inputting the $T_2$ beam measurement results and the $T_1$ beam measurement results into the first AI model to perform a transmitting and receiving beam pair prediction. The $T_2$ beam measurement results correspond to the receiving beams in the second receiving beam set. The $T_2$ beam measurement results are determined based on the $T_2$ reference signals.

For example, that the first communication apparatus transmits the $T_2$ reference signals may include: The first communication apparatus transmits the $T_2$ reference signals by using the $T_2$ transmitting beams, where one reference signal corresponds to one transmitting beam.

In this application, after a transmitting and receiving beam pair prediction, some receiving beams are swept based on a result of this prediction, and a probability that all beam pairs are optimal transmitting and receiving beam pairs is predicted based on both RSRP obtained from second sweeping and RSRP obtained from previous sweeping. Accuracy can be improved through two predictions.

With reference to the first aspect, in a possible implementation, before the first communication apparatus transmits or outputs the $T_2$ reference signals, the method further includes: The first communication apparatus receives or inputs third information. The third information may indicate whether the second communication apparatus agrees to sweep the receiving beam in the second receiving beam set. In this application, the third information is set to a target value, which indicates that the second communication apparatus agrees to sweep the receiving beam in the second receiving beam set.

It may be understood that, if the third information indicates that the second communication apparatus does not agree to sweep the receiving beam in the second receiving beam set, the first communication apparatus and the second communication apparatus may fall back to the conventional technology, for example, an AI-based beam pair prediction. That is, RSRP of beam pairs corresponding to all elements "1" in a tx-rx bitmap is collected and then input into an AI model to perform a prediction. For specific implementation, refer to the following descriptions. Details are not described herein.

In this application, the third information indicates whether the second communication apparatus agrees to sweep the receiving beam in the second receiving beam set. If the second communication apparatus does not agree to sweep the receiving beam in the second receiving beam set, a fallback to the conventional technology may be enabled. Therefore, a procedure design is more flexible.

With reference to the first aspect, in a possible implementation, before the first communication apparatus transmits the $T_1$ reference signals, the method further includes: The first communication apparatus determines one or more first receiving beams; and the first communication apparatus determines, based on a predefined correspondence between a transmitting beam and a receiving beam and the one or more first receiving beams, $T_1$ transmitting beams corresponding to the one or more first receiving beams.

In this application, a correspondence between a transmitting beam and a receiving beam may be represented by using a transmit (transmission, Tx)-receive (receiver, Rx) bitmap, namely a tx-rx bitmap, a transmitting and receiving beam matrix (a row of the matrix corresponds to a receiving beam, and a column of the matrix corresponds to a transmitting beam), a table, or the like. In the tx-rx bitmap or the transmitting and receiving beam matrix, one row corresponds to one receiving beam, and one column corresponds to one transmitting beam. In the tx-rx bitmap or the transmitting and receiving beam matrix, an element "1" indicates that a corresponding transmitting and receiving beam pair needs to be swept and RSRP needs to be fed back, and an element "0" indicates that a corresponding transmitting and receiving beam pair does not need to be swept.

With reference to the first aspect, in a possible implementation, before the first communication apparatus determines one or more first receiving beams, the method further includes: The first communication apparatus receives information a, where the information a is used to determine a quantity of receiving beams of the second communication apparatus. For example, the information a may include a quantity of receiving beams of the second communication apparatus.

Optionally, after obtaining the quantity of receiving beams of the second communication apparatus, the first communication apparatus may determine a correspondence between a transmitting beam and a receiving beam. In this application, a plurality of correspondences between a transmitting beam and a receiving beam may be predefined. An example in which the correspondence between a transmitting beam and a receiving beam is represented by using a tx-rx bitmap is used. In embodiments of this application, a plurality of tx-rx bitmaps (the plurality of tx-rx bitmaps may be obtained through AI training) are defined, and quantities of receiving beams (namely quantities of rows) in the plurality of tx-rx bitmaps are different. Therefore, the correspondence between a transmitting beam and a receiving beam may be determined based on the quantity of receiving beams, that is, one tx-rx bitmap is determined.

With reference to the first aspect, in a possible implementation, after the first communication apparatus determines the first receiving beam, the method further includes: The first communication apparatus transmits information c, where the information c indicates the one or more first receiving beams.

With reference to the first aspect, in a possible implementation, after the first communication apparatus transmits the second information, specifically, after a radio resource control (radio resource control, RRC) connection is established between the first communication apparatus and the second communication apparatus, the method further includes: The first communication apparatus receives or inputs $(n*T_j)$ beam measurement results in n historical time windows, where $T_j$ beam measurement results in one historical time window correspond to $T_j$ transmitting beams of the first communication apparatus and an optimal receiving beam of the second communication apparatus; the first communication apparatus obtains K candidate beam pairs in one future time window, where the K candidate beam pairs are determined based on a processing result of inputting the $(n*T_j)$ beam measurement results in the n historical time windows into a second AI model to perform a transmitting and receiving beam pair prediction; and the first communication apparatus transmits or outputs beam switching information if at least one receiving beam in the K candidate beam pairs is different from the optimal receiving beam, where the beam switching information is used to prompt the second communication apparatus to switch a receiving beam in one future time window. n, $T_j$, and K are all positive integers.

Optionally, a result output by the second AI model may be a probability that each transmitting and receiving beam pair between the first communication apparatus and the second communication apparatus is an optimal transmitting and receiving beam pair in a future time window, or predicted beam quality (for example, an RSRP value) of each transmitting and receiving beam pair between the first communication apparatus and the second communication apparatus. In this case, prediction results for future m time windows may be obtained by inputting the $(n*T_j)$ beam measurement results in the n historical time windows into the second artificial intelligence model to perform a transmitting and receiving beam pair prediction, where m is a positive integer. The K candidate beam pairs may be top-K (top-K) beam pairs that are sorted in descending order of probabilities in a prediction result for a future time window.

Optionally, the beam switching information further includes a candidate receiving beam set for switching, where the candidate receiving beam set includes one or more receiving beams that are in the K candidate beam pairs and that are different from the optimal receiving beam.

It may be understood that an RRC connection has been established between the first communication apparatus and the second communication apparatus, and beam alignment with large overheads does not need to be performed. When the second communication apparatus is about to enter a blocked environment, an impending blockage cannot be well predicted by using only a measurement result of a current communication beam (namely a current optimal transmitting and receiving beam pair). Therefore, according to embodiments of this application, when only RSRP corresponding to a specific receiving beam is input, the first communication apparatus may perform a global beam pair prediction, and prompt, by using a prediction result of a receiving beam, the second communication apparatus whether to switch a receiving beam in a future time window. In this way, beam switching can be performed before a blockage occurs, thereby reducing a beam failure probability and a subsequent communication delay.

According to a second aspect, this application provides a communication apparatus. The communication apparatus may be a first communication apparatus, or a chip or a circuit disposed in the first communication apparatus or used in the first communication apparatus. The communication apparatus is configured to perform the steps or functions performed by the first communication apparatus. The communication apparatus includes a processing unit and a transceiving unit (transmitting and/or receiving unit). The transceiving unit is configured to transmit $T_1$ reference signals, where the $T_1$ reference signals correspond to $T_1$ transmitting beams of the first communication apparatus, one reference signal corresponds to one transmitting beam, the reference signal is used for beam measurement, the $T_1$ transmitting beams correspond to one or more first receiving beams of a second communication apparatus, and the one or more first receiving beams are a subset of receiving beams of the second communication apparatus. The transceiving unit is further configured to receive a first CSI report, where the first CSI report includes $T_1$ beam measurement results, the $T_1$ beam measurement results correspond to the one or more first receiving beams, and the $T_1$ beam measurement results are determined based on the $T_1$ reference signals. The transceiving unit is further configured to transmit first information, where the first information is used to determine a to-be-swept second receiving beam set, the second receiving beam set is a subset of the receiving beams of the second communication apparatus, the first information is determined based on a first prediction result, and the first prediction result is a processing result of inputting the $T_1$ beam measurement results into a first artificial intelligence model to perform a transmitting and receiving beam pair prediction.

Optionally, the processing unit is configured to control the transceiving unit to transmit the reference signal, receive the first CSI report, and transmit the first information. The processing unit is further configured to generate the reference signal and the first information.

For example, the processing unit is configured to determine one or more first receiving beams, where the one or more first receiving beams are a subset of receiving beams of the second communication apparatus; and the transceiving unit is configured to transmit $T_1$ reference signals by using $T_1$ transmitting beams corresponding to the one or more first receiving beams, where one reference signal corresponds to one transmitting beam. The transceiving unit is further configured to receive a first CSI report, where the first CSI report includes $T_1$ beam measurement results. The transceiving unit is further configured to transmit first information, where the first information is used to determine a to-be-swept second receiving beam set, and the second receiving beam set is a subset of the receiving beams of the second communication apparatus. The first information is determined based on a first prediction result, where the first prediction result is a processing result of inputting the $T_1$ beam measurement results into the first AI model to perform a transmitting and receiving beam pair prediction. The $T_1$ beam measurement results correspond to the one or more first receiving beams. The $T_1$ beam measurement results are determined based on the $T_1$ reference signals. The one or more first receiving beams belong to the second communication apparatus.

With reference to the second aspect, in a possible implementation, receiving beams in the second receiving beam set correspond to $T_2$ transmitting beams. The transceiving unit is further configured to transmit $T_2$ reference signals, where the $T_2$ reference signals correspond to the $T_2$ transmitting beams. The transceiving unit is further configured to receive a second CSI report, where the second CSI report includes $T_2$ beam measurement results. The transceiving unit is further configured to transmit second information, where the second information is used to determine a to-be-swept third receiving beam set, and the third receiving beam set includes at least one receiving beam of the second communication apparatus. The second information is determined based on a second prediction result, where the second prediction result is a processing result of inputting the $T_2$ beam measurement results and the $T_1$ beam measurement results into the first AI model to perform a transmitting and receiving beam pair prediction. The $T_2$ beam measurement results correspond to the receiving beams in the second receiving beam set. The $T_2$ beam measurement results are determined based on the $T_2$ reference signals.

For example, the transceiving unit is further specifically configured to transmit the $T_2$ reference signals by using the $T_2$ transmitting beams, where one reference signal corresponds to one transmitting beam.

With reference to the second aspect, in a possible implementation, the transceiving unit is further configured to receive third information. The third information may indicate whether the second communication apparatus agrees to sweep the receiving beam in the second receiving beam set. In this application, the third information is set to a target value, which indicates that the second communication apparatus agrees to sweep the receiving beam in the second receiving beam set.

With reference to the second aspect, in a possible implementation, the processing unit is further configured to: determine one or more first receiving beams; and determine, based on a predefined correspondence between a transmitting beam and a receiving beam and the one or more first receiving beams, $T_1$ transmitting beams corresponding to the one or more first receiving beams.

With reference to the second aspect, in a possible implementation, the transceiving unit is further configured to receive information a, where the information a is used to determine a quantity of receiving beams of the second communication apparatus. For example, the information a may include a quantity of receiving beams of the second communication apparatus.

Optionally, the processing unit is further configured to determine a correspondence between a transmitting beam and a receiving beam based on the quantity of receiving beams. In this application, a plurality of correspondences between a transmitting beam and a receiving beam may be predefined. An example in which the correspondence between a transmitting beam and a receiving beam is represented by using a tx-rx bitmap is used. In embodiments of this application, a plurality of tx-rx bitmaps (the plurality of tx-rx bitmaps may be obtained through AI training) are defined, and quantities of receiving beams (namely quantities of rows) in the plurality of tx-rx bitmaps are different. Therefore, the correspondence between a transmitting beam and a receiving beam may be determined based on the quantity of receiving beams, that is, one tx-rx bitmap is determined.

With reference to the second aspect, in a possible implementation, the transceiving unit is further configured to transmit information c, where the information c indicates the one or more first receiving beams.

With reference to the second aspect, in a possible implementation, the transceiving unit is further configured to receive $(n*T_j)$ beam measurement results in n historical time windows, where $T_j$ beam measurement results in one historical time window correspond to $T_j$ transmitting beams of the first communication apparatus and an optimal receiving beam of the second communication apparatus. The processing unit is further configured to obtain K candidate beam pairs in one future time window, where the K candidate beam pairs are determined based on a processing result of inputting the $(n*T_j)$ beam measurement results in the n historical time windows into a second AI model to perform a transmitting and receiving beam pair prediction. The transceiving unit is further configured to transmit beam switching information when at least one receiving beam in the K candidate beam pairs is different from the optimal receiving beam, where the beam switching information is used to prompt the second communication apparatus to switch a receiving beam in one future time window. n, $T_j$, and K are all positive integers.

Optionally, prediction results for future m time windows may be obtained by inputting the $(n*T_j)$ beam measurement results in the n historical time windows into the second artificial intelligence model to perform a transmitting and receiving beam pair prediction, where m is a positive integer. The K candidate beam pairs may be top-K (top-K) beam pairs that are sorted in descending order of probabilities in a prediction result for a future time window.

Optionally, the beam switching information further includes a candidate receiving beam set for switching, where the candidate receiving beam set includes one or more receiving beams that are in the K candidate beam pairs and that are different from the optimal receiving beam.

With reference to the first aspect or the second aspect, in a possible implementation, the second receiving beam set includes at least one of the receiving beams of the second communication apparatus other than the one or more first receiving beams. In this way, a quantity of sweeping times can be further reduced, an amount of feedback or a quantity of beam measurement times can be reduced, and overheads can be reduced.

With reference to the first aspect or the second aspect, in a possible implementation, the second prediction result includes a probability that each transmitting and receiving beam pair between the first communication apparatus and the second communication apparatus is an optimal transmitting and receiving beam pair. The third receiving beam set includes at least one receiving beam in a first transmitting and receiving beam pair set, where the first transmitting and receiving beam pair set includes transmitting and receiving beam pairs corresponding to top-K probabilities that are sorted in descending order of probabilities in the second prediction result, and K is a positive integer.

With reference to the first aspect or the second aspect, in a possible implementation, the second information includes one or more of the following: the second prediction result or the third receiving beam set.

With reference to the first aspect or the second aspect, in a possible implementation, the first receiving beam is a $q^{th}$ receiving beam in a receiving beam sweeping sequence, where q is a positive integer, and q has (one or more) predefined/preconfigured values. When q has different values, a plurality of first receiving beams may be obtained.

Optionally, the receiving beam sweeping sequence is configured by the first communication apparatus, and is delivered to the second communication apparatus. Or, the receiving beam sweeping sequence is reported by the second communication apparatus.

With reference to the first aspect or the second aspect, in a possible implementation, the first prediction result includes a probability that each transmitting and receiving beam pair between the first communication apparatus and the second communication apparatus is an optimal transmitting and receiving beam pair. The second receiving beam set includes at least one receiving beam in a second transmitting and receiving beam pair set, where the second transmitting and receiving beam pair set includes transmitting and receiving beam pairs corresponding to top-K probabilities that are sorted in descending order of probabilities in the first prediction result.

With reference to the first aspect or the second aspect, in a possible implementation, the first information includes one or more of the following: the second receiving beam set or the first prediction result. Alternatively, the first information indicates whether sweeping is recommended for each receiving beam of the second communication apparatus. In this case, the second receiving beam set includes a receiving beam for which sweeping is recommended and that is indicated by the first information.

With reference to the first aspect or the second aspect, in a possible implementation, the first information further includes an identifier of the first CSI report. An optimal beam ID at a feedback moment may not correspond to that at an implementation moment due to a factor such as UE flipping or a blockage. Therefore, in this application, the identifier of the first CSI report is carried in the first information, so that the second communication apparatus performs beam modulation with reference to the identifier of the first CSI report and a current flipping status.

With reference to the first aspect or the second aspect, in a possible implementation, the first CSI report further includes information indicating the first receiving beam. For example, the first CSI report may include a resource indicator (resource indicator), a receiving beam indicator (Rx beam indicator, RBI), and a beam measurement result (for example, an RSRP value). The resource indicator may be a resource index (resource index), and indicates a reference signal resource corresponding to the beam measurement result (for example, the RSRP value). The receiving beam indicator (RBI) may be an identifier of a receiving beam, and indicates a first receiving beam corresponding to the beam measurement result (for example, the RSRP value).

In this application, information indicating a receiving beam is carried in a CSI report, so as to prevent an inaccurate prediction that is caused by misalignment of the receiving beam between a transmitting end and a receiving end.

With reference to the first aspect or the second aspect, in a possible implementation, the second CSI report further includes information indicating the receiving beam in the second receiving beam set.

According to a third aspect, this application provides an information exchange method. The method is applied to a second communication apparatus. The method includes: receiving or inputting $T_1$ reference signals, and separately performing beam measurement on the $T_1$ reference signals, to obtain $T_1$ beam measurement results, where the $T_1$ reference signals correspond to one or more first receiving beams, and the one or more first receiving beams are a subset of receiving beams of the second communication apparatus; transmitting or outputting a first CSI report, where the first CSI report includes the $T_1$ beam measurement results, and the $T_1$ beam measurement results correspond to the one or more first receiving beams; and receiving or inputting first information, where the first information is used to determine a to-be-swept second receiving beam set, and the second receiving beam set is a subset of the receiving beams of the second communication apparatus.

For example, the second communication apparatus (for example, UE) may determine one or more first receiving beams, receive $T_1$ reference signals by using the one or more first receiving beams, and separately perform beam measurement on the $T_1$ reference signals, to obtain $T_1$ beam measurement results, where the one or more first receiving beams are a subset of receiving beams of the second communication apparatus. The second communication apparatus transmits a first CSI report, where the first CSI report includes the $T_1$ beam measurement results. The second communication apparatus receives first information, where the first information is used to determine a to-be-swept second receiving beam set, and the second receiving beam set is a subset of the receiving beams of the second communication apparatus.

The $T_1$ beam measurement results correspond to the one or more first receiving beams.

In this application, the second communication apparatus is used as a receiving end, and has a plurality of receiving beams. The one or more first receiving beams belong to the second communication apparatus (for example, UE).

With reference to the third aspect, in a possible implementation, after the second communication apparatus receives the first information, the method further includes: The second communication apparatus receives or inputs $T_2$

reference signals, where the $T_2$ reference signals correspond to receiving beams in the second receiving beam set, and separately performs beam measurement on the $T_2$ reference signals, to obtain $T_2$ beam measurement results; the second communication apparatus transmits or outputs a second CSI report, where the second CSI report includes $T_2$ beam measurement results, and the $T_2$ beam measurement results correspond to the receiving beams in the second receiving beam set; and the second communication apparatus receives or inputs second information, where the second information is used to determine a to-be-swept third receiving beam set, where the third receiving beam set includes at least one receiving beam of the second communication apparatus.

For example, that the second communication apparatus receives the $T_2$ reference signals may include: The second communication apparatus receives the $T_2$ reference signals by using the receiving beams in the second receiving beam set.

With reference to the third aspect, in a possible implementation, before the second communication apparatus receives the $T_2$ reference signals, the method further includes: The second communication apparatus transmits or outputs third information. The third information may indicate whether the second communication apparatus agrees to sweep the receiving beam in the second receiving beam set. In this application, the third information is set to a target value, which indicates that the second communication apparatus agrees to sweep the receiving beam in the second receiving beam set.

It may be understood that, if the third information indicates that the second communication apparatus does not agree to sweep the receiving beam in the second receiving beam set, a first communication apparatus and the second communication apparatus may fall back to the conventional technology, for example, an AI-based beam pair prediction. That is, RSRP of beam pairs corresponding to all elements "1" in a tx-rx bitmap is collected and then input into an AI model to perform a prediction. For specific implementation, refer to the following descriptions. Details are not described herein.

With reference to the third aspect, in a possible implementation, before the second communication apparatus receives the $T_2$ reference signals, the method further includes: The second communication apparatus transmits information a, where the information a is used to determine a quantity of receiving beams of the second communication apparatus. For example, the information a may include a quantity of receiving beams of the second communication apparatus.

With reference to the third aspect, in a possible implementation, that the second communication apparatus determines the one or more first receiving beams includes: The second communication apparatus receives information c, where the information c indicates the one or more first receiving beams.

With reference to the third aspect, in a possible implementation, after the second communication apparatus receives the second information, specifically, after an RRC connection is established, the method further includes: The second communication apparatus transmits or outputs ($n*T_j$) beam measurement results in n historical time windows, where $T_j$ beam measurement results in one historical time window correspond to $T_j$ transmitting beams of the first communication apparatus and an optimal receiving beam of the second communication apparatus; and the second communication apparatus receives or inputs beam switching information, where the beam switching information is used to prompt the second communication apparatus to switch a receiving beam in one future time window. Both n and $T_j$ are positive integers.

Optionally, the beam switching information further includes a candidate receiving beam set for switching, where the candidate receiving beam set includes one or more receiving beams that are in K candidate beam pairs and that are different from the optimal receiving beam.

According to a fourth aspect, this application provides a communication apparatus. The communication apparatus may be a second communication apparatus, or a chip or a circuit disposed in the second communication apparatus or used in the second communication apparatus. The communication apparatus is configured to perform the steps or functions performed by the second communication apparatus. The communication apparatus includes a processing unit and a transceiving unit. The transceiving unit is configured to receive or input $T_1$ reference signals, where the $T_1$ reference signals correspond to one or more first receiving beams, and the one or more first receiving beams are a subset of receiving beams of the second communication apparatus. The processing unit is configured to separately perform beam measurement on the $T_1$ reference signals, to obtain $T_1$ beam measurement results. The transceiving unit is further configured to transmit a first CSI report, where the first CSI report includes the $T_1$ beam measurement results, and the $T_1$ beam measurement results correspond to the one or more first receiving beams. The transceiving unit is further configured to receive first information, where the first information is used to determine a to-be-swept second receiving beam set, and the second receiving beam set is a subset of the receiving beams of the second communication apparatus.

For example, the processing unit is configured to determine one or more first receiving beams; and the transceiving unit is configured to receive $T_1$ reference signals by using the one or more first receiving beams, where the one or more first receiving beams are a subset of receiving beams of the second communication apparatus. The processing unit is further configured to separately perform beam measurement on the $T_1$ reference signals, to obtain $T_1$ beam measurement results. The transceiving unit is further configured to transmit a first CSI report, where the first CSI report includes the $T_1$ beam measurement results. The transceiving unit is further configured to receive first information, where the first information is used to determine a to-be-swept second receiving beam set, and the second receiving beam set is a subset of the receiving beams of the second communication apparatus. The $T_1$ beam measurement results correspond to the one or more first receiving beams. The second communication apparatus has at least two receiving beams.

With reference to the fourth aspect, in a possible implementation, the transceiving unit is further configured to receive $T_2$ reference signals, where the $T_2$ reference signals correspond to receiving beams in the second receiving beam set. The processing unit is further configured to separately perform beam measurement on the $T_2$ reference signals, to obtain $T_2$ beam measurement results. The transceiving unit is further configured to transmit a second CSI report, where the second CSI report includes $T_2$ beam measurement results, and the $T_2$ beam measurement results correspond to the receiving beams in the second receiving beam set. The transceiving unit is further configured to receive second information, where the second information is used to determine a to-be-swept third receiving beam set, and the third receiving beam set includes at least one receiving beam of the second communication apparatus.

With reference to the fourth aspect, in a possible implementation, the transceiving unit is further configured to transmit third information. The third information may indicate whether the second communication apparatus agrees to sweep the receiving beam in the second receiving beam set. In this application, the third information is set to a target value, which indicates that the second communication apparatus agrees to sweep the receiving beam in the second receiving beam set.

With reference to the fourth aspect, in a possible implementation, the transceiving unit is further configured to transmit information a, where the information a is used to determine a quantity of receiving beams of the second communication apparatus. For example, the information a may include a quantity of receiving beams of the second communication apparatus.

With reference to the fourth aspect, in a possible implementation, the processing unit is specifically configured to control the transceiving unit to receive information c, where the information c indicates the one or more first receiving beams.

With reference to the fourth aspect, in a possible implementation, the transceiving unit is further configured to transmit $(n*T_j)$ beam measurement results in n historical time windows, where $T_j$ beam measurement results in one historical time window correspond to $T_j$ transmitting beams of a first communication apparatus and an optimal receiving beam of the second communication apparatus. The transceiving unit is further configured to receive beam switching information, where the beam switching information is used to prompt the second communication apparatus to switch a receiving beam in one future time window. Both n and $T_j$ are positive integers.

Optionally, the beam switching information further includes a candidate receiving beam set for switching, where the candidate receiving beam set includes one or more receiving beams that are in K candidate beam pairs and that are different from the optimal receiving beam.

With reference to the third aspect or the fourth aspect, in a possible implementation, the second receiving beam set includes at least one of the receiving beams of the second communication apparatus other than the one or more first receiving beams.

With reference to the third aspect or the fourth aspect, in a possible implementation, the second information includes one or more of the following: a second prediction result or the third receiving beam set. The second prediction result includes a probability that each transmitting and receiving beam pair between the first communication apparatus and the second communication apparatus is an optimal transmitting and receiving beam pair. The third receiving beam set includes at least one receiving beam in a first transmitting and receiving beam pair set, where the first transmitting and receiving beam pair set includes transmitting and receiving beam pairs corresponding to top-K probabilities that are sorted in descending order of probabilities in the second prediction result, and K is a positive integer.

With reference to the third aspect or the fourth aspect, in a possible implementation, the first receiving beam is a $q^{th}$ receiving beam in a receiving beam sweeping sequence, where q is a positive integer, and q has (one or more) predefined/preconfigured values. When q has different values, a plurality of first receiving beams may be obtained.

Optionally, the receiving beam sweeping sequence is configured by the first communication apparatus, and is delivered to the second communication apparatus. Or, the receiving beam sweeping sequence is reported by the second communication apparatus.

With reference to the third aspect or the fourth aspect, in a possible implementation, the first information includes one or more of the following: the second receiving beam set or a first prediction result. Alternatively, the first information indicates whether sweeping is recommended for each receiving beam of the second communication apparatus. The first prediction result includes a probability that each transmitting and receiving beam pair between the first communication apparatus and the second communication apparatus is an optimal transmitting and receiving beam pair. The second receiving beam set includes at least one receiving beam in a second transmitting and receiving beam pair set, where the second transmitting and receiving beam pair set includes transmitting and receiving beam pairs corresponding to top-K probabilities that are sorted in descending order of probabilities in the first prediction result.

With reference to the third aspect or the fourth aspect, in a possible implementation, the first information further includes an identifier of the first CSI report.

With reference to the third aspect or the fourth aspect, in a possible implementation, the first CSI report further includes information indicating the first receiving beam. For example, the first CSI report may include a resource indicator, a receiving beam indicator (RBI), and a beam measurement result (for example, an RSRP value). The resource indicator may be a resource index, and indicates a reference signal resource corresponding to the beam measurement result (for example, the RSRP value). The receiving beam indicator (RBI) may be an identifier of a receiving beam, and indicates a first receiving beam corresponding to the beam measurement result (for example, the RSRP value).

With reference to the third aspect or the fourth aspect, in a possible implementation, the second CSI report further includes information indicating the receiving beam in the second receiving beam set.

According to a fifth aspect, this application provides an information exchange method. The method may be applied to a beam tracking phase, namely implementation after an RRC connection is established. The method includes: A first communication apparatus (for example, a base station or a part of the base station) receives $(n*T_j)$ beam measurement results in n historical time windows, where $T_j$ beam measurement results in one historical time window correspond to $T_j$ transmitting beams of the first communication apparatus and an optimal receiving beam of a second communication apparatus; the first communication apparatus obtains K candidate beam pairs in one future time window, where the K candidate beam pairs are determined based on a processing result of inputting the $(n*T_j)$ beam measurement results in the n historical time windows into an AI model to perform a transmitting and receiving beam pair prediction; and the first communication apparatus transmits beam switching information if at least one receiving beam in the K candidate beam pairs is different from the optimal receiving beam, where the beam switching information is used to prompt the second communication apparatus to switch a receiving beam in one future time window. n, $T_j$, and K are all positive integers.

It may be understood that a result output by a second AI model may be a probability that each transmitting and receiving beam pair between the first communication apparatus and the second communication apparatus is an optimal transmitting and receiving beam pair in a future time window, or predicted beam quality (for example, an RSRP value) of each transmitting and receiving beam pair between the first communication apparatus and the second communication apparatus. In this case, prediction results for future m time windows may be obtained by inputting the $(n*T_j)$ beam measurement results in the n historical time windows into the AI model to perform a transmitting and receiving beam pair prediction, where m is a positive integer. The K candidate beam pairs may be top-K (top-K) beam pairs that are sorted in descending order of probabilities in a prediction result for a future time window.

It may be understood that an RRC connection has been established between the first communication apparatus and the second communication apparatus, and beam alignment with large overheads does not need to be performed. When the second communication apparatus is about to enter a blocked environment, an impending blockage cannot be well predicted by using only a measurement result of a current communication beam (namely a current optimal transmitting and receiving beam pair). Therefore, according to embodiments of this application, when only RSRP corresponding to a specific receiving beam is input, the first communication apparatus may perform a global beam pair prediction, and prompt, by using a prediction result of a receiving beam, the second communication apparatus whether to switch a receiving beam in a future time window. In this way, beam switching can be performed before a blockage occurs, thereby reducing a beam failure probability and a subsequent communication delay.

With reference to the fifth aspect, in a possible implementation, the beam switching information further includes a candidate receiving beam set for switching, where the candidate receiving beam set includes one or more receiving beams that are in K candidate beam pairs and that are different from the optimal receiving beam.

In this application, a candidate receiving beam is carried in the beam switching information, so that the second communication apparatus quickly completes beam switching.

According to a sixth aspect, this application provides a communication apparatus. The communication apparatus may be a first communication apparatus, or a chip or a circuit disposed in the first communication apparatus or used in the first communication apparatus. The communication apparatus is configured to perform the steps or functions performed by the first communication apparatus. The communication apparatus includes a processing unit and a transceiving unit. The transceiving unit is configured to receive $(n*T_j)$ beam measurement results in n historical time windows, where $T_j$ beam measurement results in one historical time window correspond to $T_j$ transmitting beams of the first communication apparatus and an optimal receiving beam of a second communication apparatus. The processing unit is configured to obtain K candidate beam pairs in one future time window, where the K candidate beam pairs are determined based on a processing result of inputting the $(n*T_j)$ beam measurement results in the n historical time windows into an AI model to perform a transmitting and receiving beam pair prediction. The transceiving unit is configured to transmit beam switching information when at least one receiving beam in the K candidate beam pairs is different from the optimal receiving beam, where the beam switching information is used to prompt the second communication apparatus to switch a receiving beam in one future time window. n, $T_j$, and K are all positive integers.

With reference to the sixth aspect, in a possible implementation, the beam switching information further includes a candidate receiving beam set for switching, where the candidate receiving beam set includes one or more receiving beams that are in the K candidate beam pairs and that are different from the optimal receiving beam.

According to a seventh aspect, this application provides an information exchange method. The method may be applied to a beam tracking phase, namely implementation after an RRC connection is established. The method includes: A second communication apparatus (for example, UE) transmits ($n*T_j$) beam measurement results in n historical time windows, where $T_j$ beam measurement results in one historical time window correspond to Tj transmitting beams of a first communication apparatus and an optimal receiving beam of the second communication apparatus; and the second communication apparatus receives beam switching information, where the beam switching information is used to prompt the second communication apparatus to switch a receiving beam in one future time window. Both n and $T_j$ are positive integers.

With reference to the seventh aspect, in a possible implementation, the beam switching information further includes a candidate receiving beam set for switching, where the candidate receiving beam set includes one or more receiving beams that are in K candidate beam pairs and that are different from the optimal receiving beam.

According to an eighth aspect, this application provides a communication apparatus. The communication apparatus may be a second communication apparatus, or a chip or a circuit disposed in the second communication apparatus or used in the second communication apparatus. The communication apparatus is configured to perform the steps or functions performed by the second communication apparatus. The communication apparatus includes a processing unit and a transceiving unit. The transceiving unit is further configured to transmit ($n*T_j$) beam measurement results in n historical time windows, where $T_j$ beam measurement results in one historical time window correspond to $T_j$ transmitting beams of a first communication apparatus and an optimal receiving beam of the second communication apparatus. The transceiving unit is further configured to receive beam switching information, where the beam switching information is used to prompt the second communication apparatus to switch a receiving beam in one future time window. Both n and $T_j$ are positive integers.

Optionally, the processing unit is configured to perform beam measurement on a received reference signal, to obtain a beam measurement result.

With reference to the eighth aspect, in a possible implementation, the beam switching information further includes a candidate receiving beam set for switching, where the candidate receiving beam set includes one or more receiving beams that are in K candidate beam pairs and that are different from the optimal receiving beam.

According to a ninth aspect, this application provides a communication apparatus. The communication apparatus may include a processor and a communication circuit. The processor is connected to the communication circuit. The communication circuit is configured to exchange (or transmit/receive, or input/output) information or data, and the processor is configured to run program instructions, so that the communication apparatus performs the method according to any one of the first aspect, the third aspect, the fifth aspect, the seventh aspect, or the possible implementations of the aspects. The communication circuit may be a communication interface or a transceiver. The transceiver may be a radio frequency module in the communication apparatus, a combination of a radio frequency module and an antenna, or an input/output interface of a chip or a circuit.

According to a tenth aspect, this application provides a readable storage medium. The readable storage medium stores program instructions. When the program instructions are run on a computer, the computer is enabled to perform the method according to any one of the first aspect, the third aspect, the fifth aspect, the seventh aspect, or the possible implementations of the aspects.

According to an eleventh aspect, this application provides a program product including program instructions. When the program product runs, the method according to any one of the first aspect, the third aspect, the fifth aspect, the seventh aspect, or the possible implementations of the aspects is performed.

According to a twelfth aspect, this application provides an apparatus. The apparatus may be implemented in a form of a chip, or may be in a form of a device. The apparatus includes a processor. The processor is configured to read and execute a program stored in a memory, to perform the information exchange method according to one or more of the first aspect, the third aspect, the fifth aspect, and the seventh aspect, or one or more of the possible implementations of the aspects. Optionally, the apparatus further includes a memory, and the memory is connected to the processor by using a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

Optionally, the processor and the memory may be physically independent units, or the memory may be integrated with the processor.

According to a thirteenth aspect, this application provides a communication system. The communication system includes a first communication apparatus and a second communication apparatus. The first communication apparatus is configured to perform the method according to any one of the first aspect, the fifth aspect, or the possible implementations of the aspects, and the second communication apparatus is configured to perform the method according to any one of the third aspect, the seventh aspect, or the possible implementations of the aspects.

For technical effect achieved in the foregoing aspects, refer to each other or technical effect in method embodiments described below. Details are not described herein.

## BRIEF DESCRIPTION OF DRAWINGS

FIG. 1a is a simplified diagram of a communication system according to an embodiment of this application;

FIG. 1b is a diagram of a possible application architecture of a communication system according to an embodiment of this application;

FIG. 2 is a simplified diagram of a structure of UE and a base station according to an embodiment of this application;

FIG. 3 is a diagram of a neural network according to an embodiment of this application;

FIG. 4 is a diagram of a structure of a neuron according to an embodiment of this application;

FIG. 5 is a diagram of a beam management procedure according to an embodiment of this application;

FIG. 6 is a diagram of a wide beam and a narrow beam according to an embodiment of this application;

FIG. 7 is a diagram of an AI-based transmitting beam prediction according to an embodiment of this application;

FIG. 8 is a diagram of a tx-rx bitmap according to an embodiment of this application;

FIG. 9 is a schematic flowchart of an information exchange method according to an embodiment of this application;

FIG. 10 is a diagram of a correspondence between a transmitting beam and a receiving beam according to an embodiment of this application;

FIG. 11 is a diagram of a comparison between prediction accuracy according to an embodiment of this application;

FIG. 12 is a diagram of a comparison between quantities of beams that need to be swept according to an embodiment of this application;

FIG. 13 is another schematic flowchart of an information exchange method according to an embodiment of this application;

FIG. 14 is a diagram of time domain beam management according to an embodiment of this application;

FIG. 15 is a diagram of a structure of a communication apparatus according to an embodiment of this application;

FIG. 16 is a diagram of another structure of a communication apparatus according to an embodiment of this application; and

FIG. 17 is a diagram of still another structure of a communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit quantities and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

In descriptions of this application, words such as "example" or "for example" are used to give an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective case, are not intended to limit time, and do not require a determining action during implementation of the apparatus, or do not mean that there is another limitation.

"Simultaneously" in this application may be understood as being at a same time point, may be understood as being in a period of time, or may be understood as being in a same periodicity, and may be specifically understood with reference to a context.

In this application, unless otherwise specified, an element indicated in a singular form is intended to indicate "one or more", but does not indicate "one and only one".

In addition, the terms "system" and "network" may be used interchangeably in this specification.

It may be understood that, in embodiments of this application, "B corresponding to A", "A corresponds to B", or a similar expression thereof indicates that B is associated with A, or B may be determined based on A. However, it should be further understood that determining B based on A does not mean that B is determined based only on A. B may alternatively be determined based on A and/or other information.

The technical solutions in embodiments of this application may be applied to various communication systems, for example, a long term evolution (long term evolution, LTE) system, a worldwide interoperability for microwave access (worldwide interoperability for microwave access, WiMAX) communication system, a 5G system such as a new radio access technology (new radio access technology, NR), a network integrating a plurality of systems, an Internet of Things system, an Internet of Vehicles system, an open-radio access network (open-radio access network, O-RAN) system, and a future communication system such as a 6G system.

The technical solutions in embodiments of this application may be further applied to another communication system, provided that a first entity transmits data to a second entity, or receives data transmitted by the second entity in the communication system. The data may be carried on a physical channel, for example, a physical downlink control channel (physical downlink control channel, PDCCH), a physical downlink shared channel (physical downlink shared channel, PDSCH), a physical uplink shared channel (physical uplink shared channel, PUSCH), or a physical uplink control channel (physical uplink control channel, PUCCH), and for another example, a physical sidelink control channel (physical sidelink control channel, PSCCH) or a physical sidelink shared channel (physical sidelink shared channel, PSSCH).

A communication system includes communication devices, and wireless communication may be performed between the communication devices by using an air interface resource. The communication devices may include a network device and a terminal device, and the network device may also be referred to as a base station device. The air interface resource may include at least one of a time domain resource, a frequency domain resource, a code resource, and a spatial resource. In this application, "at least one" may also be described as "one or more", and "a plurality of" may be two, three, four, or more. This is not limited in this application.

It should be understood that a network architecture described in embodiments of this application is intended to describe the technical solutions in embodiments of this application more clearly, and does not constitute a limitation on the technical solutions provided in embodiments of this application. A person of ordinary skill in the art may know that, as a network architecture evolves, the technical solutions provided in embodiments of this application are also applicable to a similar technical problem.

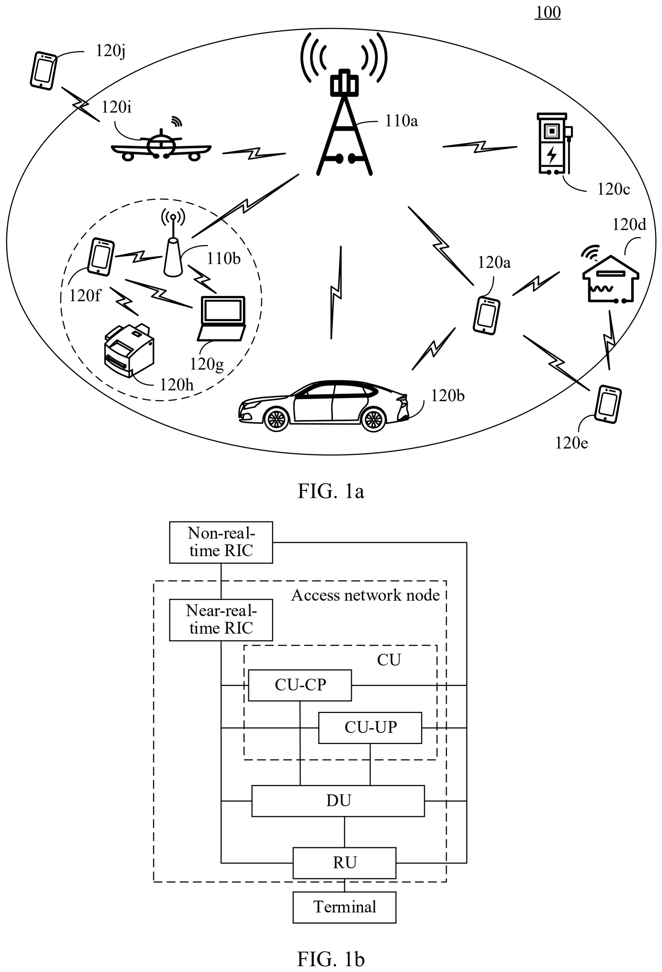

FIG. 1a is a simplified diagram of a communication system according to an embodiment of this application. As shown in FIG. 1a, the communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1a is only a diagram. The communication system may further include another device, for example, may further include a core network device, a wireless relay device, and/or a wireless backhaul device, which is not shown in FIG. 1a.

In actual application, the communication system may include a plurality of network devices (also referred to as access network devices), or may include a plurality of terminal devices. One network device may simultaneously serve one or more terminal devices. One terminal device may simultaneously access one or more network devices. A quantity of terminal devices and a quantity of network devices included in the communication system are not limited in embodiments of this application.

The terminal device may be referred to as a terminal, user equipment (user equipment, UE), a mobile station (mobile station, MS), a mobile terminal (mobile terminal, MT), or the like. The terminal device may be a device having a wireless transceiver function. The terminal device may be deployed on land, including an indoor or outdoor scenario and a handheld or vehicle-mounted scenario, may be deployed on water (for example, on a ship), or may be deployed in the air (for example, on an airplane, a balloon, and a satellite). The terminal device may be configured to connect to a person, an object, and a machine. The terminal device 120 may be widely used in various scenarios, for example, cellular communication, device-to-device (device-to-device, D2D), vehicle-to-everything (vehicle-to-everything, V2X), peer-to-peer (peer-to-peer, P2P), machine-to-machine (machine to machine, M2M), machine type communication (machine type communication, MTC), internet of things (Internet of Things, IoT), virtual reality (virtual reality, VR), augmented reality (augmented reality, AR), industrial control, autonomous driving, telemedicine, a smart grid, smart furniture, smart office, smart wear, smart transportation, a smart city (smart city), smart home (smart home), an unmanned aerial vehicle, a robot, remote sensing, passive sensing, positioning, navigation and tracking, and self-delivery and mobility. The terminal device 120 may be user equipment (UE) in the 3rd generation partnership project (3rd generation partnership project, 3GPP) standard, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an unmanned aerial vehicle, a helicopter, an aircraft, a ship, a remote control device, a smart home device, or an industrial device. The terminal device may alternatively be a communication device in a future wireless communication system.

In embodiments of this application, an apparatus configured to implement a function of a terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which an apparatus configured to implement a function of a terminal is a terminal, and the terminal is UE. A specific technology and a specific device form that are used for the terminal device are not limited in embodiments of this application.

In a possible implementation, the UE may be configured to serve as a base station. For example, the UE may serve as a scheduling entity that provides sidelink signals between UEs in V2X, D2D, or P2P. As shown in FIG. 1a, a cellular phone 120a and a car 120b communicate with each other by using sidelink signals. The cellular phone 120a communicates with a smart home device 120d without relaying a communication signal by using a base station 110a.

In a possible implementation, the UE may be further configured to serve as a relay node. For example, the UE may serve as a relay device (relay) or an integrated access and backhaul (integrated access and backhaul, IAB) node, and is configured to provide a wireless backhaul service for the terminal device.

The network device may be an entity configured to transmit or receive a signal on a network side, for example, a base station (base station, BS). The BS may be a device that is deployed in a radio access network and that can perform wireless communication with a terminal. The base station may have various forms, such as a macro base station, a micro base station, a relay station, and an access point. For example, the base station in embodiments of this application may be a base station in 5G, a base station in a 6th generation (6th generation, 6G) mobile communication system, an access network device or a module of an access network device in an open radio access network (open radio access network, O-RAN) system, a base station in a future mobile communication system, an access node in a Wi-Fi system, an evolved NodeB (evolved NodeB, eNB) in LTE, or the like. The base station in 5G may also be referred to as a transmission reception point (transmission reception point, TRP) or a 5G base station (next-generation NodeB, gNB). The base station may also be replaced with the following names: a radio access point, a node B (nodeB), a transmitting point (transmitting point, TP), a master base station MeNB, a secondary base station SeNB, a multi-standard radio (Multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, an IAB donor (IAB donor), and the like.

The base station (BS) may be fixed or mobile. For example, base stations 110a and 110b are stationary and are responsible for wireless transmission and reception in one or more cells serving the terminal device 120. A helicopter or an unmanned aerial vehicle 120i shown in FIG. 1a may be configured to serve as a mobile base station, and one or more cells may move based on a location of the mobile base station 120i. In another example, the helicopter or the unmanned aerial vehicle (120i) may be configured to serve as a terminal device communicating with the base station 110a.

The network device in embodiments of this application may be an integrated base station, or may be a base station including a central unit (central unit, CU) and/or a distributed unit (distributed unit, DU). The base station including a CU and a DU may also be referred to as a base station with a CU and a DU that are separated. For example, the base station includes a gNB-CU and a gNB-DU. The CU may be further separated into a CU control plane (CU control plane, CU-CP) and a CU user plane (CU user plane, CU-UP). For example, the base station includes a gNB-CU-CP, a gNB-CU-UP, and a gNB-DU. Alternatively, the network device in embodiments of this application may be a radio unit (radio unit, RU). Alternatively, the network device in embodiments of this application may be of an open radio access network (O-RAN) architecture or the like. A specific deployment manner of the network device is not limited in embodiments of this application. For example, when a network device is of an O-RAN architecture, the network device shown in embodiments of this application may be an access network device in an O-RAN, for example, one or a combination of a CU, a DU, or an RU, or a module in an access network device. In an O-RAN system, a CU may also be referred to as an open (open, O)-CU, a CU-CP may also be referred to as an O-CU-CP, a CU-UP may also be referred to as an O-CU-UP, a DU may also be referred to as an O-DU, and an RU may also be referred to as an O-RU.

In embodiments of this application, an apparatus configured to implement a function of a network device may be a network device, or may be an apparatus that can support the network device in implementing the function, for example, a chip system, a communication module, or a modem. The apparatus may be installed in the network device. In the technical solutions provided in embodiments of this application, the technical solutions provided in embodiments of this application are described by using an example in which an apparatus configured to implement a function of a network device is a network device, and the network device is a base station. The base station may support networks using a same access technology or different access technologies. A specific technology and a specific device form that are used by the network device are not limited in embodiments of this application.

In a possible implementation, to support a machine learning function in a wireless network, an artificial intelligence (artificial intelligence, AI) network element may be further introduced into the communication system provided in this application to implement some or all AI-related operations. The AI network element may also be referred to as an AI node, an AI device, an AI entity, an AI module, an AI model, an AI unit, or the like. The AI network element may be built in a network element of the communication system, or may be an independently deployed network element. For example, the AI network element may be an AI module built in an access network device, a core network device, a cloud server, or operation, administration and maintenance (operation, administration and maintenance, OAM), to implement an AI-related function. The OAM may be used as a network management system of a core network device and/or as a network management system of an access network device. Optionally, a terminal or a chip built in the terminal may also include an AI entity configured to implement an AI-related function. Specific implementation of the AI network element is not limited in embodiments of this application. In a possible implementation, the AI network element is deployed in a server or a cloud device of an over the top (over the top, OTT) system. Optionally, the cloud device is located on one or more of a terminal device side, a network device side, or a core network side.

The AI network element in this application may implement beamforming, feature extraction, feature analysis, channel modeling, and the like that are based on a neural network model, and may further implement a receiver algorithm that is based on a neural network model and that is used for joint optimization of transmitting and receiving, for example, user detection and channel estimation.

FIG. 1b is a diagram of a possible application architecture of a communication system according to an embodiment of this application. As shown in FIG. 1b, the communication system includes a RAN intelligent controller (RAN intelligent controller, RIC). For example, the RIC may be an AI module configured to implement an AI-related function. The RIC may include a near-real-time RIC (near-real-time RIC, near-RT RIC) and a non-real-time RIC (non-real-time RIC, Non-RT RIC).

The near-real-time RIC may be used for model training and inference, for example, is configured to train an AI model and perform inference by using the AI model. The near-real-time RIC may obtain information about a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the CU and the DU may exchange an inference result, and/or the DU and the RU may exchange an inference result. For example, the near-real-time RIC delivers an inference result to the DU, and the DU sends the inference result to the RU.

The non-real-time RIC may also be used for model training and inference, for example, is configured to train an AI model and perform inference by using the AI model. The non-real-time RIC may obtain information about a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC and the non-real-time RIC each may alternatively be independently deployed as a network element. Optionally, the near-real-time RIC and/or the non-real-time RIC may alternatively be used as a part of another device. For example, the near-real-time RIC is deployed on the RAN node (for example, the CU and/or the DU), and the non-real-time RIC is deployed on OAM, a cloud server, a core network device, or another network device.

In embodiments of this application, the term "wireless communication" may also be referred to as "communication" for short, and the term "communication" may also be described as "data transmission", "information transmission", or "transmission".

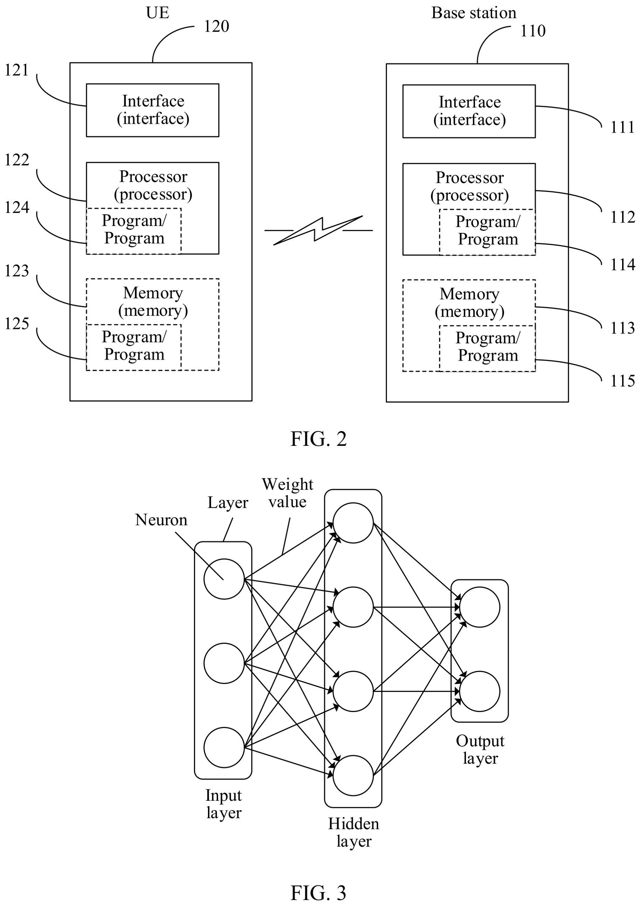

FIG. 2 is a simplified diagram of a structure of UE and a base station according to an embodiment of this application. For simplicity, FIG. 2 shows only main components of a base station 110 and UE 120. In actual application, structures of the base station and the UE may include more or fewer components than those shown in FIG. 2, or may include only the components shown in FIG. 2. It should be understood that the base station shown in FIG. 2 may use a CU-DU split architecture, or may use a CU-DU non-split architecture. The following briefly describes each component in FIG. 2.

The base station 110 includes an interface 111 and a processor 112. The processor 112 may optionally store a program 114. The base station 110 optionally includes a memory 113. The memory 113 may optionally store a program 115. The UE 120 includes an interface 121 and a processor 122. The processor 122 may optionally store a program 124. The UE 120 optionally includes a memory 123. The memory 123 may optionally store a program 125. These components operate together to provide various functions described in this application. For example, the processor 112 and the interface 111 operate together to provide a wireless connection between the base station 110 and the UE 120. The processor 122 and the interface 121 operate together to implement downlink transmission and/or uplink transmission of the UE 120.

A processor (for example, the processor 112 and/or the processor 122) may include one or more processors and is implemented as a combination of computing devices. The processor (for example, the processor 112 and/or the processor 122) may separately include one or more of the following: a microprocessor, a microcontroller, a digital signal processor (digital signal processor, DSP), a digital signal processing device (DSP device, DSPD), an application-specific integrated circuit (application specific integrated circuit, ASIC), a field programmable gate array (field programmable gate array, FPGA), a programmable logic device (programmable logic device, PLD), gating logic, transistor logic, a discrete hardware circuit, a processing circuit, or another appropriate combination of hardware and firmware and/or hardware and software, and is configured to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or the interface 121) may include an interface for implementing communication with one or more computer devices (for example, UEs, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (for example, a 3GPP standard).

The program in this application indicates software in a broad sense. A non-limiting example of the software is program code, a program, a subprogram, instructions, an instruction set, code, a code segment, a software module, an application program, or a software application program. The program may be run in a processor and/or a computer, so that the base station 110 or the UE 120 or both perform various functions and/or processes described in this application.

The memory (for example, the memory 113 and/or the memory 123) may store data manipulated by the processors 112 and 122 when executing the software. The memories 113 and 123 may be implemented by using any storage technology. For example, the memory may be any available storage medium that can be accessed by the processor and/or the computer. A non-limiting example of the storage medium includes a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a CD-ROM, a removable medium, an optical disk memory, a magnetic disk storage medium, a magnetic storage device, a flash memory, a register, a state memory, a remotely installed memory, a local or remote storage component, or any other medium that can carry or store software, data, or information and can be accessed by a processor/computer.

The memory (for example, the memory 113 and/or the memory 123) and the processor (for example, the processor 112 and/or the processor 122) may be separately disposed or integrated. The memory may be configured to be connected to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in the UE, the base station, or another network node).

The foregoing describes a system architecture in embodiments of this application. To better understand the technical solutions in embodiments of this application, the following briefly describes several terms or nouns related to this application.

(1) Artificial intelligence and machine learning

The artificial intelligence (artificial intelligence, AI) may be intelligence demonstrated by machines made by humans. Usually, the artificial intelligence is a technology that presents human intelligence by using a normal computer program. The artificial intelligence may be defined as a machine or computer that mimics humans and has cognitive functions related to human thinking, such as learning and resolving problems. The artificial intelligence can learn from past experience, make a proper decision, and respond quickly. An objective of the artificial intelligence is to understand intelligence by building symbolic reasoning or computer programs for reasoning.

The machine learning is an important technical way to implement artificial intelligence. That is, the machine learning is used as a means to resolve problems in the artificial intelligence. A machine learning theory is mainly to design and analyze some algorithms that enable a computer to automatically "learn". A machine learning algorithm is an algorithm that automatically analyzes data to obtain a rule and uses the rule to predict unknown data. Because the machine learning algorithm involves a large quantity of statistical theories, the machine learning is particularly closely related to inferential statistics and is also referred to as a statistical learning theory. The machine learning may be divided into supervised learning, unsupervised learning, and reinforcement learning.

An AI model is an algorithm or a computer program that can implement an AI function. The AI model represents a mapping relationship between an input and an output of the model. The AI model may be a neural network or another machine learning model.

A neural network (neural network, NN) is a specific implementation form of machine learning, and is a neural network that simulates a human brain to implement a machine learning technology similar to artificial intelligence. According to a general approximation theorem, the neural network can approximate any continuous function in theory, so that the neural network has a capability of learning any mapping. Therefore, the neural network can accurately perform abstract modeling for a complex high-dimension problem. A conventional communication system relies on rich expert knowledge to design a communication module. However, a deep neural network (deep neural network, DNN)-based communication system can discover an implicit pattern structure from a large quantity of datasets, establish a mapping relationship between data, and obtain better performance than that of a conventional modeling method.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may be understood as a quantity of layers included in the neural network, and a quantity of neurons included in each layer may be referred to as a width of the layer. FIG. 3 is a diagram of a neural network according to an embodiment of this application. In an implementation, the neural network includes an input layer and an output layer. The input layer of the neural network processes a received input through a neuron, and then transfers a result to the output layer, and the output layer obtains an output result of the neural network. In another implementation, the neural network includes an input layer, a hidden layer, and an output layer. The input layer of the neural network processes a received input through a neuron, and then transfers a result to the intermediate hidden layer. The hidden layer transfers a calculation result to the output layer or an adjacent hidden layer. Finally, the output layer obtains an output result of the neural network. One neural network may include one or more sequentially connected hidden layers. A quantity of hidden layers in the neural network is not limited in this application. A DNN usually includes a plurality of hidden layers. The hidden layer usually affects information extraction and function fitting capabilities. The function fitting capability of the DNN can be improved by increasing a quantity of hidden layers of the DNN or increasing a width of each layer. The neural network shown in FIG. 3 includes one input layer, one hidden layer, and one output layer. The input layer has three neurons, the hidden layer has four neurons, and the output layer has two neurons. It may be understood that a quantity of layers of the neural network and a quantity of neurons included by each layer shown in FIG. 3 are merely examples.

Each connection line between neurons corresponds to a weight (a value of the weight is referred to as a weight value), and the weight value may be updated through training. Each neuron may further correspond to an offset value, and the offset value may be updated through training. Updating the neural network is updating the weight value and the offset value. After the structure of the neural network is known, that is, how an output of a previous neuron is input into a subsequent neuron, and the weight value and the offset value are known, all information of the neural network is known.

It can be learned from FIG. 3 that one neuron may have a plurality of input connection lines, and each neuron calculates an output based on an input. For example, each neuron performs a weighted summation operation on input values of the neuron, and outputs a weighted summation result through an activation function. One neuron may have a plurality of output connection lines, and an output of one neuron is used as an input of a next neuron. It should be understood that the input layer has only an output connection line, each neuron at the input layer is a value that is input into a neural network, and a value of each neuron is used as an input of all output connection lines. The output layer has only an input connection line.

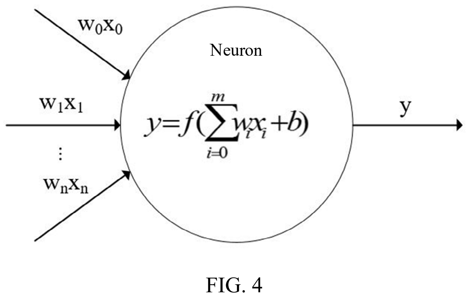

FIG. 4 is a diagram of a structure of a neuron according to an embodiment of this application. As shown in FIG. 4, it is assumed that an input of a neuron is $x = [x_0, x_1, ..., x_m]$, a weight value corresponding to each input is $w = [w_0, w_1, ..., w_m]$, and an offset value corresponding to the neuron is b. It is assumed that an activation function is represented by f(z). In this case, an output y of the neuron shown in FIG. 4 is:

$$y = f(\sum_{i=0}^{m} w_i x_i + b) \quad .............................................................................. \quad (1\text{-}1)$$

The offset b may be various values such as a decimal, an integer (0, a positive integer, or a negative integer), or a complex number. Activation functions of different neurons in the neural network may be the same or may be different.

Forms of the activation function f(z) may be diversified. It is assumed that an activation function of a neuron is f(z) = max(0, z). In this case, an output of the neuron is $y = f(\sum_{i=0}^{i=m} w_i * x_i + b) = \max(0, \sum_{i=0}^{i=m} w_i * x_i + b)$. For another example, it is assumed that an activation function of a neuron is f(z) = z. In this case, an output of the neuron is $y = f(\sum_{i=0}^{i=m} w_i * x_i + b) = \sum_{i=0}^{i=m} w_i * x_i + b$. Details are not listed herein. A form of the activation function is not limited in this application.

A loss function may be defined in a training process of the neural network. The loss function describes a disparity or difference between an output of the neural network and target data. A smaller loss function indicates that the output of the neural network better fits the target data. An example in which a mean square error is used as the loss function is as follows:

$$\text{loss} = (y_{\text{out}} - y_{\text{target}})^2 \dots\dots\dots\dots\dots\dots\dots\dots\dots\dots\dots\dots\dots\dots\dots\dots \text{(1-2)}$$

$y_{\text{out}}$ represents an output of a neural network, $y_{\text{target}}$ represents target data, and minimizing the loss function (namely loss in Formula (1-2)) is minimizing a difference between values of the two (namely $y_{\text{out}}$ and $y_{\text{target}}$). It should be understood that, in addition to a mean square error loss function, the loss function may alternatively be a cross entropy loss function, an absolute value loss function, or the like. A type of the loss function is not limited in this application. The training process of the neural network is a process of adjusting parameters of the neural network such as a quantity of layers and a width of the neural network, a weight value of a neuron, or a parameter in an activation function of a neuron, so that a value of the loss function is less than a threshold or meets a target requirement.

Based on a network construction manner, the DNN may be classified into a feedforward neural network (feedforward neural network, FNN), a convolutional neural network (convolutional neural network, CNN), and a recurrent neural network (recurrent neural network, RNN). A characteristic of the FNN is that neurons at adjacent layers are completely connected. Therefore, the FNN usually requires a large amount of storage space, leading to high calculation complexity.

The CNN is a neural network used to process data with a grid-like structure. For example, both time series data (timeline discrete sampling) and image data (two-dimensional discrete sampling) may be considered as the data with the grid-like structure. The CNN performs a convolution operation by capturing some information through a window with a fixed size, instead of performing an operation by using all input information. This greatly reduces a calculation amount of a model parameter. In addition, based on different types of information captured through the window (for example, a person and an object in an image are information of different types), different convolution kernel operations may be used for each window, so that the CNN can better extract a feature of input data.

The RNN is a DNN network using feedback time series information. Inputs of the RNN include an input value at a current moment and an output value of the RNN at a previous moment. The RNN is suitable for obtaining a sequence feature having a time correlation, for example, is used for applications such as speech recognition and channel encoding and decoding.

(2) Beamforming (Beamforming)

The beamforming is also referred to as beam forming and spatial filtering, and is a signal preprocessing technology based on an antenna array. The beamforming generates a directional beam by adjusting a weighting coefficient of each array element in the antenna array, so that a significant antenna array gain can be obtained.

(3) Beam management

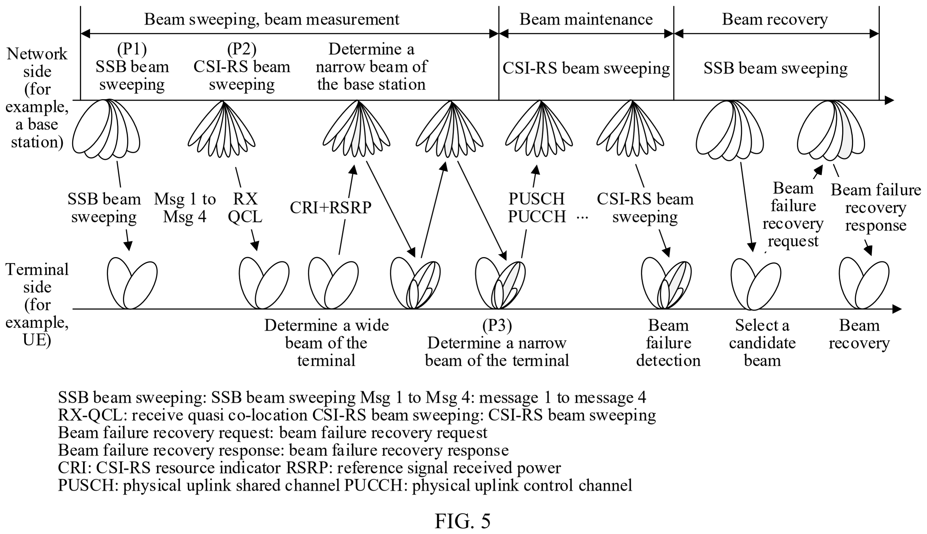

A beam management procedure may be usually divided into procedures such as beam training, beam maintenance, and beam failure recovery. A purpose of beam management is to establish and maintain an appropriate beam pair (beam pair). That is, an appropriate transmitting beam (or a transmitting direction, or a spatial filter) is selected at a transmitting end, and an appropriate receiving beam (or a receiving direction, or a spatial filter) is selected at a receiving end, to form a beam pair to maintain a good wireless connection. This process is referred to as serving beam selection. In some scenarios, due to an environment change, an originally established beam pair (beam pair) may be blocked, resulting in poor performance, and a base station and UE may not have enough time to adjust a beam. In this case, another beam pair (beam pair) may be reselected and established through the beam failure recovery. For a specific beam recovery process, refer to an existing standard, for example, a 5G NR standard. Details are not described in this application. FIG. 5 is a diagram of a beam management procedure according to an embodiment of this application. This application mainly focuses on a beam training process. Therefore, the following mainly briefly describes the beam training process.

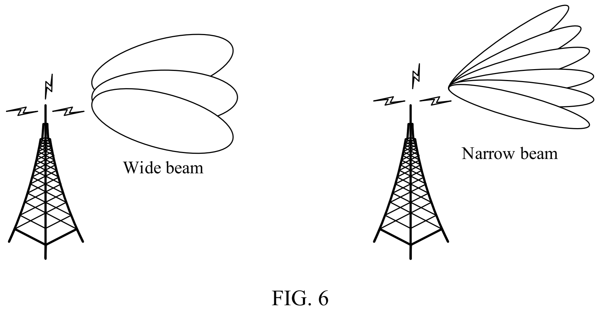

In the beam training process, beam selection is mainly completed by measuring a reference signal and a corresponding beam. The reference signal may include a synchronization signal block (synchronization signal block, SSB) and a channel state information-reference signal (channel state information-reference signal, CSI-RS). The SSB is a cell broadcast signal, including a primary synchronization signal (primary synchronization signal, PSS), a secondary synchronization signal (secondary synchronization signal, SSS), a physical broadcast channel (physical broadcast channel, PBCH), and a demodulation reference signal (Demodulation reference signal, DMRS). The SSB is periodically transmitted based on a cell configuration. The SSB is not only used for beam management, but also may be used for initial access, time-frequency synchronization, and the like. For example, the SSB may be understood as a wide beam signal. The CSI-RS is a subscriber-level signal. A network side configures one or more groups of CSI-RS resources for a user based on an actual situation. Similarly, the CSI-RS signal is not only used for beam management, but also may be used for channel quality measurement and the like. For example, the CSI-RS may be understood as a narrow beam signal. Herein, the wide beam signal may be understood as a signal transmitted by using a wide beam, and the narrow beam signal may be understood as a signal transmitted by using a narrow beam. Usually, the SSB is transmitted by using a wide beam, and the CSI-RS is transmitted by using a narrow beam. FIG. 6 is a diagram of a wide beam and a narrow beam according to an embodiment of this application. The wide beam and the narrow beam are two different propagation forms of an electromagnetic wave. The wide beam is a form in which a wavefront is broadened when the electromagnetic wave propagates through space. The wide beam is characterized by a wide beam angle and a relatively low gain, and can transmit a signal in a broad range of directions. Different from the wide beam, the narrow beam is a form in which a wavefront is concentrated when the electromagnetic wave propagates through space. The narrow beam is characterized by a narrow beam angle and a relatively high gain, and can transmit a signal in a narrow range of directions. In this application, the wide beam and the narrow beam are relative, and are not wide or narrow in an absolute sense. One difference between the wide beam and the narrow beam lies in different weight value designs of a phase shifter.

As shown in FIG. 5, the beam training process may include three phases: P1, P2, and P3. P1 phase: SSB beam sweeping (SSB beam sweeping), which is used to enable UE measurement on different transmitting beams of a network side (for example, a base station), to support selection of a transmitting beam of the network side (for example, the base station) or a receiving beam of a terminal side (for example, UE) (P-1: is used to enable UE measurement on different TRxP Tx beams to support selection of TRxP Tx beams/UE Rx beam(s)). In the P1 phase, the network side (for example, the base station) sweeps its SSB beam set, the terminal side (for example, the UE) polls its receiving beam set, and finally, the network side (for example, the base station) determines an optimal SSB beam based on RSRP fed back by the terminal side (for example, the UE). P2 phase: CSI-RS beam sweeping, which is used to determine a narrow beam of the network side (for example, the base station). In the P2 phase, the network side (for example, the base station) sweeps a CSI-RS beam based on the determining of its optimal SSB beam, the terminal side (for example, the UE) polls its receiving beam set, and after the terminal side (for example, the UE) feeds back the RSRP, the network side (for example, the base station) determines an optimal narrow beam, and the terminal side (for example, the UE) can also determine its optimal wide beam. P3 phase: Determine a narrow beam of the terminal side (for example, the UE). In the P3 phase, the network side (for example, the base station) has fixed the optimal narrow beam, and the terminal side (for example, the UE) has fixed the optimal wide beam. In this case, the terminal side (for example, the UE) also generates narrow beams based on its optimal wide beam, and polls the narrow beam set (corresponding to a same narrow beam of the base station, for example, the optimal narrow beam of the base station), to finally determine an optimal narrow beam of the UE. After the P1 phase, the P2 phage, and the P3 phase, the transmitting end and the receiving end may determine their respective optimal narrow beams. For specific implementation of the beam training process, refer to an existing standard, for example, a 5G NR standard. Only brief description is provided herein.

It can be learned from the beam training process that, for both a wide beam and a narrow beam, the base station and the UE need to traverse their candidate beams, and then compare beam measurement results of all the candidate beams based on the beam measurement results such as RSRP of a current beam, to determine their respective optimal transmitting (receiving) beams. These candidate beams are all analog beams, and the base station or the UE can transmit beams in only one direction at a same moment. Because both the base station and the UE need to traverse their candidate beams, beam sweeping overheads in an existing beam training process are high.

Currently, the beam sweeping overheads may be reduced by using a method such as layered sweeping. To be specific, a wide beam is first swept, and then a narrow beam is swept based on the wide beam, so as to reduce the beam sweeping overheads. For example, based on layered sweeping of the SSB and the CSI-RS, the base station first sweeps N SSB beams, determines an optimal SSB beam based on RSRP fed back by the UE, and then configures M CSI-RS resources within a range of (and around) the optimal SSB beam to determine an optimal narrow beam. In this case, after the optimal SSB beam is determined, an optimal CSI-RS beam can be selected only within a range of and around the SSB beam. Considering problems such as noise and environmental blockage, an actually optimal CSI-RS beam may be out of and not around the range of the SSB beam. That is, the optimal CSI-RS beam found by using the existing layered sweeping method may not be an actually optimal narrow beam.

(4) AI-based transmitting beam prediction

The artificial intelligence (AI) technology emerging in recent years has achieved significant effects in reducing beam sweeping overheads. Two groups of reference signal resources usually need to be configured for the AI-based transmitting beam prediction. One group of reference signal resources is used to support sparse beam sweeping, and the other group of reference signal resources is used to support sweeping of top-K (top-K) transmitting beams. The top-K transmitting beams herein are top-K transmitting beams that are most likely to become optimal transmitting beams and that are predicted by using an AI model based on a beam measurement result obtained through the sparse beam sweeping.

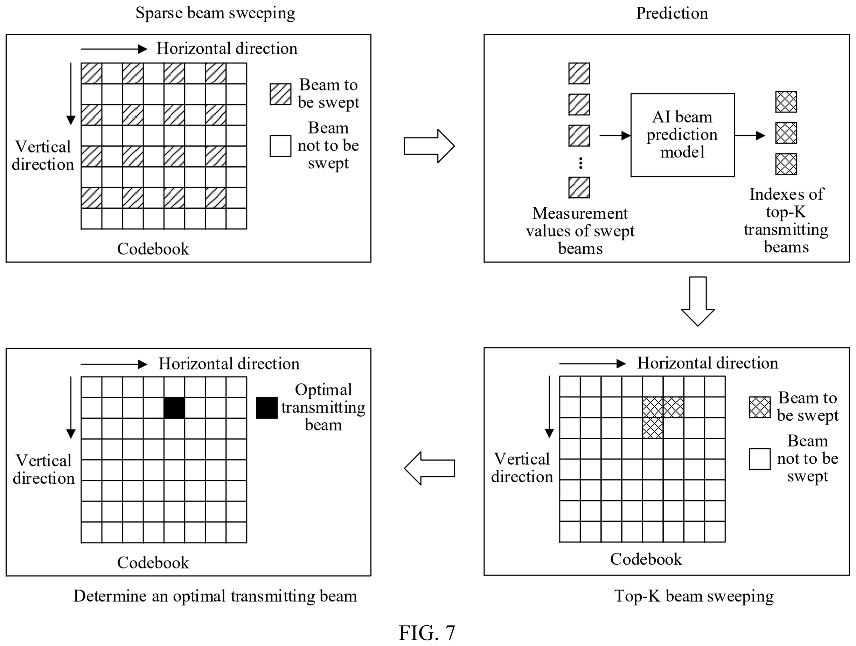

FIG. 7 is a diagram of an AI-based transmitting beam prediction according to an embodiment of this application. As shown in FIG. 7, a base station performs sparse beam sweeping based on a codebook (including beams to be swept and beams not to be swept). The base station sweeps only a beam that needs to be swept in the codebook, and does not sweep a beam that does not need to be swept. UE obtains a measurement value (for example, RSRP) obtained through the sparse beam sweeping, and feeds back the measurement value to the base station. The base station inputs the measurement value into an AI beam prediction model to perform a beam prediction, to obtain indexes of K transmitting beams that are most likely to become optimal transmitting beams. Then, the base station sweeps the K transmitting beams on configured reference signal resources, and the UE obtains measurement values (for example, RSRP) of the K transmitting beams on the configured reference signal resources. The UE feeds back, to the base station, an index of a reference signal resource corresponding to a maximum measurement value (RSRP), and then the base station determines its optimal transmitting beam based on the received index of the reference signal resource. Generally, K is a fixed value. For example, in AI-based spatial beam management, a quantity of beams in sparse beam sweeping (namely a quantity of beams to be swept in a codebook) is usually configured to be a quarter of a total quantity of (transmitting) beams, and K is usually configured to be a value from 3 to 5 (including 3 and 5), so that good prediction performance can be obtained through two rounds of beam sweeping. It may be understood that different values of K affect sweeping overheads and beam alignment precision.

It may be understood that the codebook for sparse beam sweeping shown in FIG. 7 is merely an example, and there may be different codebooks in an actual system. However, the codebook used for the sparse beam sweeping should be consistent with a codebook used for training of the AI beam prediction model.

It can be learned from FIG. 7 that, under the same single-round sweeping overheads as the existing layered sweeping method, a prediction range of the AI beam prediction model includes all candidate transmitting beams, instead of being limited to a fixed range of transmitting beams, thereby improving prediction precision. That is, the AI beam prediction model predicts, based on RSRP of some transmitting beams, a probability that all candidate transmitting beams are optimal transmitting beams, thereby improving prediction precision, and does not need to traverse all the candidate transmitting beams, thereby reducing beam sweeping overheads.

However, in the AI-based transmitting beam prediction, if the UE has a plurality of candidate receiving beams, the UE needs to fix one of the candidate receiving beams to receive a sparse beam sweep of the base station (herein, "a sparse beam sweep" may be understood as sweeping beams that need to be swept once based on a codebook), and feeds back RSRP to the base station. The base station then performs the AI-based transmitting beam prediction, and the prediction is specific to a current receiving beam. Then, the UE switches to a next candidate receiving beam to receive a next sparse beam sweep of the base station, and feeds back RSRP to the base station. The base station then performs the AI-based transmitting beam prediction, and so on, so as to implement a poll of the candidate receiving beams. In this case, in the AI-based transmitting beam prediction, a quantity of times of sparse beam sweeping is $N_{BS-beam}^{AI} * N_{UE-beam}^{Non-AI}$, where $N_{BS-beam}^{AI}$ represents a quantity of transmitting beams that need to be swept in all candidate transmitting beams of the base station, and $N_{UE-beam}^{Non-AI}$ represents a quantity of candidate receiving beams of the UE. Correspondingly, a quantity of resources that need to be configured in top-K beam sweeping is $K * N_{UE-beam}^{Non-AI}$. That is, a quantity of times of top-K beam sweeping is $K * N_{UE-beam}^{Non-AI}$. In conclusion, to finally find a pair of optimal transmitting and receiving beams, sweeping overheads of the AI-based transmitting beam prediction are limited by a quantity of receiving beams.

In addition, to ensure a good prediction effect, a pattern (pattern, namely the codebook in FIG. 7) of the sparse beam sweeping of the base station needs to be fixed. That is, the base station needs to configure a same transmitting beam (namely a same codebook/pattern) for each receiving beam. Otherwise, performance of the AI model greatly deteriorates, or even the AI model cannot operate. In this case, flexibility of the transmitting beam is limited, and prediction accuracy is further affected if the candidate transmitting beam is blocked and the like.

In this application, the symbol "*" represents a meaning of multiplication. A same expression in the following represents a same meaning, and details are not described again.

(5) AI-based beam pair prediction

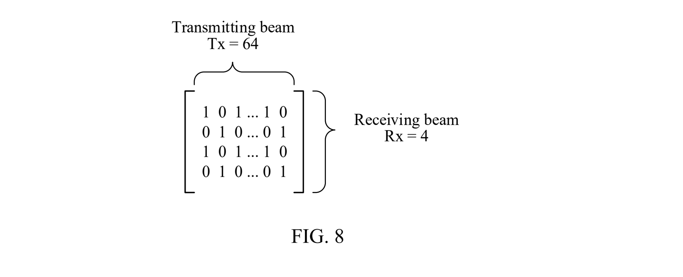

In the AI-based beam pair prediction, a base station needs to maintain a bitmap of a transmitting beam and a receiving beam, which is denoted as a transmit (transmission, Tx)-receive (receiver, Rx) bitmap, namely a tx-rx bitmap. FIG. 8 is a diagram of a tx-rx bitmap according to an embodiment of this application. It is assumed that the base station has 64 candidate transmitting beams, and the UE has 4 candidate receiving beams. In this case, a 4-by-64 (4-by-64) bitmap may be formed, where an element "1" indicates that a corresponding transmitting and receiving beam pair needs to be swept and RSRP needs to be fed back, and an element "0" indicates that a corresponding transmitting and receiving beam pair does not need to be swept. It can be learned from FIG. 8 that distribution of 1 and 0 in a first row of the tx-rx bitmap may be different from distribution of 1 and 0 in a second row of the tx-rx bitmap, so as to resolve a problem that different receiving beams need to use a same transmitting beam set (set), and improve flexibility of the transmitting beam. Certainly, the tx-rx bitmap may further include rows in which 1 and 0 are distributed in a same manner. This is not limited herein. In a possible implementation, the tx-rx bitmap shown in FIG. 8 may also be understood as a matrix (matrix). A row of the matrix corresponds to a receiving beam, and a column of the matrix corresponds to a transmitting beam.

Different from the foregoing AI-based transmitting beam prediction (as shown in FIG. 7), in the AI-based beam pair prediction, RSRP of beam pairs (beam pairs) corresponding to all elements "1"s in the tx-rx bitmap is collected and then input into an AI model to perform a prediction, and prediction space is expanded from all transmitting beams of the base station to all transmitting and receiving beam combinations. In this case, after the prediction is performed by using the AI model, a quantity of resources that need to be configured for top-K beam sweeping is reduced from $K * N_{UE-beam}^{Non-AI}$ to K. That is, after one round of beam pair (beam pair) (namely beam pairs corresponding to all elements 1 in the tx-rx bitmap) sweeping is performed, a corresponding measurement value (for example, RSRP) is input into the AI model to perform a prediction, so that prediction results of all beam pairs may be obtained, and top-K (top-K) beam pairs that are most likely to become an optimal beam pair may be selected from these prediction results for a second round of beam pair sweeping.

In conclusion, the AI-based beam pair prediction can resolve a problem in the AI-based transmitting beam prediction (as shown in FIG. 7) that different receiving beams need to use a same transmitting beam set, improve flexibility of the transmitting beam, and further reduce a quantity of beams (or resources) that need to be configured for top-K beam sweeping. However, in the AI-based beam pair prediction, all receiving beams still need to be polled, and sweeping overheads are high.

Embodiments of this application provide an information exchange method, an apparatus, and a readable storage medium. There is no need to poll all receiving beams, thereby reducing a quantity of beam sweeping times, reducing an amount of feedback or a quantity of beam measurement times, and reducing overheads.

The following describes the technical solutions provided in this application in detail.

To clearly describe the technical solutions in this application, this application is described by using a plurality of embodiments. For details, refer to descriptions of the following embodiments. In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application. It may be understood that a sequence of the following embodiments does not represent a degree of importance.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A transmits information A to a network element B" may be understood as that a destination end of the information A or an intermediate network element in a transmission path between the network element A and the destination end is the network element B, and may include directly or indirectly transmitting information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for transmitting the information and the destination end. However, the destination end may understand valid information from the source end. Similar descriptions in this application may be understood similarly, and details are not described herein.

In this application, similar expressions such as "a transmitting and receiving beam pair", "a beam pair (beam pair)", and "a transmitting and receiving beam combination" represent a combination of a transmitting beam and a receiving beam, and may be used interchangeably.

In a possible implementation, a beam (beam) may alternatively be a spatial filter. In this case, a "beam pair (or a transmitting and receiving beam pair, or a transmitting and receiving beam combination)" in this application may represent a combination of a spatial filter on a transmitting end and a spatial filter on a receiving end. In this application, the "transmitting beam" may be replaced with a "spatial filter used for transmitting", and the "receiving beam" may be replaced with a "spatial filter used for receiving".

The method provided in this application may be applied to the foregoing network device such as the base station, and certainly may be further applied to the foregoing terminal device such as the UE. A first communication apparatus in this application may be a network device, such as a base station, a CU, a DU, an RU, an O-CU, an O-DU, or an O-RU. Correspondingly, a second communication apparatus may be a terminal device, such as UE or a chip in UE. Alternatively, the first communication apparatus is a terminal device such as UE, and the second communication apparatus is a network device such as a base station. Certainly, the first communication apparatus and the second communication apparatus may both be network devices, such as 110a and 110b in FIG. 1a, or may both be terminal devices, such as 120a and 120b in FIG. 1a. Specific implementation forms of the first communication apparatus and the second communication apparatus are not limited in this application.

A module that is configured to implement an AI model (or an AI function) in this application (referred to as an AI module in this application for short) may be deployed in the first communication apparatus, or may be deployed outside the first communication apparatus, for example, in a core network device, a server, or a cloud device. This is not limited in this application. The AI module may implement beamforming, feature extraction, feature analysis, channel modeling, and the like that are based on a neural network model, and may further implement a receiver algorithm that is based on a neural network model and that is used for joint optimization of transmitting and receiving, for example, user detection and channel estimation.

Embodiment 1

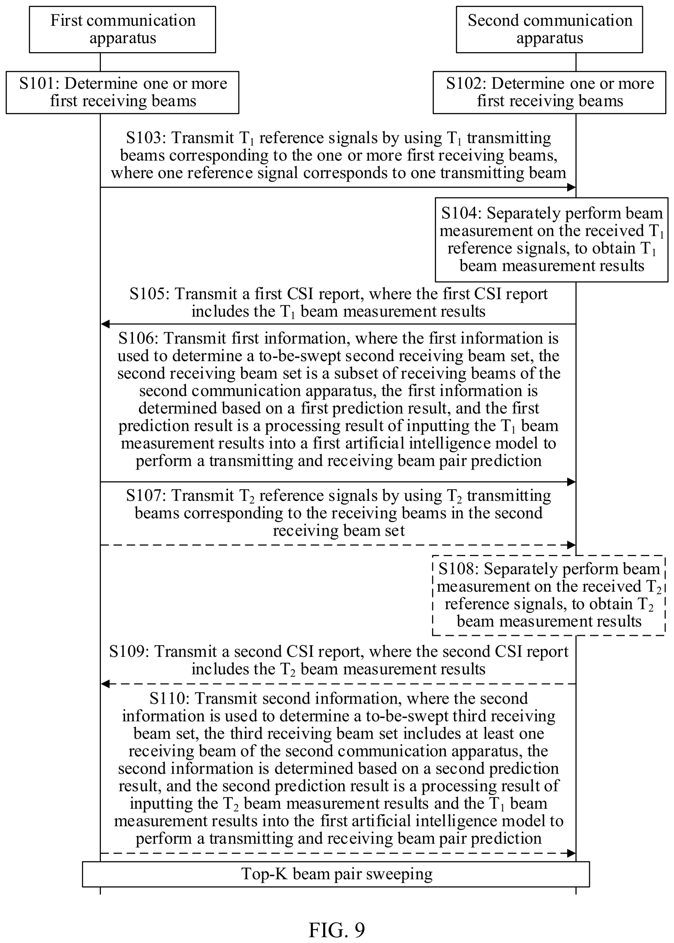

FIG. 9 is a schematic flowchart of an information exchange method according to an embodiment of this application. The method mainly describes how a base station predicts, based on measurement values (for example, RSRP) of beam pairs corresponding to some receiving beams, a likelihood that all beam pairs become an optimal beam pair, extracts information about the receiving beams from the prediction, and notifies UE of the information, so as to subsequently sweep top-K beam pairs, to obtain an optimal beam pair.

As shown in FIG. 9, the information exchange method includes but is not limited to the following steps.

S101: A first communication apparatus (for example, a base station or a part of a base station) determines one or more first receiving beams. The one or more first receiving beams belong to a second communication apparatus.

S102: The second communication apparatus (for example, UE) determines one or more first receiving beams.

In embodiments of this application, the first communication apparatus is used as a transmitting end in a beam management procedure, and needs to determine an optimal transmitting beam; and the second communication apparatus is used as a receiving end in the beam management procedure, and needs to determine an optimal receiving beam. A combination of an optimal transmitting beam and an optimal receiving beam is an optimal transmitting and receiving beam pair (or referred to as an optimal beam pair).

In embodiments of this application, the first communication apparatus has a plurality of transmitting beams, and the second communication apparatus has a plurality of receiving beams. A quantity of transmitting beams of the first communication apparatus is different from or certainly may be the same as a quantity of receiving beams of the second communication apparatus. The quantity of transmitting beams or the quantity of receiving beams or both are not limited in this embodiment of this application. For example, the first communication apparatus has 64 transmitting beams, and the second communication apparatus has 4 receiving beams.

In embodiments of this application, the first communication apparatus may maintain a correspondence between a transmitting beam identifier (Tx beam ID) and a transmitting beam (or a weight value of a spatial filter used for transmitting) of the first communication apparatus. That is, the first communication apparatus may uniquely determine a transmitting beam (or a transmitting direction) by using the transmitting beam identifier. Similarly, the second communication apparatus may maintain a correspondence between a receiving beam identifier (Rx beam ID) and a receiving beam (or a weight value of a spatial filter used for receiving) of the second communication apparatus. That is, the second communication apparatus may uniquely determine a receiving beam (or a receiving direction) by using the receiving beam identifier. In addition, in embodiments of this application, the correspondence between the transmitting beam identifier and the transmitting beam (or the weight value of the spatial filter used for transmitting) remains consistent in a training and inference (inference) process of an AI model, and the correspondence between the receiving beam identifier and the receiving beam (or the weight value of the spatial filter used for receiving) also remains consistent in the training and inference process of the AI model.

In a possible implementation, before step S101, the second communication apparatus may report a quantity of receiving beams of the second communication apparatus in a capability reporting phase. For example, the second communication apparatus transmits information a, where the information a may include a quantity of receiving beams of the second communication apparatus. Correspondingly, after receiving the information a, the first communication apparatus may obtain the quantity of receiving beams of the second communication apparatus. In another possible implementation, before step S101, the first communication apparatus may maintain a limited quantity of correspondences between a transmitting beam and a receiving beam, and deliver the correspondence to the second communication apparatus. The second communication apparatus feeds back an index (index) of the correspondence to the first communication apparatus, to implicitly indicate a quantity of receiving beams of the second communication apparatus.

For example, a correspondence between a transmitting beam and a receiving beam in this embodiment of this application may be represented by using a tx-rx bitmap, a transmitting and receiving beam matrix (a row of the matrix corresponds to a receiving beam, and a column of the matrix corresponds to a transmitting beam), a table, or the like. Certainly, the correspondence between a transmitting beam and a receiving beam may alternatively be represented in another manner. This is not limited in this embodiment of this application. If the correspondence between a transmitting beam and a receiving beam is represented by using the tx-rx bitmap or the transmitting and receiving beam matrix, in the tx-rx bitmap or the transmitting and receiving beam matrix, one row corresponds to one receiving beam, and one column corresponds to one transmitting beam. For example, a representation form of the tx-rx bitmap or the transmitting and receiving beam matrix may be shown in FIG. 8. For another example, if the correspondence between a transmitting beam and a receiving beam is represented by using the table, a representation form of the table may be shown in the following Table 1. An Rx beam ID represents a receiving beam identifier, a Tx beam ID represents a transmitting beam identifier, an element "1" indicates that a corresponding transmitting and receiving beam pair needs to be swept and RSRP needs to be fed back, and an element "0" indicates that a corresponding transmitting and receiving beam pair does not need to be swept. It may be understood that Table 1 is merely an example, and when the correspondence between a transmitting beam and a receiving beam is represented by using the table, there may be another representation form of the table. This is not limited in this embodiment of this application.

Table 1

|  | Tx beam ID 1 | Tx beam ID 2 | Tx beam ID 3 | ... |
|---|---|---|---|---|
| Rx beam ID 1 | 1 | 0 | 1 | ... |
| Rx beam ID 2 | 0 | 1 | 0 | ... |
| Rx beam ID 3 | 1 | 0 | 1 | ... |
| Rx beam ID 4 | 0 | 1 | 0 | ... |
| ... | ... | ... | ... | ... |

In a possible implementation, the tx-rx bitmap or the transmitting and receiving beam matrix may be obtained through AI training. The training process may be summarized as: initializing a matrix whose dimension is $N_{rx-beam}$ by $N_{tx-beam}$, where $N_{rx-beam}$ represents a quantity of receiving beams, and $N_{tx-beam}$ represents a quantity of transmitting beams; and then, based on a binary constraint (binary constraint) of each element in the matrix, that is, each element may only be 0 or 1, performing multi-task learning (multi-task learning) with a loss function for implementing a minimum sum of all elements and, for example, highest beam accuracy or throughput, or maximum average RSRP, to learn an optimal bitmap or matrix.

In a possible implementation, after obtaining the quantity of receiving beams of the second communication apparatus, the first communication apparatus may determine a correspondence between a transmitting beam and a receiving beam. In this embodiment of this application, a plurality of correspondences between a transmitting beam and a receiving beam may be predefined. An example in which the correspondence between a transmitting beam and a receiving beam is represented by using a tx-rx bitmap is used. In embodiments of this application, a plurality of tx-rx bitmaps (the plurality of tx-rx bitmaps may be obtained through AI training) are defined, and quantities of receiving beams (namely quantities of rows) in the plurality of tx-rx bitmaps are different. Therefore, the correspondence between a transmitting beam and a receiving beam may be determined based on the quantity of receiving beams, that is, one tx-rx bitmap is determined. In the tx-rx bitmap, one row corresponds to one receiving beam, and one column corresponds to one transmitting beam. For ease of description, the following uses an example in which the correspondence between a transmitting beam and a receiving beam is represented by using a tx-rx bitmap for description.

In a possible implementation, after obtaining the quantity of receiving beams of the second communication apparatus, the first communication apparatus may configure a receiving beam sweeping sequence for the second communication apparatus, and may deliver the receiving beam sweeping sequence to the second communication apparatus. For example, a transmitting end and a receiving end set beam identifiers based on a same identifier system. When a quantity of receiving beams is 4, receiving beam identifiers (Rx beam ID) are 0, 1, 2, and 3. The first communication apparatus may randomly configure a receiving beam sweeping sequence for the second communication apparatus. For example, a configured receiving beam sweeping sequence (a sweeping sequence) is an Rx beam ID 0, an Rx beam ID 1, an Rx beam ID 2, and an Rx beam ID 3. There may be another sequence, for example, an Rx beam ID 1, an Rx beam ID 3, an Rx beam ID 2, and an Rx beam ID 0. A specific sweeping sequence of the receiving beams is not limited in this embodiment of this application. For another example, the first communication apparatus determines a receiving beam sweeping sequence based on a set of predefined criteria. For example, the receiving beam sweeping sequence may be determined based on a quantity of elements "1" in a row (vector) of the tx-rx bitmap. For example, the quantity of elements "1" in a row (vector) of the tx-rx bitmap is sorted in descending order, where a row with a largest quantity of elements "1" is swept first, a row with a second largest quantity of elements "1" is swept second, and so on, and rows with a same quantity of elements "1" are sequentially swept from top to bottom in the tx-rx bitmap. Because one row of the tx-rx bitmap corresponds to one receiving beam, a sweeping sequence of each row in the tx-rx bitmap is determined, and a receiving beam sweeping sequence is determined.

In another possible implementation, the second communication apparatus may report a receiving beam sweeping sequence of the second communication apparatus to the first communication apparatus, and correspondingly, the first communication apparatus receives the receiving beam sweeping sequence. For example, the second communication apparatus may report the receiving beam sweeping sequence of the second communication apparatus in a capability reporting phase. For example, the second communication apparatus may include the receiving beam sweeping sequence of the second communication apparatus in the information a, or may include the receiving beam sweeping sequence of the second communication apparatus in another piece of information such as information b. In other words, the quantity of receiving beams and the receiving beam sweeping sequence of the second communication apparatus may be reported by using one piece of information or two pieces of information. This is not limited in this embodiment of this application.

In still another possible implementation, if the second communication apparatus learns of the correspondence between a transmitting beam and a receiving beam (tx-rx bitmap), the first communication apparatus and the second communication apparatus may determine the receiving beam sweeping sequence based on a same set of predefined criteria. For example, the receiving beam sweeping sequence may be determined based on a quantity of elements "1" in a row (vector) of the tx-rx bitmap.

In a possible implementation, the first communication apparatus may determine one or more first receiving beams based on the receiving beam sweeping sequence, and may transmit information c to the second communication apparatus, where the information c may indicate the one or more first receiving beams. For example, the information c may include identifiers of the one or more first receiving beams. After receiving the information c, the second communication apparatus may determine the one or more first receiving beams based on the information c.

In another possible implementation, the second communication apparatus may determine one or more first receiving beams based on a receiving beam sweeping sequence of the second communication apparatus, and then the second communication apparatus may transmit information d to the first communication apparatus, where the information d may indicate the one or more first receiving beams. For example, the information d may include identifiers of the one or more first receiving beams. After receiving the information d, the first communication apparatus may determine the one or more first receiving beams based on the information d.

In still another possible implementation, both the first communication apparatus and the second communication apparatus may determine one or more first receiving beams based on the receiving beam sweeping sequence, and the one or more first receiving beams do not need to be indicated by using information.

The first receiving beam may be a $q^{th}$ receiving beam in a receiving beam sweeping sequence, where q is a positive integer. For example, q may have (one or more) predefined/preconfigured values, or q may have (one or more) values determined by the first communication apparatus and the second communication apparatus through negotiation. A source of the value of q is not limited in this embodiment of this application. It may be understood that, when q has different values, a plurality of first receiving beams may be obtained. For example, a quantity of receiving beams of the second communication apparatus is 4, and a receiving beam sweeping sequence is an Rx beam 0, an Rx beam 1, an Rx beam 2, and an Rx beam 3. When q is 1 and 3, two first receiving beams may be determined, namely the Rx beam 0 and the Rx beam 2.

The predefinition or preconfiguration in embodiments of this application may be understood as setting, presetting, predefining, storing, prestoring, pre-negotiation, storing as firmware, pre-burning, or the like.

S103: The first communication apparatus (for example, the base station or a part of the base station) transmits $T_1$ reference signals by using $T_1$ transmitting beams corresponding to the one or more first receiving beams, where one reference signal corresponds to one transmitting beam. The reference signal is used for beam measurement.

Correspondingly, the second communication apparatus (for example, the UE) receives the $T_1$ reference signals

by using the one or more first receiving beams.

S104: The second communication apparatus (for example, the UE) separately performs beam measurement on the received $T_1$ reference signals, to obtain $T_1$ beam measurement results. One beam measurement result corresponds to one transmitting and receiving beam pair.

In a possible implementation, after determining one or more first receiving beams, the first communication apparatus may determine, based on the determined correspondence between a transmitting beam and a receiving beam (for example, the tx-rx bitmap) and the one or more first receiving beams, $T_1$ transmitting beams corresponding to the one or more first receiving beams. One first receiving beam corresponds to one or more transmitting beams. The $T_1$ transmitting beams may be a set of transmitting beams corresponding to each first receiving beam. Some of a plurality of transmitting beams corresponding to different first receiving beams may be the same. Certainly, all of the plurality of transmitting beams corresponding to the different first receiving beams may be different. This is not limited in this embodiment of this application. For example, there are two first receiving beams, one first receiving beam corresponds to 16 transmitting beams, the other first receiving beam corresponds to 10 receiving beams, and five transmitting beams among transmitting beams corresponding to the two first receiving beams are the same. In this case, a total quantity of transmitting beams corresponding to the two first receiving beams is still 26, that is, $T_1$ is equal to 26. That is, $T_1$ is equal to a sum of quantities of transmitting beams corresponding to all first receiving beams.

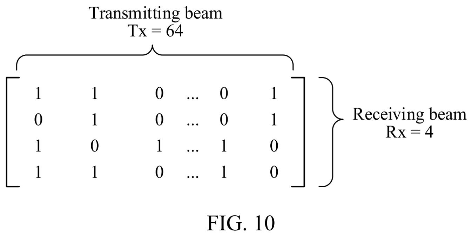

For example, FIG. 10 is a diagram of a correspondence between a transmitting beam and a receiving beam according to an embodiment of this application. The correspondence between a transmitting beam and a receiving beam is represented by using a tx-rx bitmap. As shown in FIG. 10, the tx-rx bitmap has four rows and 64 columns, each row corresponds to one receiving beam, and each column corresponds to one transmitting beam. In the tx-rx bitmap, a first row to a fourth row from top to bottom correspond to an Rx beam 0, an Rx beam 1, an Rx beam 2, and an Rx beam 3 respectively, and a first column to a $64^{th}$ column from left to right correspond to a Tx beam 0, a Tx beam 1, a Tx beam 2, ..., and a Tx beam 63 respectively.

It is assumed that the first receiving beam is the Rx beam 0. In this case, a transmitting beam corresponding to the Rx beam 0 is a transmitting beam corresponding to an element "1" in the first row of the tx-rx bitmap. It is assumed that there are 16 transmitting beams corresponding to the element "1" in the first row of the tx-rx bitmap, and the 16 transmitting beams are the Tx beam 0, the Tx beam 1, the Tx beam 3, the Tx beam 5, the Tx beam 6, the Tx beam 7, the Tx beam 9, the Tx beam 12, the Tx beam 18, the Tx beam 25, the Tx beam 26, the Tx beam 30, the Tx beam 40, the Tx beam 43, the Tx beam 55, and the Tx beam 63. In this case, $T_1$ is equal to 16, and the $T_1$ transmitting beams are transmitting beams corresponding to the Rx beam 0.

It is assumed that there are two first receiving beams, namely the Rx beam 0 and the Rx beam 3. In this case, a transmitting beam corresponding to the Rx beam 0 is a transmitting beam corresponding to the element "1" in the first row of the tx-rx bitmap, and a transmitting beam corresponding to the Rx beam 3 is a transmitting beam corresponding to an element "1" in the fourth row of the tx-rx bitmap. It is assumed that there are 16 transmitting beams corresponding to the element "1" in the first row of the tx-rx bitmap, and the 16 transmitting beams are the Tx beam 0, the Tx beam 1, the Tx beam 3, the Tx beam 5, the Tx beam 6, the Tx beam 7, the Tx beam 9, the Tx beam 12, the Tx beam 18, the Tx beam 25, the Tx beam 26, the Tx beam 30, the Tx beam 40, the Tx beam 43, the Tx beam 55, and the Tx beam 63. It is assumed that there are 10 transmitting beams corresponding to the element "1" in the fourth row of the tx-rx bitmap, and the 10 transmitting beams are the Tx beam 0, the Tx beam 1, the Tx beam 4, the Tx beam 5, the Tx beam 6, the Tx beam 8, the Tx beam 10, the Tx beam 12, the Tx beam 20, and the Tx beam 62. In this case, $T_1$ is equal to 26 (that is, 16 + 10), and $T_1$ transmitting beams are the transmitting beam corresponding to the Rx beam 0 and the transmitting beam corresponding to the Rx beam 3.

In a possible implementation, after determining the $T_1$ transmitting beams, the first communication apparatus may transmit first resource configuration information to the second communication apparatus. The first resource configuration information may include $T_1$ reference signal resources. Optionally, the first resource configuration information may further include a first receiving beam corresponding to each reference signal resource, that is, a specific first receiving beam used to receive a reference signal carried on each of the $T_1$ reference signal resources. Correspondingly, the second communication apparatus receives the first resource configuration information. In embodiments of this application, one reference signal resource may include one or more resource elements (resource elements, RE) or resource blocks (resource blocks, RB). One reference signal resource is used to carry one reference signal. The $T_1$ reference signal resources correspond to the $T_1$ transmitting beams, and one reference signal resource corresponds to one transmitting beam. In other words, in embodiments of this application, the first communication apparatus may maintain a correspondence between a reference signal resource and a transmitting beam.

Then, the first communication apparatus may transmit the $T_1$ reference signals on the $T_1$ reference signal resources by using the $T_1$ transmitting beams. For example, the reference signal may be an SSB or a CSI-RS. This is not limited in this embodiment of this application. One reference signal may correspond to one transmitting beam. That is, the first communication apparatus may transmit one reference signal on one reference signal resource by using one transmitting beam. Correspondingly, the second communication apparatus may receive the $T_1$ reference signals on the configured $T_1$ reference signal resources by using the one or more first receiving beams. Then, the second communication apparatus may separately perform beam measurement on the received $T_1$ reference signals, to obtain $T_1$ beam measurement results. For example, the beam measurement result may be RSRP. One beam measurement result corresponds to one transmitting and receiving beam pair.

For example, when there is only one first receiving beam, the $T_1$ transmitting beams are transmitting beams corresponding to the first receiving beam. The second communication apparatus may receive the $T_1$ reference signals on the configured $T_1$ reference signal resources by using the first receiving beam, and separately perform beam measurement to obtain the $T_1$ beam measurement results. For another example, when there are a plurality of first receiving beams, the $T_1$ transmitting beams are transmitting beams corresponding to the plurality of first receiving beams. The first resource configuration information may include $T_1$ reference signal resources and a first receiving beam corresponding to each reference signal resource (namely a specific first receiving beam used to receive a reference signal carried on each reference signal resource). The second communication apparatus receives a reference signal on the $T_1$ reference signal resources by using the corresponding first receiving beam, and performs beam measurement to obtain a beam measurement result.

In short, when there is only one first receiving beam, the first resource configuration information may not include the first receiving beam corresponding to each reference signal resource. Certainly, when there is only one first receiving beam, the first resource configuration information may alternatively include the first receiving beam corresponding to each reference signal resource. In this case, all the $T_1$ reference signal resources correspond to the first receiving beam.

S105: The second communication apparatus (for example, the UE) transmits a first CSI report, where the first CSI report includes the $T_1$ beam measurement results. The $T_1$ beam measurement results correspond to the one or more first receiving beams.

Correspondingly, the first communication apparatus (for example, the base station or a part of the base station) receives the first CSI report.

In a possible implementation, after obtaining a beam measurement result (for example, RSRP), the second communication apparatus may report the beam measurement result by using a CSI report. Correspondingly, the first communication apparatus may obtain (for example, receive) a CSI report from the second communication apparatus, or may obtain (receive) a CSI report from another communication apparatus. For example, the second communication apparatus may transmit a CSI report to another communication apparatus, and then the another communication apparatus transmits the CSI report to the first communication apparatus.

For example, one CSI report may carry one beam measurement result, and the $T_1$ beam measurement results may be reported by using $T_1$ CSI reports. For example, one CSI report may carry a plurality of beam measurement results. For example, if one CSI report carries (a plurality of) beam measurement results corresponding to one first receiving beam, the $T_1$ beam measurement results may be reported by using one or more CSI reports, where a quantity of CSI reports is the same as a quantity of first receiving beams. For another example, one CSI report carries the $T_1$ beam measurement results. This is not limited in this embodiment of this application.

It may be understood that the first CSI report may be one or more CSI reports. If the first CSI report is a plurality of CSI reports, the plurality of CSI reports include the $T_1$ beam measurement results in total.

In a possible implementation, the CSI report may include a resource indicator (resource indicator), a receiving beam indicator (Rx beam indicator, RBI), and a beam measurement result (for example, an RSRP value) corresponding to the receiving beam indicator. The resource indicator may be a resource index (resource index), and indicates a reference signal resource corresponding to the beam measurement result (for example, the RSRP value). Because the reference signal resource configured above is in one-to-one correspondence with the transmitting beam, a transmitting beam corresponding to the beam measurement result may be determined by using the resource indicator. The receiving beam indicator (RBI) may be an identifier of a receiving beam, and indicates a first receiving beam corresponding to the beam measurement result (for example, the RSRP value). In some scenarios, for example, when there is only one first receiving beam, and/or one CSI report carries (a plurality of) beam measurement results corresponding to one first receiving beam, the CSI report may not include the receiving beam indicator (RBI).

For example, it is assumed that there are p (p is a positive integer) first receiving beams, and an example in which one CSI report carries $T_1$ beam measurement results is used. In this case, a format of the CSI report may be shown in the following Table 2. In Table 2, k is an integer greater than or equal to 0. As shown in the following Table 2, RSRP #1 to RSRP #(t-1) correspond to a same first receiving beam, and RSRP #(t) and RSRP #(t+1) correspond to another first receiving beam.

Table 2

| CSI report number/CSI report number | CSI fields/CSI fields |
|---|---|
| CSI report #k | (resource indicator #1, RBI #1) |
| | (resource indicator #2, RBI #1) |

(continued)

| CSI report number/CSI report number | CSI fields/CSI fields |
|---|---|
| | ... |
| | (resource indicator #(t), RBI #2) |
| | (resource indicator #(t+1), RBI #2) |
| | ... |
| | (resource indicator #$T_1$, RBI #p) |
| | RSRP #1 |
| | RSRP #2 |
| | ... |
| | RSRP #(t) |
| | RSRP #(t+1) |
| | ... |
| | RSRP #$T_1$ |

In this embodiment of this application, the receiving beam indicator (RBI) is carried in the CSI report, so that a fed-back RSRP value can be mapped to a correct location in the tx-rx bitmap or a correct input location of the AI model. That is, in this embodiment of this application, the receiving beam indicator is added to the CSI report, so that a beam measurement result can be mapped to a correct beam pair, thereby facilitating a subsequent AI model-based transmitting and receiving beam pair prediction, and improving prediction accuracy.

S106: The first communication apparatus (for example, the base station or a part of the base station) transmits first information, where the first information is used to determine a to-be-swept second receiving beam set, the second receiving beam set is a subset of the receiving beams of the second communication apparatus, the first information is determined based on a first prediction result, and the first prediction result is a processing result of inputting the $T_1$ beam measurement results into a first artificial intelligence model to perform a transmitting and receiving beam pair prediction.

Correspondingly, the second communication apparatus (for example, the UE) receives the first information, and determines the to-be-swept second receiving beam set based on the first information. The second receiving beam set is a subset of the receiving beams of the second communication apparatus.

In a possible implementation, after obtaining the $T_1$ beam measurement results, the first communication apparatus may input the $T_1$ beam measurement results into the first artificial intelligence model to perform a transmitting and receiving beam pair prediction, to obtain the first prediction result. Alternatively, after obtaining the $T_1$ beam measurement results, the first communication apparatus may transmit the $T_1$ beam measurement results to a third communication apparatus (for example, a server or a cloud device). Then, the third communication apparatus may input the $T_1$ beam measurement results into the first artificial intelligence model to perform a transmitting and receiving beam pair prediction, to obtain the first prediction result. The third communication apparatus may further return the first prediction result to the first communication apparatus. In other words, the AI model-based transmitting and receiving beam pair prediction may be implemented by the first communication apparatus, and a prediction result is obtained; or the AI model-based transmitting and receiving beam pair prediction may be implemented by another communication apparatus, and the first communication apparatus is notified of a prediction result. This is not limited in this embodiment of this application.

The first prediction result may include a probability that each transmitting and receiving beam pair between the first communication apparatus and the second communication apparatus is an optimal transmitting and receiving beam pair. Alternatively, the first prediction result may include predicted beam quality (for example, an RSRP value) of each transmitting and receiving beam pair between the first communication apparatus and the second communication apparatus. It may be understood that a larger RSRP value of a transmitting and receiving beam pair indicates a higher probability that the transmitting and receiving beam pair is an optimal transmitting and receiving beam pair. On the contrary, a smaller RSRP value of a transmitting and receiving beam pair indicates a lower probability that the transmitting and receiving beam pair is an optimal transmitting and receiving beam pair.

For example, it is assumed that the base station has a total of 64 transmitting beams, the UE has 4 receiving beams, and the first receiving beam is the Rx beam 0. It is further assumed that there are 16 transmitting beams corresponding to the Rx beam 0 in the tx-rx bitmap, that is, $T_1$ is equal to 16. The base station sweeps the 16 transmitting beams corresponding to the Rx beam 0, and the UE performs receiving by using the receiving beam 0. The UE separately measures beam quality of the received 16 reference signals, to obtain 16 beam measurement results, for example,

RSRP$_1$, RSRP$_2$, ..., RSRP$_t$, ..., and RSRP$_{16}$. The UE feeds back the 16 beam measurement results to the base station by using a CSI report. The base station may map the 16 beam measurement results to specific locations in an input matrix (input matrix). A dimension of the input matrix may be the same as that of the tx-rx bitmap, namely 4-by-64 (4-by-64). It is assumed that the Rx beam 0 corresponds to the first row in the tx-rx bitmap. In this case, the base station may fill the 16 beam measurement results in locations that are in a first row of the input matrix and that align with locations of elements "1" in the first row of the tx-rx bitmap, and fill 0s in other locations. For example, the input matrix is shown as follows:

$$input \quad matrix_1 = \begin{bmatrix} RSRP_1 & RSRP_2 & 0 & 0... & 0 & 0 & RSRP_t... & 0 & 0 & RSRP_{16} \\ 0 & 0 & 0 & 0... & 0 & 0 & 0... & 0 & 0 & 0 \\ 0 & 0 & 0 & 0... & 0 & 0 & 0... & 0 & 0 & 0 \\ 0 & 0 & 0 & 0... & 0 & 0 & 0... & 0 & 0 & 0 \end{bmatrix} ....(2\text{-}1)$$

Because no RSRP feedback of the Rx beam 1, the Rx beam 2, and the Rx beam 3 is received, all elements in last three rows of the input matrix are 0.

Alternatively, the input matrix may be a result obtained by performing vectorization. For example, a 4-by-64 input matrix is vectorized into a 1-by-N (1-by-N) input matrix. N is equal to a quantity of elements "1" in the tx-rx bitmap, that is, N = sum {tx-rx bitmap == 1}, and N is a positive integer not greater than 256, where sum indicates a summation operation. For example, an input matrix obtained by performing vectorization is shown as follows:

$$input \quad matrix_1 = \begin{bmatrix} RSRP_1 & RSRP_2 & ... & RSRP_{16} & 0 & 0 & 0 & ... & 0 & 0 \end{bmatrix} ............... (2\text{-}2)$$

It may be understood that, in this embodiment of this application, a specific form of the input matrix depends on a training manner of the first artificial intelligence model. If the dimension of the input matrix during training of the first artificial intelligence model is 4-by-64, the dimension of the input matrix during inference is also 4-by-64. If the dimension of the input matrix during training of the first artificial intelligence model is 1-by-N, the dimension of the input matrix during inference is also 1-by-N. That is, the input matrix remains consistent in a training and inference process of the first artificial intelligence model.

Then, the base station may input the input matrix (namely an input matrix$_1$) into the first artificial intelligence model to perform a transmitting and receiving beam pair prediction, to obtain a prediction result. The prediction result may include a probability that each transmitting and receiving beam pair between the base station and the UE is an optimal transmitting and receiving beam pair.

In a possible implementation, after obtaining the first prediction result, the first communication apparatus may determine the first information based on the first prediction result. The first information may be used to determine the to-be-swept second receiving beam set. Then, the first communication apparatus may transmit the first information. Correspondingly, the second communication apparatus receives the first information, and may determine the to-be-swept second receiving beam set based on the first information. The second receiving beam set may be a subset of the receiving beams of the second communication apparatus. The second receiving beam set includes one or more receiving beams corresponding to top-K probabilities that are sorted in descending order of probabilities in the first prediction result. K is a positive integer.

For example, it is assumed that K is equal to 8, and identifiers (IDs) of first 8 (top-8) beam pairs sorted in descending order of probabilities in the first prediction result are {5, 88, 192, 45, 222, 255, 30, 90}. In this case, corresponding receiving beam IDs {0, 1, 3, 0, 3, 3, 0, 1} may be obtained based on the IDs of the top-8 beam pairs, and it may be determined that a likelihood ranking of the receiving beams of the UE becoming optimal receiving beams is the Rx beam 0 = the Rx beam 3 > the Rx beam 1 > the Rx beam 2. Alternatively, likelihoods that the receiving beams of the UE become optimal receiving beams may be sorted by using the probability (probability) in the first prediction result. Then, the base station may select, based on a predefined rule, the to-be-swept second receiving beam set from the receiving beam IDs ({0, 1, 3, 0, 3, 3, 0, 1}) corresponding to the top-8 beam pairs. An example in which the predefined rule is a receiving beam with a largest quantity of occurrences is used. In this case, the second receiving beam set may include the Rx beam 0 and the Rx beam 3. Optionally, the second receiving beam set may include at least one receiving beam other than all first receiving beams in the receiving beams that meet the predefined rule in the top-8 beam pairs. It is assumed that the first receiving beam is the Rx beam 0. In this case, the second receiving beam set includes the Rx beam 3. Certainly, the predefined rule may alternatively be other content, for example, a receiving beam with a largest proportion of occurrences, or a receiving beam with a probability value greater than a preset threshold.

It may be understood that, if the likelihoods that the receiving beams of the UE become the optimal receiving beams are the same, for example, each receiving beam in the top-8 beam pairs occurs twice, a case in which the second receiving beam set cannot be screened may occur. In this case, a fallback to the conventional technology may be enabled, for example, the AI-based beam pair prediction described above. That is, RSRP of beam pairs corresponding to all elements "1" in the tx-rx bitmap is collected and then input into the AI model to perform a prediction.

In a possible implementation, the first information may include one or more of the following: the first prediction result or the second receiving beam set. Alternatively, the first information may indicate whether sweeping is recommended for each receiving beam of the second communication apparatus. In this case, the second receiving beam set includes a receiving beam for which sweeping is recommended and that is indicated by the first information.

When the first information includes the first prediction result, after obtaining the first prediction result, the second communication apparatus may determine the to-be-swept second receiving beam set. A specific determining manner is the same as a manner in which the first communication apparatus determines the second receiving beam set. In some scenarios, after obtaining the to-be-swept second receiving beam set, the first communication apparatus may directly notify the to-be-swept second receiving beam set, for example, include the second receiving beam set in the first information, or may indirectly notify the to-be-swept second receiving beam set. For example, in the case of indirect notification, the first communication apparatus may notify the second communication apparatus of a receiving beam for which sweeping is not recommended (or not needed), and the to-be-swept second receiving beam set is receiving beams other than the receiving beam for which sweeping is not recommended (or not needed) in the receiving beams of the second communication apparatus.

Certainly, the first communication apparatus may alternatively notify the second communication apparatus of both a to-be-swept receiving beam and a receiving beam that does not need to be swept. For example, the first information may be recommendation information, and is represented by using a group of 0 and 1, where 0 indicates that a probability that a receiving beam corresponding to the location is an optimal receiving beam is extremely low, or sweeping is not recommended for the receiving beam corresponding to the location, and 1 indicates that sweeping is recommended for the receiving beam corresponding to the location. For example, the second receiving beam set includes the Rx beam 0 and the Rx beam 3, and a vector expression of the first information may be as follows:

$$\begin{bmatrix} 1 \\ 0 \\ 0 \\ 1 \end{bmatrix} \qquad\qquad\qquad\qquad\qquad\qquad\qquad\qquad\qquad\qquad\qquad\qquad\qquad (2\text{-}3)$$

A first row corresponds to the Rx beam 0, a second row corresponds to the Rx beam 1, a third row corresponds to the Rx beam 2, and a fourth row corresponds to the Rx beam 3.

In a possible implementation, the first information may further include an identifier of the first CSI report (a CSI report ID). An optimal beam ID at a feedback moment may not correspond to that at an implementation moment due to a factor such as UE flipping or a blockage. Therefore, in this embodiment of this application, the identifier of the first CSI report is carried in the first information, so that the UE performs beam modulation with reference to the identifier of the first CSI report and a current flipping status.

In a possible implementation, if a receiving beam included in the second receiving beam set is the same as all the foregoing first receiving beams, it indicates that receiving beams in the second receiving beam set have been swept once. In this case, the first communication apparatus and the second communication apparatus may perform a second round of beam pair sweeping on the top-K beam pairs. For a specific sweeping manner, refer to the conventional technology. Details are not described herein. For example, it is assumed that the first receiving beam is the Rx beam 0, and the second receiving beam set includes one receiving beam that is also the Rx beam 0. In this case, the first communication apparatus and the second communication apparatus may sweep top-K beam pairs, for example, {5, 88, 192, 45, 222, 255, 30, 90}, to determine an optimal transmitting and receiving beam pair.

In a possible implementation, after the second communication apparatus determines the to-be-swept second receiving beam set, the information exchange method shown in FIG. 9 may further include: The second communication apparatus transmits third information to the first communication apparatus. The third information may indicate whether the second communication apparatus agrees to sweep the receiving beam in the second receiving beam set. The second receiving beam set may include the foregoing first receiving beam, or may not include any one of the foregoing first receiving beams. This is not limited in this embodiment of this application. If the third information fed back by the second communication apparatus indicates that the second communication apparatus does not agree to sweep the receiving beam in the second receiving beam set, the first communication apparatus and the second communication apparatus may fall back to the conventional technology, for example, the AI-based beam pair prediction described above. That is, RSRP of beam pairs corresponding to all elements "1" in a tx-rx bitmap is collected and then input into an AI model to perform a prediction. It may be understood that, because the transmitting end and the receiving end have aligned the receiving beam sweeping sequence, after a fallback to the conventional technology is enabled, sweeping may be performed based on the foregoing aligned receiving beam sweeping sequence.

If the third information fed back by the second communication apparatus indicates that the second communication apparatus agrees to sweep the receiving beam in the second receiving beam set, the information exchange method shown in FIG. 9 may further include one or more of the following steps.

S107: The first communication apparatus (for example, the base station or a part of the base station) transmits $T_2$ reference signals by using $T_2$ transmitting beams corresponding to the receiving beams in the second receiving beam set.

Correspondingly, the second communication apparatus (for example, the UE) receives the $T_2$ reference signals by using the receiving beams in the second receiving beam set.

S108: The second communication apparatus (for example, the UE) separately performs beam measurement on the received $T_2$ reference signals, to obtain $T_2$ beam measurement results. One beam measurement result corresponds to one transmitting and receiving beam pair.

In a possible implementation, after obtaining the second receiving beam set, the first communication apparatus may determine, based on one or more receiving beams in the second receiving beam set and the foregoing determined correspondence between a transmitting beam and a receiving beam (for example, the tx-rx bitmap), transmitting beams corresponding to all receiving beams in the second receiving beam set. One receiving beam corresponds to one or more transmitting beams. The receiving beams in the second receiving beam set correspond to a total of $T_2$ transmitting beams. It may be understood that, for a manner of determining the $T_2$ transmitting beams corresponding to the receiving beams in the second receiving beam set, refer to the foregoing manner of determining the $T_1$ transmitting beams corresponding to the one or more first receiving beams. Details are not described herein again.

In a possible implementation, after determining the $T_2$ transmitting beams, the first communication apparatus may transmit second resource configuration information to the second communication apparatus. The second resource configuration information may include $T_2$ reference signal resources. Optionally, the second resource configuration information may further include a receiving beam corresponding to each reference signal resource, that is, a specific receiving beam used to receive a reference signal carried on each of the $T_2$ reference signal resources. Correspondingly, the second communication apparatus receives the second resource configuration information. One reference signal resource is used to carry one reference signal. The $T_2$ reference signal resources correspond to the $T_2$ transmitting beams, and one reference signal resource corresponds to one transmitting beam.

Then, the first communication apparatus may transmit the $T_2$ reference signals on the $T_2$ reference signal resources by using the $T_2$ transmitting beams. For example, the reference signal may be an SSB or a CSI-RS. One reference signal may correspond to one transmitting beam. That is, the first communication apparatus may transmit one reference signal on one reference signal resource by using one transmitting beam. Correspondingly, the second communication apparatus may receive the $T_2$ reference signals on the configured $T_2$ reference signal resources by using the receiving beams in the second receiving beam set. Then, the second communication apparatus may separately perform beam measurement on the received $T_2$ reference signals, to obtain $T_2$ beam measurement results. For example, the beam measurement result may be RSRP. One beam measurement result corresponds to one transmitting and receiving beam pair.

For example, when there is only one receiving beam in the second receiving beam set, the second resource configuration information may not include the receiving beam corresponding to each reference signal resource, or certainly may include the first receiving beam corresponding to each reference signal resource. In this case, all the $T_2$ reference signal resources correspond to the receiving beam.

S109: The second communication apparatus (for example, the UE) transmits a second CSI report, where the second CSI report includes the $T_2$ beam measurement results. The $T_2$ beam measurement results correspond to the receiving beams in the second receiving beam set.

Correspondingly, the first communication apparatus (for example, the base station or a part of the base station) receives the second CSI report.

In a possible implementation, for an implementation of step S109 in this embodiment of this application, refer to the implementation of step S105. Details are not described herein again.

S110: The first communication apparatus (for example, the base station or a part of the base station) transmits second information, where the second information is used to determine a to-be-swept third receiving beam set, the third receiving beam set includes at least one receiving beam of the second communication apparatus, the second information is determined based on a second prediction result, and the second prediction result is a processing result of inputting the $T_2$ beam measurement results and the $T_1$ beam measurement results into the first artificial intelligence model to perform a transmitting and receiving beam pair prediction.

Correspondingly, the second communication apparatus (for example, the UE) receives the second information, and determines the to-be-swept third receiving beam set based on the second information. The third receiving beam set includes at least one receiving beam of the second communication apparatus.

In a possible implementation, after obtaining the $T_2$ beam measurement results, the first communication apparatus may input the $T_2$ beam measurement results and the $T_1$ beam measurement results into the first artificial intelligence model to perform a transmitting and receiving beam pair prediction, to obtain the second prediction result. Alternatively, after obtaining the $T_2$ beam measurement results, the first communication apparatus may transmit the $T_2$ beam measurement results and the $T_1$ beam measurement results to the third communication apparatus (for example, the server or the cloud device). Then, the third communication apparatus inputs the $T_2$ beam measurement results and the $T_1$ beam measurement results into the first artificial intelligence model to perform a transmitting and receiving beam pair prediction, to obtain the second prediction result. The third communication apparatus may further return the second prediction result to the first communication apparatus. In other words, the AI model-based transmitting and receiving beam pair prediction may be implemented by the first communication apparatus, and a prediction result is obtained; or the AI model-based transmitting and receiving beam pair prediction may be implemented by another communication apparatus, and the first communication apparatus is notified of a prediction result. This is not limited in this embodiment of this application.

The second prediction result may include a probability that each transmitting and receiving beam pair between the first communication apparatus and the second communication apparatus is an optimal transmitting and receiving beam pair. Alternatively, the second prediction result may include predicted beam quality (for example, an RSRP value) of each transmitting and receiving beam pair between the first communication apparatus and the second communication apparatus. It may be understood that a larger RSRP value of a transmitting and receiving beam pair indicates a higher probability that the transmitting and receiving beam pair is an optimal transmitting and receiving beam pair. On the contrary, a smaller RSRP value of a transmitting and receiving beam pair indicates a lower probability that the transmitting and receiving beam pair is an optimal transmitting and receiving beam pair.

It may be understood that, when the second receiving beam set includes all the foregoing first receiving beams, all the foregoing first receiving beams are swept again in step S107 and step S108. $T_2$ is greater than or equal to $T_1$. In this case, there is no need to use the $T_1$ beam measurement results to perform a prediction. Instead, the $T_2$ beam measurement results may be input into the first artificial intelligence model to perform a transmitting and receiving beam pair prediction, to obtain the second prediction result.

In this embodiment of this application, considering that beam quality (RSRP) obtained through measurement at different times is different, latest RSRP of some receiving beams is used to perform a prediction, so that accuracy can be improved.

It may be understood that, when the second receiving beam set includes some of the foregoing first receiving beams, the $T_2$ beam measurement results and some of the $T_1$ beam measurement results may be input into the first artificial intelligence model to perform a transmitting and receiving beam pair prediction, to obtain the second prediction result. It may be further understood that, if the second receiving beam set does not include any one of the foregoing first receiving beams, the $T_2$ beam measurement results and the $T_1$ beam measurement results are input into the first artificial intelligence model to perform a transmitting and receiving beam pair prediction.

For example, it is assumed that the base station has a total of 64 transmitting beams, the UE has 4 receiving beams, and the first receiving beam is the Rx beam 0. It is further assumed that there are 16 transmitting beams corresponding to the Rx beam 0 in the tx-rx bitmap, that is, $T_1$ is equal to 16. The $T_1$ (equal to 16) beam measurement results are $RSRP_1$, $RSRP_2$, ..., $RSRP_t$, ..., and $RSRP_{16}$. It is further assumed that the second receiving beam set includes two receiving beams, namely the Rx beam 0 and the Rx beam 3, and there are 10 transmitting beams corresponding to the Rx beam 3 in the tx-rx bitmap. That is, $T_2$ is equal to 26 (16 + 10). When the base station sweeps the 16 transmitting beams corresponding to the Rx beam 0, the UE performs receiving by using the receiving beam 0. The UE separately measures beam quality of the received 16 reference signals, to obtain 16 beam measurement results, for example, $RSRP'_1$, $RSRP'_2$, ..., $RSRP'_t$, ..., and $RSRP'_{16}$, and feeds back the beam measurement results to the base station by using a CSI report. It may be understood that the 16 beam measurement results $RSRP'_1$, $RSRP'_2$, ..., $RSRP'_t$, ..., and $RSRP'_{16}$ correspond to the Rx beam 0. When the base station sweeps the 10 transmitting beams corresponding to the Rx beam 3, the UE performs receiving by using the receiving beam 3. The UE separately measures beam quality of the received 10 reference signals, to obtain 10 beam measurement results, for example, $RSRP_{17}$, $RSRP_{18}$, ..., $RSRP_{t+16}$, ..., and $RSRP_{26}$, and feeds back the beam measurement results to the base station by using a CSI report. It may be understood that the 10 beam measurement results $RSRP_{17}$, $RSRP_{18}$, ..., $RSRP_{t+16}$, ..., and $RSRP_{26}$ correspond to the Rx beam 3. The base station may map the 26 beam measurement results to specific locations in an input matrix (input matrix). For a specific mapping manner, refer to related descriptions in step S106. For example, if the Rx beam 0 corresponds to the first row in the tx-rx bitmap, the base station may fill first 16 beam measurement results of the 26 beam measurement results in locations that are in a first row of the input matrix and that align with locations of the elements "1" in the first row of the tx-rx bitmap, and fill 0s in other locations. If the Rx beam 3 corresponds to the fourth row in the tx-rx bitmap, the base station may fill last 10 beam measurement results of the 26 beam measurement results in locations that are in a fourth row of the input matrix and that align with locations of the elements "1" in the first row of the tx-rx bitmap, and fill 0s in other locations. For example, the input matrix is shown as follows:

$$input\ matrix_2 = \begin{bmatrix} RSRP'_1 & RSRP'_2 & 0 & 0 & ... & 0 & 0 & RSRP'_t & ... & 0 & 0 & RSRP'_{16} \\ 0 & 0 & 0 & 0 & ... & 0 & 0 & 0 & ... & 0 & 0 & 0 \\ 0 & 0 & 0 & 0 & ... & 0 & 0 & 0 & ... & 0 & 0 & 0 \\ RSRP_{17} & RSRP_{18} & ... & 0 & 0 & ... & RSRP_{t+16} & ... & 0 & ... & RSRP_{26} & 0 \end{bmatrix}$$

$$(2\text{-}4)$$

Because no RSRP feedback of the Rx beam 1 and the Rx beam 2 is received, all elements in a second row and a third row of the input matrix are 0.

For another example, it is assumed that the base station has a total of 64 transmitting beams, the UE has 4 receiving beams, and the first receiving beam is the Rx beam 0. It is further assumed that there are 16 transmitting beams corresponding to the Rx beam 0 in the tx-rx bitmap, that is, $T_1$ is equal to 16. The $T_1$ (equal to 16) beam measurement results are $RSRP_1$, $RSRP_2$, ..., $RSRP_t$, ..., and $RSRP_{16}$. It is further assumed that the second receiving beam set includes one receiving beam, namely the Rx beam 3, and there are 10 transmitting beams corresponding to the Rx beam 3 in the tx-rx bitmap. That is, $T_2$ is equal to 10. The base station sweeps the 10 transmitting beams corresponding to the Rx beam 3, and the UE performs receiving by using the receiving beam 3. The UE separately measures beam quality of the received 10 reference signals, to obtain 10 beam measurement results, for example, $RSRP_1^3$, $RSRP_2^3$, ..., $RSRP_t^3$, ..., and $RSRP_{10}^3$. The UE feeds back the 10 beam measurement results to the base station by using a CSI report. The base station may map the 10 beam measurement results corresponding to the Rx beam 3 to specific locations in the input matrix (namely the input matrix$_1$), to obtain a new input matrix (input matrix$_2$). Alternatively, the base station may map the 10 beam measurement results corresponding to the Rx beam 3 and the $T_1$ beam measurement results to specific locations in the input matrix. For a specific mapping manner, refer to the foregoing descriptions. Details are not described herein again. For example, the input matrix is shown as follows:

$$input\ matrix_2 = \begin{bmatrix} RSRP_1 & RSRP_2 & 0 & 0 & ... & 0 & 0 & RSRP_t & ... & 0 & 0 & RSRP_{16} \\ 0 & 0 & 0 & 0 & ... & 0 & 0 & 0 & ... & 0 & 0 & 0 \\ 0 & 0 & 0 & 0 & ... & 0 & 0 & 0 & ... & 0 & 0 & 0 \\ RSRP_1^3 & RSRP_2^3 & ... & 0 & 0 & ... & RSRP_t^3 & ... & 0 & ... & RSRP_{10}^3 & 0 \end{bmatrix}$$

$$(2\text{-}5)$$

Because no RSRP feedback of the Rx beam 1 and the Rx beam 2 is received, all the elements in the second row and the third row of the input matrix are 0.

For another example, it is assumed that the base station has a total of 64 transmitting beams, the UE has 4 receiving beams, and there are 2 first receiving beams, namely the Rx beam 0 and the Rx beam 1. It is further assumed that, in the tx-rx bitmap, there are 16 transmitting beams corresponding to the Rx beam 0, and there are also 16 transmitting beams corresponding to the Rx beam 1. In this case, $T_1$ is equal to 32 (16 + 16). It is assumed that the $T_1$ (equal to 32) beam measurement results are $RSRP_1$, $RSRP_2$, ..., $RSRP_t$, ..., and $RSRP_{32}$. It is further assumed that the second receiving beam set includes two receiving beams, namely the Rx beam 0 and the Rx beam 3, and there are 10 transmitting beams corresponding to the Rx beam 3 in the tx-rx bitmap. That is, $T_2$ is equal to 26 (16 + 10). When the base station sweeps the 16 transmitting beams corresponding to the Rx beam 0, the UE performs receiving by using the receiving beam 0. The UE separately measures beam quality of the received 16 reference signals, to obtain 16 beam measurement results, for example, $RSRP'_1$, $RSRP'_2$, ..., $RSRP'_t$, ..., and $RSRP'_{16}$, and feeds back the beam measurement results to the base station by using a CSI report. When the base station sweeps the 10 transmitting beams corresponding to the Rx beam 3, the UE performs receiving by using the receiving beam 3. The UE separately measures beam quality of the received 10 reference signals, to obtain 10 beam measurement results, for example, $RSRP_{17}^3$, $RSRP_{18}^3$, ..., $RSRP_{t+16}^3$, ..., and $RSRP_{26}^3$, and feeds back the beam measurement results to the base station by using a CSI report. The base station may map the $T_2$ (equal to 26) beam measurement results and last 16 beam measurement results (namely 16 RSRP values corresponding to the Rx beam 1) of the $T_1$ (equal to 32) beam measurement results to specific locations in the input matrix (input matrix). For a specific mapping manner, refer to the foregoing descriptions. For example, the input matrix is shown as follows:

$$input\ matrix_2 = \begin{bmatrix} RSRP_1' & RSRP_2' & 0 & 0 & ... & 0 & 0 & RSRP_t' & ... & 0 & 0 & RSRP_{16}' \\ RSRP_{17} & RSRP_{18} & 0 & 0 & ... & RSRP_{t+16} & ... & 0 & ... & RSRP_{32} & 0 & 0 \\ 0 & 0 & 0 & 0 & ... & 0 & 0 & 0 & ... & 0 & 0 & 0 \\ RSRP_{17}^3 & RSRP_{18}^3 & ... & 0 & 0 & ... & RSRP_{t+16}^3 & ... & 0 & ... & RSRP_{26}^3 & 0 \end{bmatrix}$$

$$(2\text{-}6)$$

Because no RSRP feedback of the Rx beam 2 is received, all the elements in the third row of the input matrix are 0.

In a possible implementation, the input matrix (namely the input matrix$_2$) may alternatively be a result obtained by performing vectorization. For a vectorizing manner, refer to related descriptions in step S106. Details are not described herein again.

Then, the base station may input the input matrix (namely the input matrix$_2$) into the first artificial intelligence model to perform a transmitting and receiving beam pair prediction, to obtain a prediction result. The prediction result may include a probability that each transmitting and receiving beam pair between the base station and the UE is an optimal transmitting and receiving beam pair.

It may be understood that, in this embodiment of this application, a same artificial intelligence model is used for both predictions. A possible simplified training procedure of an artificial intelligence model is as follows: (1) Collect training data, sweep all beam pairs between a base station and UE, the base station collects, based on feedback from the UE, RSRP corresponding to an element "1" in a tx-rx bitmap, and the UE measures and feeds back an ID of a beam pair corresponding to maximum RSRP in all beam pairs, where the ID is used as a label (label). It is assumed that each row in the tx-rx bitmap has 64 elements, where 16 elements are "1", and remaining elements are 0. In this case, the tx-rx bitmap corresponds to $4 \times 16$ RSRP values, or the $4 \times 16$ RSRP values may be reshaped (reshape) into a $1 \times 64$ input, to accommodate a case in which a quantity of elements "1" in each row in the tx-rx bitmap is different. (2) Initialize a model (the model may be constructed based on a CNN, a DNN, a multilayer perceptron (multilayer perceptron, MLP), a transformer, and the like), where an input dimension of the model is 1-by-64 or 4-by-64, an output dimension of the model is 1-by-256, and a loss function may be a cross entropy (cross entropy loss). (3) For each tx-rx bitmap, perform a zero-masking (mask) operation on an input based on various combinations of row vectors in the tx-rx bitmap, where training needs to be performed corresponding to a same label. (4) Complete training based on a collected training data set, to obtain the first artificial intelligence model. In addition, based on the model (model) obtained through training, regardless of whether the UE agrees or does not agree to sweep the receiving beam in the second receiving beam set after receiving the first information, the first artificial intelligence model may be used to perform inference (inference). That is, a fallback to the conventional technology (for example, the AI-based beam pair prediction described above) still allows for using the first artificial intelligence model to perform inference.

In a possible implementation, after obtaining the second prediction result, the first communication apparatus may determine the second information based on the second prediction result. The second information may be used to determine the to-be-swept third receiving beam set. Then, the first communication apparatus may transmit the second information. Correspondingly, the second communication apparatus receives the second information, and may determine the to-be-swept third receiving beam set based on the second information. The third receiving beam set includes at least one receiving beam of the second communication apparatus. The third receiving beam set includes receiving beams corresponding to top-K probabilities that are sorted in descending order of probabilities in the second prediction result.

In a possible implementation, the second information may include one or more of the second prediction result or the third receiving beam set.

In a possible implementation, after step S110, the information exchange method shown in FIG. 9 may further include: top-K beam pair sweeping. After obtaining top-K beam pairs, the first communication apparatus configures K reference signal resources for the second communication apparatus to carry K reference signals. The first communication apparatus polls a transmitting beam in the K beam pairs, and the UE performs receiving on a corresponding reference signal resource by using a corresponding receiving beam in the K beam pairs. The second communication apparatus obtains RSRP based on a received reference signal, then finds a reference signal resource index corresponding to maximum RSRP, and feeds back the reference signal resource index to the first communication apparatus. The first communication apparatus determines an optimal transmitting beam based on a correspondence that is between a reference signal resource and a transmitting beam and that is maintained by the first communication apparatus. For specific implementation of top-K beam pair sweeping, refer to the conventional technology. Details are not described herein.

In this embodiment of this application, some receiving beams are swept, a probability that all transmitting and receiving beam pairs are optimal transmitting and receiving beam pairs is predicted based on RSRP of these receiving beams, and then a second round of top-K beam pair sweeping is performed, to obtain the optimal transmitting and receiving beam pair. There is no need to poll all receiving beams, thereby reducing a quantity of beam sweeping times, reducing an amount of feedback or a quantity of beam measurement times, and reducing overheads. In addition, this embodiment of this application has minimal impact on prediction accuracy.

To describe technical effects of this embodiment of this application, the following reflects impact of this embodiment of this application on prediction accuracy and feedback/measurement overheads by using a simulation result.

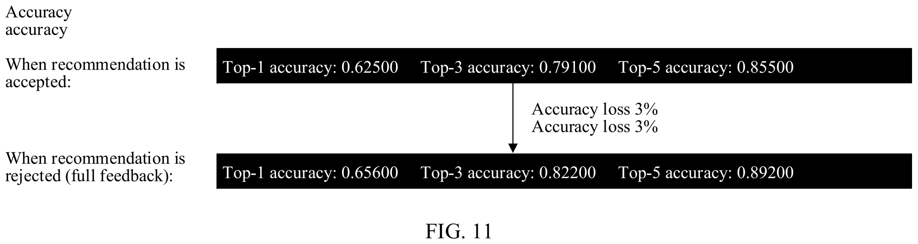

FIG. 11 is a diagram of a comparison between prediction accuracy according to an embodiment of this application. As shown in FIG. 11, when recommendation is accepted (that is, upon agreeing to sweep the receiving beam in the second receiving beam set), the prediction accuracy is 0.62500% when K is equal to 1 (that is, top-1), the prediction accuracy is 0.79100% when K is equal to 3 (that is, top-3), and the prediction accuracy is 0.85500% when K is equal to 5 (that is, top-5). When recommendation is rejected (that is, upon not agreeing to sweep the receiving beam in the second receiving beam set), a fallback to the conventional technology is enabled, and the UE needs to feed back RSRP corresponding to all the elements "1" in the tx-rx bitmap. The prediction accuracy is 0.62600% when K is equal to 1 (that is, top-1), the prediction accuracy is 0.82200% when K is equal to 3 (that is, top-3), and the prediction accuracy is 0.89200% when K is equal to 5 (that is, top-5). Therefore, when K is set to 3, an accuracy (accuracy) loss resulting from accepting recommendation is approximately 3% compared with rejecting recommendation.

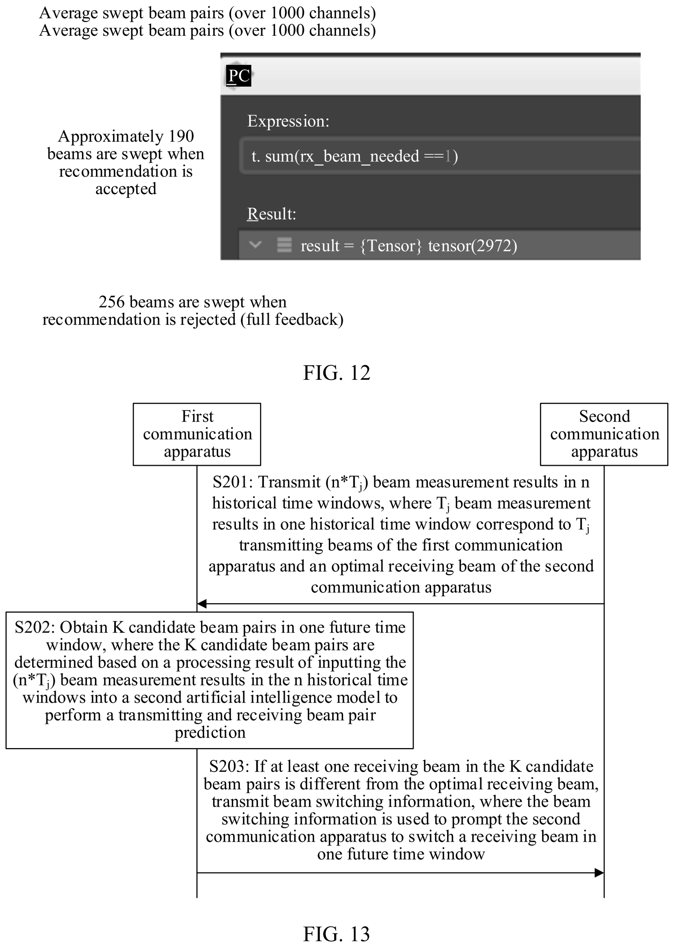

FIG. 12 is a diagram of a comparison between quantities of beams that need to be swept according to an embodiment of this application. As shown in FIG. 12, after at least 1000 channels are simulated, accepting recommendation may reduce 25% feedback/measurement overheads on compared with rejecting recommendation. For each channel, when the recommendation is accepted, the method provided in this embodiment of this application is used to search for an optimal transmitting and receiving beam pair.

In this application, the symbol "%" represents a percentage.

Therefore, in this embodiment of this application, a quantity of beam sweeping times is reduced, an amount of UE feedback or a quantity of beam measurement times is reduced, and overheads are reduced, while the accuracy loss is slight.

Embodiment 2

Embodiment 2 of this application is mainly for application in time domain beam management, and may be implemented after a radio resource control (radio resource control, RRC) connection has been established. For example, Embodiment 2 is applied to a beam tracking phase. That is, before Embodiment 2 of this application, a transmitting end and a receiving end have found an optimal beam pair.

In a possible implementation, Embodiment 2 of this application may be separately implemented, or may be implemented in combination with Embodiment 1. It may be understood that Embodiment 1 is used to search for an optimal beam pair before the RRC connection is established. Therefore, when Embodiment 2 of this application is implemented in combination with Embodiment 1, Embodiment 2 of this application is performed after Embodiment 1, and an AI model used in Embodiment 2 of this application is different from the AI model used in Embodiment 1.

It may be understood that the AI models used in embodiments of this application are trained in advance to implement a function. The AI models used in embodiments of this application may be obtained through training in a manner such as but not limited to supervised learning, unsupervised learning, or reinforcement learning. A training manner of the AI model is not limited in this application.

FIG. 13 is another schematic flowchart of an information exchange method according to an embodiment of this application. The method mainly describes how an AI-based beam prediction is performed by using a measurement value (for example, RSRP) obtained from beam sweeping performed by a moving target at a past moment, to predict an optimal beam at a future moment, so that a change of a receiving beam can be predicted in advance in a scenario in which quick beam switching is required, to reduce a switching delay.

As shown in FIG. 13, the information exchange method includes but is not limited to the following steps.

S201: A second communication apparatus (for example, UE) transmits ($n*T_j$) beam measurement results in n historical time windows, where $T_j$ beam measurement results in one historical time window correspond to $T_j$ transmitting beams of a first communication apparatus and an optimal receiving beam of the second communication apparatus. Both n and $T_j$ are positive integers.

Correspondingly, the first communication apparatus (for example, a base station or a part of the base station) receives the ($n*T_j$) beam measurement results in the n historical time windows.

In a possible implementation, after an RRC connection is established between the first communication apparatus and the second communication apparatus, the first communication apparatus and the second communication apparatus may communicate with each other by using an optimal transmitting and receiving beam pair. In addition, the first communication apparatus may configure $T_j$ reference signal resources in each time window. The $T_j$ reference signal resources correspond to the $T_j$ transmitting beams of the first communication apparatus, and one reference signal resource corresponds to one transmitting beam. One reference signal resource is used to carry one reference signal. The $T_j$ transmitting beams of the first communication apparatus may be transmitting beams corresponding to an optimal receiving beam in a correspondence between a transmitting beam and a receiving beam (represented by using a tx-rx bitmap). For example, as shown in FIG. 10, a dimension of the tx-rx bitmap is $4 \times 64$, each row corresponds to one receiving beam, and each column corresponds to one transmitting beam. It is assumed that the optimal receiving beam of the second communication apparatus is an Rx beam 3. In this case, the $T_j$ transmitting beams are transmitting beams corresponding to an element "1" in a fourth row of the tx-rx bitmap.

Then, the first communication apparatus performs the following operation in each time window: transmitting the $T_j$ reference signals on the $T_j$ reference signal resources by using the $T_j$ transmitting beams. Correspondingly, the second communication apparatus performs the following operation in each time window: receiving the $T_j$ reference signals on the configured $T_j$ reference signal resources by using the optimal receiving beam, and separately performing beam measurement on the $T_j$ reference signals, to obtain $T_j$ beam measurement results. For example, the reference signal may be an SSB or a CSI-RS, and the beam measurement result may be RSRP. One beam measurement result may correspond to one transmitting and receiving beam pair.

In a possible implementation, there may be a time gap (gap) between adjacent time windows in this embodiment of this application. The time gap may be used to report a beam measurement result and perform a prediction process in this embodiment of this application.

In a possible implementation, the second communication apparatus transmits (a total of $n*T_j$) beam measurement results in n historical time windows to the first communication apparatus. Correspondingly, the first communication apparatus receives beam measurement results in the n historical time windows. For example, these beam measurement results may be carried in a CSI report. Both n and $T_j$ are positive integers. n may be a predefined value, or may be a value determined by the transmitting end and the receiving end through negotiation, or may be a value configured by the first communication apparatus. This is not limited in this embodiment of this application. The $T_j$ beam measurement results in one historical time window correspond to the $T_j$ transmitting beams and the optimal receiving beam.

S202: The first communication apparatus (for example, the base station or a part of the base station) obtains K candidate beam pairs in one future time window, where the K candidate beam pairs are determined based on a processing result of inputting the ($n*T_j$) beam measurement results in the n historical time windows into a second artificial intelligence model to perform a transmitting and receiving beam pair prediction.

In a possible implementation, after obtaining the ($n*T_j$) beam measurement results in the n historical time windows, the first communication apparatus may input the ($n*T_j$) beam measurement results into the second artificial intelligence model to perform a transmitting and receiving beam pair prediction, to obtain prediction results for future m time windows. Alternatively, the first communication apparatus transmits the ($n*T_j$) beam measurement results to a third communication apparatus (for example, a server or a cloud device). Then, the third communication apparatus inputs the ($n*T_j$) beam measurement results into the second artificial intelligence model to perform a transmitting and receiving beam pair prediction, to obtain prediction results for future m time windows. The third communication apparatus may further return the prediction results for the future m time windows to the first communication apparatus. For example, a prediction result for one future time window may include a probability that each transmitting and receiving beam pair between the first communication apparatus and the second communication apparatus is an optimal transmitting and receiving beam pair. m is a positive integer, and a value of m is usually preconfigured. The first communication apparatus may determine K candidate beam pairs in one future time window based on a prediction result for the future time window. K is a positive integer. A value of K in this embodiment of this application may be different from or certainly may be the same as a value of K in Embodiment 1. This is not limited in this embodiment of this application.

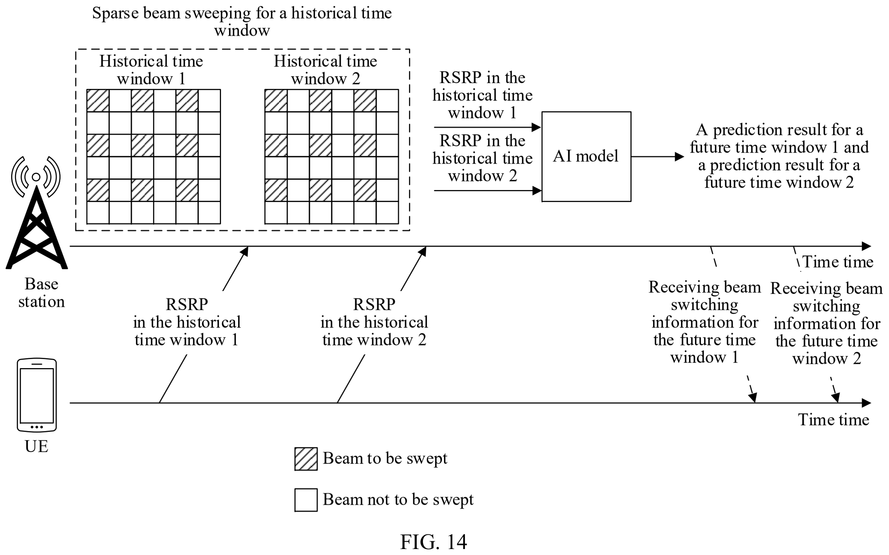

For example, FIG. 14 is a diagram of time domain beam management according to an embodiment of this application. Both n and m are equal to 2. It is assumed that every four time windows are a prediction procedure, where the first two time windows are used to collect historical information (for example, historical RSRP), and the last two time windows are used for prediction. As shown in FIG. 14, in each historical time window, a receiving beam of the UE is fixed as an optimal receiving beam, for example, an Rx beam 3. The base station may perform sparse beam sweeping based on a codebook. The base station sweeps only a transmitting beam that needs to be swept in the codebook, and does not sweep a transmitting beam that does not need to be swept. The codebook herein may be a row vector corresponding to the Rx beam 3 in the tx-rx bitmap, where an element "1" indicates that a corresponding transmitting beam needs to be swept, and an element "0" indicates that a corresponding transmitting beam does not need to be swept. The UE obtains measurement values (for example, RSRP) obtained by sparse beam sweeping in two historical time windows, and feeds back the measurement values to the base station, for example, RSRP in a historical time window 1 and RSRP in a historical time window 2. The base station inputs the RSRP in the two historical time windows into the second artificial intelligence model to perform a transmitting and receiving beam pair prediction, to obtain prediction results for future two time windows, for example, prediction results for a future time window 1 and a future time window 2. The prediction result for one future time window includes the probability that each transmitting and receiving beam pair between the first communication apparatus and the second communication apparatus is an optimal transmitting and receiving beam pair. The base station may select, from the prediction result for one future time window, top-K (top-K) beam pairs that are sorted in descending order of probabilities. Herein, the top-K beam pairs selected by the base station for a future time window are the K candidate beam pairs. That is, the K candidate beam pairs are the top-K (top-K) beam pairs that are sorted in descending order of probabilities in the prediction result for one future time window.

For ease of description, the following uses an example in which the first communication apparatus obtains K candidate beam pairs in one future time window for description.

S203: If at least one receiving beam in the K candidate beam pairs is different from the optimal receiving beam, the first communication apparatus (for example, the base station or a part of the base station) transmits beam switching information, where the beam switching information is used to prompt the second communication apparatus to switch a receiving beam in one future time window.

Correspondingly, the second communication apparatus (for example, the UE) receives the beam switching information.

In a possible implementation, if at least one receiving beam in K candidate beam pairs in one future time window is different from the optimal receiving beam (for example, the Rx beam 3), the first communication apparatus may transmit beam switching information. Correspondingly, the second communication apparatus receives the beam switching information. The beam switching information may be used to prompt the second communication apparatus to switch a receiving beam in the future time window. As shown in FIG. 14, if at least one receiving beam in K candidate beam pairs in the future time window 1 is different from the optimal receiving beam (for example, the Rx beam 3), the first communication apparatus prompts, by using the beam switching information, the second communication apparatus to switch a receiving beam in the future time window 1. If at least one receiving beam in K candidate beam pairs in the future time window 2 is different from the optimal receiving beam (for example, the Rx beam 3), the first communication apparatus still prompts, by using the beam switching information, the second communication apparatus to switch a receiving beam in the future time window 2.

It may be understood that a condition for triggering the first communication apparatus to transmit the beam switching information may include two cases. In one case, when one receiving beam in the K candidate beam pairs is different from the optimal receiving beam (for example, the Rx beam 3), the first communication apparatus is triggered to transmit the beam switching information. In the other case, when all receiving beams in the K candidate beam pairs are different from the optimal receiving beam (for example, the Rx beam 3), the first communication apparatus is triggered to transmit the beam switching information.

In a possible implementation, after the first communication apparatus transmits the beam switching information, the first communication apparatus and the second communication apparatus may re-search for an optimal transmitting and receiving beam pair. Herein, for a manner of searching for an optimal transmitting and receiving beam pair, refer to an existing beam training procedure, or refer to the procedure in Embodiment 1. Details are not described herein.

In another possible implementation, the beam switching information may include one or more receiving beams that are in the K candidate beam pairs and that are different from the optimal receiving beam (for example, the Rx beam 3). If the beam switching information includes a receiving beam (for example, an Rx beam 0), after receiving the beam switching information, the second communication apparatus switches a current receiving beam (namely the optimal receiving beam, for example, the Rx beam 3) of the second communication apparatus to the receiving beam (for example, the Rx beam 0) included in the beam switching information, to communicate with the first communication apparatus. If the beam switching information includes a plurality of receiving beams, the first communication apparatus and the second communication apparatus may perform top-K beam pair sweeping, to search for an optimal transmitting and receiving beam pair. For specific implementation of top-K beam pair sweeping, refer to the conventional technology. Details are not described herein.

It may be understood that an RRC connection has been established between the first communication apparatus and the second communication apparatus, and beam alignment with large overheads does not need to be performed. When the second communication apparatus is about to enter a blocked environment, an impending blockage cannot be well predicted by using only a measurement result of a current communication beam (namely a current optimal transmitting and receiving beam pair). Therefore, according to embodiments of this application, when only RSRP corresponding to a specific receiving beam is input, the first communication apparatus may perform a global beam pair prediction, and prompt, by using a prediction result of a receiving beam, the second communication apparatus whether to switch a receiving beam in a future time window. In this way, beam switching can be performed before a blockage occurs, thereby reducing a beam failure probability and a subsequent communication delay.

The foregoing content describes in detail the method provided in this application. To facilitate implementation of the foregoing solutions in embodiments of this application, embodiments of this application further provide a corresponding apparatus or device.

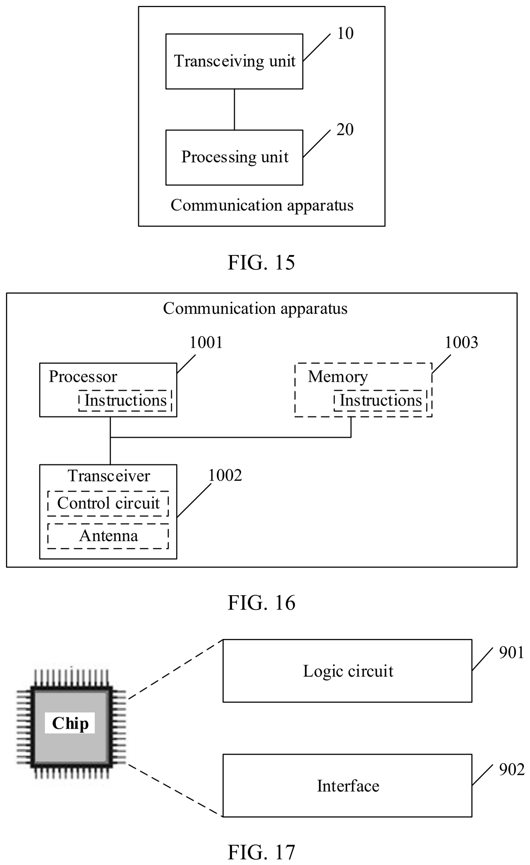

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logic function division. In actual implementation, another division manner may be used. The communication apparatus in embodiments of this application is described below in detail with reference to FIG. 15 to FIG. 17.

FIG. 15 is a diagram of a structure of a communication apparatus according to an embodiment of this application. As shown in FIG. 15, the communication apparatus may include a transceiving unit 10 and a processing unit 20.

In some embodiments of this application, the communication apparatus may be the first communication apparatus described above, or a chip or a circuit disposed in the first communication apparatus. In other words, the communication apparatus may be configured to perform the steps or functions performed by the first communication apparatus in the foregoing method embodiments.

In a design, the processing unit 20 is configured to control the transceiving unit 10 to transmit $T_1$ reference signals, where the $T_1$ reference signals correspond to $T_1$ transmitting beams of the first communication apparatus, one reference signal corresponds to one transmitting beam, the reference signal is used for beam measurement, the $T_1$ transmitting beams correspond to one or more first receiving beams of a second communication apparatus, and the one or more first receiving beams are a subset of receiving beams of the second communication apparatus. The transceiving unit 10 is further configured to receive a first CSI report, where the first CSI report includes $T_1$ beam measurement results, the $T_1$ beam measurement results correspond to the one or more first receiving beams, and the $T_1$ beam measurement results are determined based on the $T_1$ reference signals. The transceiving unit 10 is further configured to transmit first information, where the first information is used to determine a to-be-swept second receiving beam set, the second receiving beam set is a subset of the receiving beams of the second communication apparatus, the first information is determined based on a first prediction result, and the first prediction result is a processing result of inputting the $T_1$ beam measurement results into a first artificial intelligence model to perform a transmitting and receiving beam pair prediction.

The second communication apparatus has at least two receiving beams. The first communication apparatus has at least one transmitting beam.

For example, the receiving beams in the second receiving beam set correspond to $T_2$ transmitting beams. The transceiving unit 10 is further configured to: transmit $T_2$ reference signals, where the $T_2$ reference signals correspond to the $T_2$ transmitting beams; receive a second CSI report, where the second CSI report includes $T_2$ beam measurement results, the $T_2$ beam measurement results correspond to the receiving beams in the second receiving beam set, and the $T_2$ beam measurement results are determined based on the $T_2$ reference signals; and transmit second information, where the second information is used to determine a to-be-swept third receiving beam set, the third receiving beam set includes at least one receiving beam of the second communication apparatus, the second information is determined based on a second prediction result, and the second prediction result is a processing result of inputting the $T_2$ beam measurement results and the $T_1$ beam measurement results into the first artificial intelligence model to perform a transmitting and receiving beam pair prediction.

For example, the second receiving beam set includes at least one of the receiving beams of the second communication apparatus other than the one or more first receiving beams. That is, the second receiving beam set does not include any one of the first receiving beams.

For example, the transceiving unit 10 is further configured to receive third information, where the third information indicates that the second communication apparatus agrees to sweep the receiving beam in the second receiving beam set.

For example, the second prediction result includes a probability that each transmitting and receiving beam pair between the first communication apparatus and the second communication apparatus is an optimal transmitting and receiving beam pair. The third receiving beam set includes at least one receiving beam in a first transmitting and receiving beam pair set, where the first transmitting and receiving beam pair set includes transmitting and receiving beam pairs corresponding to top-K probabilities that are sorted in descending order of probabilities in the second prediction result, and K is a positive integer.

For example, the second information includes one or more of the following: the second prediction result or the third receiving beam set.

For example, the processing unit 20 is further configured to: determine one or more first receiving beams; and determine, based on a predefined correspondence between a transmitting beam and a receiving beam and the one or more first receiving beams, $T_1$ transmitting beams corresponding to the one or more first receiving beams.

For example, the first receiving beam is a $q^{th}$ receiving beam in a receiving beam sweeping sequence, where q is a positive integer, and q is a predefined value.

For example, the transceiving unit 10 is further configured to receive information a, where the information a is used to determine a quantity of receiving beams of the second communication apparatus.

For example, the transceiving unit 10 is further configured to transmit information c, where the information c indicates the one or more first receiving beams.

For example, the first prediction result includes a probability that each transmitting and receiving beam pair between the first communication apparatus and the second communication apparatus is an optimal transmitting and receiving beam pair. The second receiving beam set includes at least one receiving beam in a second transmitting and receiving beam pair set, where the second transmitting and receiving beam pair set includes transmitting and receiving beam pairs corresponding to top-K probabilities that are sorted in descending order of probabilities in the first prediction result.

For example, the first information includes one or more of the following: the first prediction result or the second receiving beam set. Alternatively, the first information indicates whether sweeping is recommended for each receiving beam of the second communication apparatus. In this case, the second receiving beam set includes a receiving beam for which sweeping is recommended and that is indicated by the first information.

For example, the first information further includes an identifier of the first CSI report.

For example, the first CSI report further includes information indicating the first receiving beam.

For example, the second CSI report further includes information indicating the receiving beam in the second receiving beam set.

For example, the transceiving unit 10 is further configured to receive $(n*T_j)$ beam measurement results in n historical time windows, where $T_j$ beam measurement results in one historical time window correspond to $T_j$ transmitting beams and an optimal receiving beam. The processing unit 20 is further configured to obtain K candidate beam pairs in one future time window, where the K candidate beam pairs are determined based on a processing result of inputting the $(n*T_j)$ beam measurement results in the n historical time windows into a second artificial intelligence model to perform a transmitting and receiving beam pair prediction. The transceiving unit 10 is further configured to transmit beam switching information when at least one receiving beam in the K candidate beam pairs is different from the optimal receiving beam. The beam switching information is used to prompt the second communication apparatus to switch a receiving beam in one future time window. Both n and $T_j$ are positive integers.

For example, the beam switching information further includes one or more receiving beams that are in the K candidate beam pairs and that are different from the optimal receiving beam.

In this embodiment of this application, for descriptions of the first information, the second information, the third information, the CSI report, the receiving beam set, the prediction result, and the like, refer to the descriptions in the foregoing method embodiments 1 and 2 (FIG. 9 and FIG. 13). Details are not described herein again.

It may be understood that specific descriptions of the transceiving unit and the processing unit described in this embodiment of this application are merely examples. For specific functions of or steps performed by the transceiving unit and the processing unit, refer to the foregoing method embodiments 1 and 2 (FIG. 9 and FIG. 13). Details are not described herein again.

In another design, the transceiving unit 10 is configured to receive $(n*T_j)$ beam measurement results in n historical time windows, where $T_j$ beam measurement results in one historical time window correspond to $T_j$ transmitting beams and an optimal receiving beam. The processing unit 20 is configured to obtain K candidate beam pairs in one future time window, where the K candidate beam pairs are determined based on a processing result of inputting the $(n*T_j)$ beam measurement results in the n historical time windows into a second artificial intelligence model to perform a transmitting and receiving beam pair prediction. The transceiving unit 10 is further configured to transmit beam switching information when at least one receiving beam in the K candidate beam pairs is different from the optimal receiving beam. The beam switching information is used to prompt the second communication apparatus to switch a receiving beam in one future time window. Both n and $T_j$ are positive integers.

For example, the beam switching information further includes one or more receiving beams that are in the K candidate beam pairs and that are different from the optimal receiving beam.

In this embodiment of this application, for descriptions of the beam measurement result, the beam switching information, the candidate beam pair, the optimal receiving beam, and the like, refer to the descriptions in the foregoing method embodiment 2 (FIG. 13). Details are not described herein again.

It may be understood that specific descriptions of the transceiving unit and the processing unit described in this embodiment of this application are merely examples. For specific functions of or steps performed by the transceiving unit and the processing unit, refer to the foregoing method embodiment 2. Details are not described herein again.

Still refer to FIG. 15. In some other embodiments of this application, the communication apparatus may be the second communication apparatus described above, or a chip or a circuit disposed in the second communication apparatus. In other words, the communication apparatus may be configured to perform the steps or functions performed by the second communication apparatus in the foregoing method embodiments.

In a design, the transceiving unit 10 is configured to receive $T_1$ reference signals, where the $T_1$ reference signals correspond to one or more first receiving beams, and the one or more first receiving beams are a subset of receiving beams of the second communication apparatus. The processing unit 20 is configured to separately perform beam measurement on the $T_1$ reference signals, to obtain $T_1$ beam measurement results. The transceiving unit 10 is further configured to transmit a first CSI report, where the first CSI report includes the $T_1$ beam measurement results, and the $T_1$ beam measurement results correspond to the one or more first receiving beams. The transceiving unit 10 is further configured to receive first information, where the first information is used to determine a to-be-swept second receiving beam set, and the second receiving beam set is a subset of the receiving beams of the second communication apparatus.

The second communication apparatus has at least two receiving beams.

For example, the transceiving unit 10 is further configured to receive $T_2$ reference signals, where the $T_2$ reference signals correspond to receiving beams in the second receiving beam set. The processing unit 20 is further configured to separately perform beam measurement on the $T_2$ reference signals, to obtain $T_2$ beam measurement results. The transceiving unit 10 is further configured to transmit a second CSI report, where the second CSI report includes $T_2$ beam measurement results, and the $T_2$ beam measurement results correspond to the receiving beams in the second receiving beam set. The transceiving unit 10 is further configured to receive second information, where the second information is used to determine a to-be-swept third receiving beam set, and the third receiving beam set includes at least one receiving beam of the second communication apparatus.

For example, the second receiving beam set includes at least one of the receiving beams of the second communication apparatus other than the one or more first receiving beams. That is, the second receiving beam set does not include any one of the first receiving beams.

For example, the transceiving unit 10 is further configured to transmit third information, where the third information indicates that the second communication apparatus agrees to sweep the receiving beam in the second receiving beam set.

For example, the second information includes one or more of the following: the second prediction result or the third receiving beam set. The second prediction result includes a probability that each transmitting and receiving beam pair between the first communication apparatus and the second communication apparatus is an optimal transmitting and receiving beam pair. The third receiving beam set includes at least one receiving beam in a first transmitting and receiving beam pair set, where the first transmitting and receiving beam pair set includes transmitting and receiving beam pairs corresponding to top-K probabilities that are sorted in descending order of probabilities in the second prediction result, and K is a positive integer.

For example, the first receiving beam is a $q^{th}$ receiving beam in a receiving beam sweeping sequence, where q is a positive integer, and q is a predefined value.

For example, the transceiving unit 10 is further configured to transmit information a, where the information a is used to determine a quantity of receiving beams of the second communication apparatus.

For example, the processing unit 20 is specifically configured to control the transceiving unit 10 to receive information c, where the information c indicates the one or more first receiving beams.

For example, the first information includes one or more of the following: the first prediction result or the second receiving beam set. The first prediction result includes a probability that each transmitting and receiving beam pair between the first communication apparatus and the second communication apparatus is an optimal transmitting and receiving beam pair. The second receiving beam set includes at least one receiving beam in a second transmitting and receiving beam pair set, where the second transmitting and receiving beam pair set includes transmitting and receiving beam pairs corresponding to top-K probabilities that are sorted in descending order of probabilities in the first prediction result.

For example, the first information indicates whether sweeping is recommended for each receiving beam of the second communication apparatus. In this case, the second receiving beam set includes a receiving beam for which sweeping is recommended and that is indicated by the first information.

For example, the first information further includes an identifier of the first CSI report.

For example, the first CSI report further includes information indicating the first receiving beam.

For example, the second CSI report further includes information indicating the receiving beam in the second receiving beam set.

For example, the transceiving unit 10 is further configured to transmit $(n*T_j)$ beam measurement results in n historical time windows, where $T_j$ beam measurement results in one historical time window correspond to $T_j$ transmitting beams and an optimal receiving beam of the second communication apparatus. The transceiving unit 10 is further configured to receive beam switching information. The beam switching information is used to prompt the second communication apparatus to switch a receiving beam in one future time window. Both n and $T_j$ are positive integers.

For example, the beam switching information further includes one or more receiving beams that are in the K candidate beam pairs and that are different from the optimal receiving beam.

In this embodiment of this application, for descriptions of the first information, the second information, the third information, the CSI report, the receiving beam set, the prediction result, and the like, refer to the descriptions in the foregoing method embodiments 1 and 2 (FIG. 9 and FIG. 13). Details are not described herein again.

It may be understood that specific descriptions of the transceiving unit and the processing unit described in this embodiment of this application are merely examples. For specific functions of or steps performed by the transceiving unit and the processing unit, refer to the foregoing method embodiments 1 and 2 (FIG. 9 and FIG. 13). Details are not described herein again.

In another design, the transceiving unit 10 is configured to transmit $(n*T_j)$ beam measurement results in n historical time windows, where $T_j$ beam measurement results in one historical time window correspond to $T_j$ transmitting beams and an optimal receiving beam. The transceiving unit 10 is further configured to receive beam switching information, where the beam switching information is used to prompt the second communication apparatus to switch a receiving beam in one future time window.

For example, the beam switching information further includes one or more receiving beams that are in the K candidate beam pairs and that are different from the optimal receiving beam.

In this embodiment of this application, for descriptions of the beam measurement result, the beam switching information, the candidate beam pair, the optimal receiving beam, and the like, refer to the descriptions in the foregoing method embodiment 2 (FIG. 13). Details are not described herein again.

It may be understood that specific descriptions of the transceiving unit and the processing unit described in this embodiment of this application are merely examples. For specific functions of or steps performed by the transceiving unit and the processing unit, refer to the foregoing method embodiment 2. Details are not described herein again.

The foregoing describes the communication apparatus in embodiments of this application. The following describes a possible product form of the communication apparatus. It should be understood that a product in any form having the function of the communication apparatus shown in FIG. 15 falls within the protection scope of embodiments of this application. It should be further understood that the following description is merely an example, and does not limit a product form of the communication apparatus in embodiments of this application.

In a possible implementation, in the communication apparatus shown in FIG. 15, the processing unit 20 may be one or more processors, the transceiving unit 10 may be a transceiver, or the transceiving unit 10 may be a transmitting unit and a receiving unit, the transmitting unit may be a transmitter, the receiving unit may be a receiver, and the transmitting unit and the receiving unit are integrated into one device, for example, a transceiver. In this embodiment of this application, the processor and the transceiver may be coupled, or the like. A manner of connecting the processor and the transceiver is not limited in this embodiment of this application. In a process of performing the foregoing method, a process of transmitting information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information before the information is input into the processor.

FIG. 16 is a diagram of another structure of a communication apparatus according to an embodiment of this application. The communication apparatus may be a first communication apparatus, a second communication apparatus, or a chip in the first communication apparatus or the second communication apparatus. FIG. 16 shows only main components of the communication apparatus. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal and process the radio frequency signal. The antenna is mainly configured to transmit and receive a radio frequency signal in a form of an electromagnetic wave. The input/output apparatus, such as a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be transmitted in a wireless manner, the processor 1001 performs baseband processing on to-be-transmitted data, and then outputs a baseband signal to a radio frequency circuit. The radio frequency circuit performs radio frequency processing on the baseband signal, and then transmits a radio frequency signal in an electromagnetic wave form through the antenna. When data is transmitted to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus is configured to perform the step, method, or function performed by the first communication apparatus in Embodiment 1, the processor 1001 is configured to determine one or more first receiving beams, where the one or more first receiving beams belong to the second communication apparatus, and the one or more first receiving beams correspond to $T_1$ transmitting beams. The transceiver 1002 is configured to transmit $T_1$ reference signals by using the $T_1$ transmitting beams, where one reference signal corresponds to one transmitting beam, and the reference signal is used for beam measurement. The transceiver 1002 is further configured to receive a first CSI report, where the first CSI report includes $T_1$ beam measurement results, the $T_1$ beam measurement results correspond to the one or more first receiving beams, and the $T_1$ beam measurement results are determined based on the $T_1$ reference signals. The transceiver 1002 is further configured to transmit first information, where the first information is used to determine a to-be-swept second receiving beam set, the second receiving beam set is a subset of receiving beams of the second communication apparatus, the first information is determined based on a first prediction result, and the first prediction result is a processing result of inputting the $T_1$ beam measurement results into a first artificial intelligence model to perform a transmitting and receiving beam pair prediction. The second communication apparatus has at least two receiving beams. The first communication apparatus has at least one transmitting beam.

For example, when the communication apparatus is configured to perform the step, method, or function performed by the second communication apparatus in Embodiment 1, the processor 1001 is configured to determine one or more first receiving beams, where the one or more first receiving beams belong to the second communication apparatus. The transceiver 1002 is configured to receive $T_1$ reference signals by using the one or more first receiving beams. The processor 1001 is further configured to separately perform beam measurement on the $T_1$ reference signals, to obtain $T_1$ beam measurement results. The transceiver 1002 is further configured to transmit a first CSI report, where the first CSI report includes the $T_1$ beam measurement results, and the $T_1$ beam measurement results correspond to the one or more first receiving beams. The transceiver 1002 is further configured to receive first information, where the first information is used to determine a to-be-swept second receiving beam set, and the second receiving beam set is a subset of the receiving beams of the second communication apparatus. The second communication apparatus has at least two receiving beams.

In this embodiment of this application, for descriptions of the first information, the second information, the third information, the CSI report, the receiving beam set, the prediction result, and the like, refer to the descriptions in the foregoing method embodiment 1 (FIG. 9). Details are not described herein again. It may be understood that, for specific descriptions of the processor and the transceiver, refer to the descriptions of the processing unit and the transceiving unit shown in FIG. 15. Details are not described herein again.

For example, when the communication apparatus is configured to perform the step, method, or function performed by the first communication apparatus in Embodiment 2, the transceiver 1002 is configured to receive $(n*T_j)$ beam measurement results in n historical time windows, where $T_j$ beam measurement results in one historical time window correspond to $T_j$ transmitting beams and an optimal receiving beam. The processor 1001 is configured to obtain K candidate beam pairs in one future time window, where the K candidate beam pairs are determined based on a processing result of inputting the $(n*T_j)$ beam measurement results in the n historical time windows into a second artificial intelligence model to perform a transmitting and receiving beam pair prediction. The transceiver 1002 is further configured to transmit beam switching information when at least one receiving beam in the K candidate beam pairs is different from the optimal receiving beam. The beam switching information is used to prompt the second communication apparatus to switch a receiving beam in one future time window. Both n and $T_j$ are positive integers.

For example, when the communication apparatus is configured to perform the step, method, or function performed by the second communication apparatus in Embodiment 2, the transceiver 1002 is configured to transmit $(n*T_j)$ beam measurement results in n historical time windows, where $T_j$ beam measurement results in one historical time window correspond to $T_j$ transmitting beams and an optimal receiving beam. The transceiver 1002 is further configured to receive beam switching information, where the beam switching information is used to prompt the second communication apparatus to switch a receiving beam in one future time window.

In this embodiment of this application, for descriptions of the beam measurement result, the beam switching information, the candidate beam pair, the optimal receiving beam, and the like, refer to the descriptions in the foregoing method embodiment 2 (FIG. 13). Details are not described herein again. It may be understood that, for specific descriptions of the processor and the transceiver, refer to the descriptions of the processing unit and the transceiving unit shown in FIG. 15. Details are not described herein again.

Optionally, the processor 1001 may include a transceiver configured to implement receiving and transmitting functions. For example, the transceiver may be a transceiver circuit, an interface, or an interface circuit. The transceiver circuit, the interface, or the interface circuit configured to implement the receiving and transmitting functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to enable the communication apparatus to perform the method described in the foregoing method embodiments. The computer program may be stored as firmware in the processor 1001. In this case, the processor 1001 may be implemented by hardware.

In an implementation, the communication apparatus may include a circuit. The circuit may implement a transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (N-channel Metal-oxide-semiconductor, NMOS), a positive-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may alternatively include more components than those shown in FIG. 16, or the like. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 15, the processing unit 20 may be one or more logic circuits, and the transceiving unit 10 may be an input/output interface, a communication interface, an interface circuit, an interface, or the like. Alternatively, the transceiving unit 10 may be a transmitting unit and a receiving unit. The transmitting unit may be an output interface, and the receiving unit may be an input interface. The transmitting unit and the receiving unit are integrated into one unit, for example, an input/output interface. FIG. 17 is a diagram of still another structure of a communication apparatus according to an embodiment of this application. As shown in FIG. 17, the communication apparatus shown in FIG. 17 includes a logic circuit 901 and an interface 902. That is, the processing unit 20 may be implemented by using the logic circuit 901, and the transceiving unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 17 shows an example in which the communication apparatus is a chip. The chip includes the logic circuit 901 and the interface 902.

In this embodiment of this application, the logic circuit and the interface may be further coupled to each other. A specific manner of connection between the logic circuit and the interface is not limited in this embodiment of this application.

For example, when the communication apparatus is configured to perform the step, method, or function performed by the first communication apparatus in Embodiment 1, the logic circuit 901 is configured to determine one or more first receiving beams, where the one or more first receiving beams belong to a second communication apparatus, and the one or more first receiving beams correspond to $T_1$ transmitting beams. The interface 902 is configured to transmit or output $T_1$ reference signals, where the $T_1$ reference signals correspond to $T_1$ transmitting beams, one reference signal corresponds to one transmitting beam, the reference signal is used for beam measurement, the $T_1$ transmitting beams correspond to one or more first receiving beams of the second communication apparatus, and the one or more first receiving beams are a subset of receiving beams of the second communication apparatus. The interface 902 is further configured to receive or input a first CSI report, where the first CSI report includes $T_1$ beam measurement results, the $T_1$ beam measurement results correspond to the one or more first receiving beams, and the $T_1$ beam measurement results are determined based on the $T_1$ reference signals. The interface 902 is further configured to transmit or output first information, where the first information is used to determine a to-be-swept second receiving beam set, the second receiving beam set is a subset of the receiving beams of the second communication apparatus, the first information is determined based on a first prediction result, and the first prediction result is a processing result of inputting the $T_1$ beam measurement results into a first artificial intelligence model to perform a transmitting and receiving beam pair prediction. The second communication apparatus has at least two receiving beams. The first communication apparatus has at least one transmitting beam.

For example, when the communication apparatus is configured to perform the step, method, or function performed by the second communication apparatus in Embodiment 1, the logic circuit 901 is configured to determine one or more first receiving beams, where the one or more first receiving beams are a subset of receiving beams of the second communication apparatus. The interface 902 is configured to receive or input $T_1$ reference signals, where the $T_1$

reference signals correspond to the one or more first receiving beams. The logic circuit 901 is further configured to separately perform beam measurement on the $T_1$ reference signals, to obtain $T_1$ beam measurement results. The interface 902 is further configured to transmit or output a first CSI report, where the first CSI report includes the $T_1$ beam measurement results, and the $T_1$ beam measurement results correspond to the one or more first receiving beams. The interface 902 is further configured to receive or input first information, where the first information is used to determine a to-be-swept second receiving beam set, and the second receiving beam set is a subset of the receiving beams of the second communication apparatus. The second communication apparatus has at least two receiving beams.

In this embodiment of this application, for descriptions of the first information, the second information, the third information, the CSI report, the receiving beam set, the prediction result, and the like, refer to the descriptions in the foregoing method embodiment 1 (FIG. 9). Details are not described herein again. It may be understood that, for specific descriptions of the logic circuit 901 and the interface 902, refer to the descriptions of the processing unit and the transceiving unit shown in FIG. 15. Details are not described herein again.

For example, when the communication apparatus is configured to perform the step, method, or function performed by the first communication apparatus in Embodiment 2, the interface 902 is configured to obtain/receive $(n*T_j)$ beam measurement results in n historical time windows, where $T_j$ beam measurement results in one historical time window correspond to $T_j$ transmitting beams and an optimal receiving beam. The logic circuit 901 is configured to obtain K candidate beam pairs in one future time window, where the K candidate beam pairs are determined based on a processing result of inputting the $(n*T_j)$ beam measurement results in the n historical time windows into a second artificial intelligence model to perform a transmitting and receiving beam pair prediction. The interface 902 is further configured to transmit beam switching information when at least one receiving beam in the K candidate beam pairs is different from the optimal receiving beam. The beam switching information is used to prompt the second communication apparatus to switch a receiving beam in one future time window. Both n and $T_j$ are positive integers.

For example, when the communication apparatus is configured to perform the step, method, or function performed by the second communication apparatus in Embodiment 2, the interface 902 is configured to transmit $(n*T_j)$ beam measurement results in n historical time windows, where $T_j$ beam measurement results in one historical time window correspond to $T_j$ transmitting beams and an optimal receiving beam. The interface 902 is further configured to receive beam switching information, where the beam switching information is used to prompt the second communication apparatus to switch a receiving beam in one future time window.

In this embodiment of this application, for descriptions of the beam measurement result, the beam switching information, the candidate beam pair, the optimal receiving beam, and the like, refer to the descriptions in the foregoing method embodiment 2 (FIG. 13). Details are not described herein again. It may be understood that, for specific descriptions of the logic circuit 901 and the interface 902, refer to the descriptions of the processing unit and the transceiving unit shown in FIG. 15. Details are not described herein again.

It may be understood that the communication apparatus described in this embodiment of this application may implement the method provided in embodiments of this application in a form of hardware, or may implement the method provided in embodiments of this application in a form of software. This is not limited in this embodiment of this application.

For specific implementations of embodiments shown in FIG. 17, further refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments (FIG. 9 or FIG. 13).

In addition, this application further provides a computer program. The computer program is used to implement the operation and/or processing performed by the first communication apparatus in the method provided in this application.

This application further provides a computer program. The computer program is used to implement the operation and/or processing performed by the second communication apparatus in the method provided in this application.

This application further provides a computer-readable storage medium. The computer-readable storage medium stores computer code. When the computer code is run on a computer, the computer is enabled to perform the operation and/or processing performed by the first communication apparatus in the method provided in this application.

This application further provides a computer-readable storage medium. The computer-readable storage medium stores computer code. When the computer code is run on a computer, the computer is enabled to perform the operation and/or processing performed by the second communication apparatus in the method provided in this application.

This application further provides a computer program product. The computer program product includes computer code or a computer program. When the computer code or the computer program is run on a computer, the operation and/or processing performed by the first communication apparatus in the method provided in this application is performed.

This application further provides a computer program product. The computer program product includes computer code or a computer program. When the computer code or the computer program is run on a computer, the operation and/or processing performed by the second communication apparatus in the method provided in this application is performed.

In several embodiments provided in this application, it should be understood that the disclosed system, apparatus, and method may be implemented in other manners. For example, the described apparatus embodiment is merely an example. For example, the unit division is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.  An information exchange method, comprising:

    transmitting, by a first communication apparatus, $T_1$ reference signals, wherein the $T_1$ reference signals correspond to $T_1$ transmitting beams of the first communication apparatus, one reference signal corresponds to one transmitting beam, the reference signal is used for beam measurement, the $T_1$ transmitting beams correspond to one or more first receiving beams of a second communication apparatus, and the one or more first receiving beams are a subset of receiving beams of the second communication apparatus;
    receiving, by the first communication apparatus, a first channel state information CSI report, wherein the first CSI report comprises $T_1$ beam measurement results, the $T_1$ beam measurement results correspond to the one or more first receiving beams, and the $T_1$ beam measurement results are determined based on the $T_1$ reference signals; and
    transmitting, by the first communication apparatus, first information, wherein the first information is used to determine a to-be-swept second receiving beam set, the second receiving beam set is a subset of the receiving beams of the second communication apparatus, the first information is determined based on a first prediction result, and the first prediction result is a processing result of inputting the $T_1$ beam measurement results into a first artificial intelligence model to perform a transmitting and receiving beam pair prediction.

2.  The method according to claim 1, wherein receiving beams in the second receiving beam set correspond to $T_2$ transmitting beams; and
    after transmitting, by the first communication apparatus, the first information, the method further comprises:

    transmitting, by the first communication apparatus, $T_2$ reference signals, wherein the $T_2$ reference signals

correspond to the $T_2$ transmitting beams;

receiving, by the first communication apparatus, a second CSI report, wherein the second CSI report comprises $T_2$ beam measurement results, the $T_2$ beam measurement results correspond to the receiving beams in the second receiving beam set, and the $T_2$ beam measurement results are determined based on the $T_2$ reference signals; and

transmitting, by the first communication apparatus, second information, wherein the second information is used to determine a to-be-swept third receiving beam set, the third receiving beam set comprises at least one receiving beam of the second communication apparatus, the second information is determined based on a second prediction result, and the second prediction result is a processing result of inputting the $T_2$ beam measurement results and the $T_1$ beam measurement results into the first artificial intelligence model to perform a transmitting and receiving beam pair prediction.

3. The method according to claim 2, wherein before transmitting, by the first communication apparatus, the $T_2$ reference signals, the method further comprises:

receiving, by the first communication apparatus, third information, wherein the third information indicates that the second communication apparatus agrees to sweep the receiving beam in the second receiving beam set.

4. The method according to claim 2 or 3, wherein the second prediction result comprises a probability that each transmitting and receiving beam pair between the first communication apparatus and the second communication apparatus is an optimal transmitting and receiving beam pair.

5. The method according to any one of claims 2 to 4, wherein the third receiving beam set comprises at least one receiving beam in a first transmitting and receiving beam pair set, the first transmitting and receiving beam pair set comprises transmitting and receiving beam pairs corresponding to top-K probabilities that are sorted in descending order of probabilities in the second prediction result, and K is a positive integer.

6. The method according to any one of claims 2 to 5, wherein the second information comprises one or more of the following: the second prediction result, or the third receiving beam set.

7. The method according to any one of claims 1 to 6, wherein before transmitting, by the first communication apparatus, the $T_1$ reference signals, the method further comprises:

determining, by the first communication apparatus, one or more first receiving beams; and

determining, by the first communication apparatus based on a predefined correspondence between a transmitting beam and a receiving beam and the one or more first receiving beams, $T_1$ transmitting beams corresponding to the one or more first receiving beams.

8. The method according to claim 7, wherein before determining, by the first communication apparatus, the one or more first receiving beams, the method further comprises:

receiving, by the first communication apparatus, information a, wherein the information a is used to determine a quantity of receiving beams of the second communication apparatus.

9. The method according to claim 7 or 8, wherein after determining, by the first communication apparatus, the one or more first receiving beams, the method further comprises:

transmitting, by the first communication apparatus, information c, wherein the information c indicates the one or more first receiving beams.

10. The method according to any one of claims 1 to 9, wherein the first receiving beam is a $q^{th}$ receiving beam in a receiving beam sweeping sequence, q is a positive integer, and q is a predefined value.

11. The method according to any one of claims 1 to 10, wherein the first information comprises one or more of the following: information indicating whether sweeping is recommended for each receiving beam of the second communication apparatus, the second receiving beam set, the first prediction result, or an identifier of the first CSI report.

12. The method according to any one of claims 1 to 11, wherein the first CSI report further comprises information indicating the first receiving beam.

13. The method according to claim 2, wherein after transmitting, by the first communication apparatus, the second information, the method further comprises:

receiving, by the first communication apparatus, $(n*T_j)$ beam measurement results in n historical time windows, wherein $T_j$ beam measurement results in one historical time window correspond to $T_j$ transmitting beams of the first communication apparatus and an optimal receiving beam of the second communication apparatus, and both n and $T_j$ are positive integers;

obtaining, by the first communication apparatus, K candidate beam pairs in one future time window, wherein the K candidate beam pairs are determined based on a processing result of inputting the $(n*T_j)$ beam measurement results in the n historical time windows into a second artificial intelligence model to perform a transmitting and receiving beam pair prediction; and

transmitting, by the first communication apparatus, beam switching information if at least one receiving beam in the K candidate beam pairs is different from the optimal receiving beam, wherein the beam switching information is used to prompt the second communication apparatus to switch a receiving beam in one future time window, and/or notify the second communication apparatus of a candidate receiving beam set for switching, and the candidate receiving beam set comprises one or more receiving beams that are in the K candidate beam pairs and that are different from the optimal receiving beam.

14. The method according to any one of claims 1 to 13, wherein the second receiving beam set comprises at least one of the receiving beams of the second communication apparatus other than the one or more first receiving beams.

15. The method according to any one of claims 1 to 14, wherein the first prediction result comprises a probability that each transmitting and receiving beam pair between the first communication apparatus and the second communication apparatus is an optimal transmitting and receiving beam pair.

16. The method according to any one of claims 1 to 15, wherein the second receiving beam set comprises at least one receiving beam in a second transmitting and receiving beam pair set, and the second transmitting and receiving beam pair set comprises transmitting and receiving beam pairs corresponding to top-K probabilities that are sorted in descending order of probabilities in the first prediction result.

17. An information exchange method, comprising:

receiving, by a second communication apparatus, $T_1$ reference signals, and separately performing beam measurement on the $T_1$ reference signals, to obtain $T_1$ beam measurement results, wherein the $T_1$ reference signals correspond to one or more first receiving beams, and the one or more first receiving beams are a subset of receiving beams of the second communication apparatus;

transmitting, by the second communication apparatus, a first channel state information CSI report, wherein the first CSI report comprises $T_1$ beam measurement results, and the $T_1$ beam measurement results correspond to the one or more first receiving beams; and

receiving, by the second communication apparatus, first information, wherein the first information is used to determine a to-be-swept second receiving beam set, and the second receiving beam set is a subset of the receiving beams of the second communication apparatus.

18. The method according to claim 17, wherein after receiving, by the second communication apparatus, the first information, the method further comprises:

receiving, by the second communication apparatus, $T_2$ reference signals, and separately performing beam measurement on the $T_2$ reference signals, to obtain $T_2$ beam measurement results, wherein the $T_2$ reference signals correspond to receiving beams in the second receiving beam set;

transmitting, by the second communication apparatus, a second CSI report, wherein the second CSI report comprises the $T_2$ beam measurement results, and the $T_2$ beam measurement results correspond to receiving beams in the second receiving beam set; and

receiving, by the second communication apparatus, second information, wherein the second information is used to determine a to-be-swept third receiving beam set, and the third receiving beam set comprises at least one receiving beam of the second communication apparatus.

19. The method according to claim 18, wherein before receiving, by the second communication apparatus, the $T_2$ reference signals, the method further comprises:

transmitting, by the second communication apparatus, third information, wherein the third information indicates that the second communication apparatus agrees to sweep the receiving beam in the second receiving beam set.

20. The method according to claim 18 or 19, wherein before receiving, by the second communication apparatus, the $T_2$ reference signals, the method further comprises:

transmitting, by the second communication apparatus, information a, wherein the information a is used to determine a quantity of receiving beams of the second communication apparatus.

21. The method according to any one of claims 18 to 20, wherein the $T_1$ reference signals is received by the second communication apparatus, and the method further comprises:

receiving, by the second communication apparatus, information c, wherein the information c indicates the one or more first receiving beams.

22. The method according to any one of claims 18 to 21, wherein the second information comprises one or more of the following: a second prediction result or the third receiving beam set;

the second prediction result comprises a probability that each transmitting and receiving beam pair between a first communication apparatus and the second communication apparatus is an optimal transmitting and receiving beam pair; and
the third receiving beam set comprises at least one receiving beam in a first transmitting and receiving beam pair set, the first transmitting and receiving beam pair set comprises transmitting and receiving beam pairs corresponding to top-K probabilities that are sorted in descending order of probabilities in the second prediction result, and K is a positive integer.

23. The method according to any one of claims 17 to 22, wherein the first receiving beam is a $q^{th}$ receiving beam in a receiving beam sweeping sequence, q is a positive integer, and q is a predefined value.

24. The method according to any one of claims 17 to 23, wherein the first information comprises one or more of the following: information indicating whether sweeping is recommended for each receiving beam of the second communication apparatus, the second receiving beam set, a first prediction result, or an identifier of the first CSI report; and
the first prediction result comprises a probability that each transmitting and receiving beam pair between the first communication apparatus and the second communication apparatus is an optimal transmitting and receiving beam pair.

25. The method according to any one of claims 17 to 24, wherein the first CSI report further comprises information indicating the first receiving beam.

26. The method according to claim 18, wherein after receiving, by the second communication apparatus, the second information, the method further comprises:

transmitting, by the second communication apparatus, $(n*T_j)$ beam measurement results in n historical time windows, wherein $T_j$ beam measurement results in one historical time window correspond to $T_j$ transmitting beams of the first communication apparatus and an optimal receiving beam of the second communication apparatus, and both n and $T_j$ are positive integers; and
receiving, by the second communication apparatus, beam switching information, wherein the beam switching information is used to prompt the second communication apparatus to switch a receiving beam in one future time window and/or notify the second communication apparatus of a candidate receiving beam set for switching, and the candidate receiving beam set comprises one or more receiving beams that are in the K candidate beam pairs and that are different from the optimal receiving beam.

27. The method according to any one of claims 17 to 26, wherein the second receiving beam set comprises at least one of the receiving beams of the second communication apparatus other than the one or more first receiving beams.

28. An information exchange method, comprising:

receiving, by a first communication apparatus, $(n*T_j)$ beam measurement results in n historical time windows, wherein $T_j$ beam measurement results in one historical time window correspond to $T_j$ transmitting beams of the first communication apparatus and an optimal receiving beam of a second communication apparatus, and both n and $T_j$ are positive integers;

obtaining, by the first communication apparatus, K candidate beam pairs in one future time window, wherein the K candidate beam pairs are determined based on a processing result of inputting the $(n*T_j)$ beam measurement results in the n historical time windows into an AI model to perform a transmitting and receiving beam pair prediction, and K is a positive integer; and

transmitting, by the first communication apparatus, beam switching information if at least one receiving beam in the K candidate beam pairs is different from the optimal receiving beam, wherein the beam switching information is used to prompt the second communication apparatus to switch a receiving beam in one future time window.

29. An information exchange method, comprising:

transmitting, by a second communication apparatus, $(n*T_j)$ beam measurement results in n historical time windows, wherein $T_j$ beam measurement results in one historical time window correspond to $T_j$ transmitting beams of a first communication apparatus and an optimal receiving beam of the second communication apparatus, and both n and $T_j$ are positive integers; and

receiving, by the second communication apparatus, beam switching information, wherein the beam switching information is used to prompt the second communication apparatus to switch a receiving beam in one future time window.

30. The method according to claim 28 or 29, wherein the beam switching information further comprises a candidate receiving beam set for switching, and the candidate receiving beam set comprises one or more receiving beams that are in the K candidate beam pairs and that are different from the optimal receiving beam.

31. A communication apparatus, comprising a module or a unit configured to perform the method according to any one of claims 1 to 30.

32. A communication apparatus, comprising:

one or more processors, wherein the one or more processors are coupled to one or more memories; and

the one or more memories are configured to store a computer program, and the one or more processors are configured to execute the computer program stored in the one or more memories, to enable the communication apparatus to perform the method according to any one of claims 1 to 30.

33. A readable storage medium, configured to store a program, wherein the program is executed by one or more processors, to enable an apparatus comprising the one or more processors to perform the method according to any one of claims 1 to 30.

34. A program product comprising program instructions, wherein when the program product runs, the method according to any one of claims 1 to 30 is performed.

35. A communication system, comprising: a first communication apparatus configured to perform the method according to any one of claims 1 to 16, and a second communication apparatus configured to perform the method according to any one of claims 17 to 27; or

the communication system comprises a first communication apparatus configured to perform the method according to claim 28 or 30, and a second communication apparatus configured to perform the method according to claim 29 or 30.

FIG. 1a

FIG. 1b

FIG. 2

FIG. 3

$$y=f(\sum_{i=0}^{m} w_i x_i + b)$$

FIG. 4

FIG. 5

SSB beam sweeping: SSB beam sweeping Msg 1 to Msg 4: message 1 to message 4
RX-QCL: receive quasi co-location CSI-RS beam sweeping: CSI-RS beam sweeping
Beam failure recovery request: beam failure recovery request
Beam failure recovery response: beam failure recovery response
CRI: CSI-RS resource indicator RSRP: reference signal received power
PUSCH: physical uplink shared channel PUCCH: physical uplink control channel

EP 4 716 275 A1

FIG. 6

Sparse beam sweeping

Horizontal direction

Vertical direction

Codebook

Beam to be swept

Beam not to be swept

Prediction

AI beam prediction model

Measurement values of swept beams

Indexes of top-K transmitting beams

Top-K beam sweeping

Horizontal direction

Vertical direction

Codebook

Beam to be swept

Beam not to be swept

Determine an optimal transmitting beam

Horizontal direction

Vertical direction

Codebook

Optimal transmitting beam

FIG. 7

Transmitting beam
Tx = 64

$$\begin{bmatrix} 1 & 0 & 1 & \dots & 1 & 0 \\ 0 & 1 & 0 & \dots & 0 & 1 \\ 1 & 0 & 1 & \dots & 1 & 0 \\ 0 & 1 & 0 & \dots & 0 & 1 \end{bmatrix}$$

Receiving beam
Rx = 4

FIG. 8

```
┌─────────────────────┐                          ┌─────────────────────┐
│ First communication │                          │ Second communication│
│      apparatus      │                          │      apparatus      │
└─────────────────────┘                          └─────────────────────┘
```

┌──────────────────────────────┐          ┌──────────────────────────────┐
│ S101: Determine one or more  │          │ S102: Determine one or more  │
│     first receiving beams    │          │     first receiving beams    │
└──────────────────────────────┘          └──────────────────────────────┘

S103: Transmit $T_1$ reference signals by using $T_1$ transmitting beams corresponding to the one or more first receiving beams, where one reference signal corresponds to one transmitting beam ⟶

┌──────────────────────────────────┐
│ S104: Separately perform beam    │
│ measurement on the received $T_1$│
│ reference signals, to obtain $T_1$│
│   beam measurement results       │
└──────────────────────────────────┘

⟵ S105: Transmit a first CSI report, where the first CSI report includes the $T_1$ beam measurement results

S106: Transmit first information, where the first information is used to determine a to-be-swept second receiving beam set, the second receiving beam set is a subset of receiving beams of the second communication apparatus, the first information is determined based on a first prediction result, and the first prediction result is a processing result of inputting the $T_1$ beam measurement results into a first artificial intelligence model to perform a transmitting and receiving beam pair prediction ⟶

S107: Transmit $T_2$ reference signals by using $T_2$ transmitting beams corresponding to the receiving beams in the second receiving beam set ⟶

┌ ─ ─ ─ ─ ─ ─ ─ ─ ─ ─ ─ ─ ─ ─ ─ ─ ┐
│ S108: Separately perform beam   │
│ measurement on the received $T_2$│
│  reference signals, to obtain $T_2$│
│    beam measurement results     │
└ ─ ─ ─ ─ ─ ─ ─ ─ ─ ─ ─ ─ ─ ─ ─ ─ ┘

⟵ S109: Transmit a second CSI report, where the second CSI report includes the $T_2$ beam measurement results

S110: Transmit second information, where the second information is used to determine a to-be-swept third receiving beam set, the third receiving beam set includes at least one receiving beam of the second communication apparatus, the second information is determined based on a second prediction result, and the second prediction result is a processing result of inputting the $T_2$ beam measurement results and the $T_1$ beam measurement results into the first artificial intelligence model to perform a transmitting and receiving beam pair prediction ⟶

┌──────────────────────────────────────────────┐
│           Top-K beam pair sweeping           │
└──────────────────────────────────────────────┘

FIG. 9

Transmitting beam
Tx = 64

$$\begin{bmatrix} 1 & 1 & 0 & ... & 0 & 1 \\ 0 & 1 & 0 & ... & 0 & 1 \\ 1 & 0 & 1 & ... & 1 & 0 \\ 1 & 1 & 0 & ... & 1 & 0 \end{bmatrix}$$

Receiving beam
Rx = 4

FIG. 10

Accuracy
accuracy

When recommendation is
accepted:

| Top-1 accuracy: 0.62500 | Top-3 accuracy: 0.79100 | Top-5 accuracy: 0.85500 |

Accuracy loss 3%
Accuracy loss 3%

When recommendation is
rejected (full feedback):

| Top-1 accuracy: 0.65600 | Top-3 accuracy: 0.82200 | Top-5 accuracy: 0.89200 |

FIG. 11

Average swept beam pairs (over 1000 channels)
Average swept beam pairs (over 1000 channels)

Approximately 190 beams are swept when recommendation is accepted

PC

Expression:

t. sum(rx_beam_needed ==1)

Result:

result = {Tensor} tensor(2972)

256 beams are swept when recommendation is rejected (full feedback)

**FIG. 12**

| First communication apparatus | | Second communication apparatus |
|---|---|---|

S201: Transmit ($n*T_j$) beam measurement results in n historical time windows, where $T_j$ beam measurement results in one historical time window correspond to $T_j$ transmitting beams of the first communication apparatus and an optimal receiving beam of the second communication apparatus

S202: Obtain K candidate beam pairs in one future time window, where the K candidate beam pairs are determined based on a processing result of inputting the ($n*T_j$) beam measurement results in the n historical time windows into a second artificial intelligence model to perform a transmitting and receiving beam pair prediction

S203: If at least one receiving beam in the K candidate beam pairs is different from the optimal receiving beam, transmit beam switching information, where the beam switching information is used to prompt the second communication apparatus to switch a receiving beam in one future time window

**FIG. 13**

Sparse beam sweeping for a historical time window

Historical time window 1

Historical time window 2

RSRP in the historical time window 1

RSRP in the historical time window 2

AI model

A prediction result for a future time window 1 and a prediction result for a future time window 2

Base station

RSRP in the historical time window 1

RSRP in the historical time window 2

Time time

Receiving beam switching information for the future time window 1

Receiving beam switching information for the future time window 2

UE

Time time

Beam to be swept

Beam not to be swept

FIG. 14

FIG. 15

FIG. 16

FIG. 17

## INTERNATIONAL SEARCH REPORT

| | International application No. |
|---|---|
| | **PCT/CN2024/097473** |

### A. CLASSIFICATION OF SUBJECT MATTER

H04W16/18(2009.01)i

According to International Patent Classification (IPC) or to both national classification and IPC

### B. FIELDS SEARCHED

Minimum documentation searched (classification system followed by classification symbols)

IPC:H04W H04B

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 波束, 波束对, 预测, 人工智能, 神经网络, 机器学习, 训练, 发送波束, 发射波束, 接收波束, 稀疏, 扫描, 测量, 开销, beam, beam pair, predict, AI, artificial intelligence, ANN, neural network, ML, machine learning, training, Tx beam, Rx beam, sparse, scan, measure, consumption

### C. DOCUMENTS CONSIDERED TO BE RELEVANT

| Category* | Citation of document, with indication, where appropriate, of the relevant passages | Relevant to claim No. |
|---|---|---|
| X | WO 2022022327 A1 (SONY GROUP CORP. et al.) 03 February 2022 (2022-02-03) description, paragraphs 255-257 and 319-378 | 28-35 |
| X | US 2022190883 A1 (NOKIA TECHNOLOGIES OY) 16 June 2022 (2022-06-16) description, paragraphs 46-57 and 100-107 | 28-35 |
| A | HUAWEI et al. "Evaluation on AI/ML for Beam Management" *3GPP TSG-RAN WG1 Meeting #109-E, R1-2203142*, 29 April 2022 (2022-04-29), full text, section 3 | 1-35 |
| A | CN 115395995 A (BEIJING SAMSUNG TELECOM R&D CENTER et al.) 25 November 2022 (2022-11-25) entire document | 1-35 |
| A | CN 115398823 A (QUALCOMM INC.) 25 November 2022 (2022-11-25) entire document | 1-35 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 July 2024** | **14 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097473**

| Patent document cited in search report | | | Publication date (day/month/year) | Patent family member(s) | | | Publication date (day/month/year) |
|---|---|---|---|---|---|---|---|
| WO | 2022022327 | A1 | 03 February 2022 | US | 2023239020 | A1 | 27 July 2023 |
| | | | | CN | 114006640 | A | 01 February 2022 |
| US | 2022190883 | A1 | 16 June 2022 | WO | 2020214168 | A1 | 22 October 2020 |
| | | | | EP | 3956992 | A1 | 23 February 2022 |
| | | | | CN | 113994598 | A | 28 January 2022 |
| | | | | IN | 202117047502 | A | 11 February 2022 |
| CN | 115395995 | A | 25 November 2022 | US | 2022385342 | A1 | 01 December 2022 |
| | | | | WO | 2022250380 | A1 | 01 December 2022 |
| CN | 115398823 | A | 25 November 2022 | WO | 2021216977 | A1 | 28 October 2021 |
| | | | | US | 2021336683 | A1 | 28 October 2021 |
| | | | | US | 11677454 | B2 | 13 June 2023 |
| | | | | EP | 4140056 | A1 | 01 March 2023 |
| | | | | IN | 202227043820 | A | 07 October 2022 |

Form PCT/ISA/210 (patent family annex) (July 2022)

**EP 4 716 275 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310686958X